(19) Europäisches Patentamt / European Patent Office / Office européen des brevets

(11) **EP 3 457 696 B1**

(12) **EUROPEAN PATENT SPECIFICATION**

(45) Date of publication and mention
of the grant of the patent:
**04.03.2026 Bulletin 2026/10**

(21) Application number: **17795915.2**

(22) Date of filing: **19.04.2017**

(51) International Patent Classification (IPC):
*H04N 19/583* (2014.01)    *H04N 19/117* (2014.01)
*H04N 19/159* (2014.01)    *H04N 19/176* (2014.01)

(52) Cooperative Patent Classification (CPC):
**H04N 19/159; H04N 19/117; H04N 19/176;
H04N 19/583**

(86) International application number:
**PCT/JP2017/015784**

(87) International publication number:
**WO 2017/195554 (16.11.2017 Gazette 2017/46)**

(54) **PREDICTED IMAGE GENERATION DEVICE, VIDEO DECODING DEVICE AND VIDEO ENCODING DEVICE**

VORRICHTUNG ZUR PRÄDIKTIVEN BILDERZEUGUNG, VIDEODECODIERUNGSVORRICHTUNG UND VIDEOCODIERUNGSVORRICHTUNG

DISPOSITIF DE GÉNÉRATION D'IMAGE PRÉDITE, DISPOSITIF DE DÉCODAGE DE VIDÉO ET DISPOSITIF DE CODAGE DE VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2016 JP 2016097478**

(43) Date of publication of application:
**20.03.2019 Bulletin 2019/12**

(73) Proprietor: **Sharp Kabushiki Kaisha
Sakai-shi, Osaka 590-8522 (JP)**

(72) Inventor: **IKAI, Tomohiro
Sakai City, Osaka 590-8522 (JP)**

(74) Representative: **Müller Hoffmann & Partner
Patentanwälte mbB
St.-Martin-Straße 58
81541 München (DE)**

(56) References cited:
**WO-A1-2013/075011    WO-A1-2015/149699
JP-A- 2006 191 220    JP-A- 2012 070 277**

- **ZHENG X ET AL: "CE2: Summary report of core experiment on Motion Partitioning and OBMC", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/ JCTVC-SITE/,, no. JCTVC-G032, 21 November 2011 (2011-11-21), XP030110023**
- **GUO L ET AL: "CE2: Overlapped Block Motion Compensation", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/ AV-ARCH/JCTVC-SITE/,, no. JCTVC-G749, 9 November 2011 (2011-11-09), XP030110733**
- **C-C CHEN ET AL: "CE1: Report of DMVD-based Bi-prediction", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/ AV-ARCH/JCTVC-SITE/,, no. JCTVC-E154, 10 March 2011 (2011-03-10), XP030008660**

EP 3 457 696 B1

- **JIANLE CHEN ET AL.: "Algorithm Description of Joint Exploration Test Model 1", JOINT VIDEO EXPLORATION TEAM (JVET) OF ITU-T SG 16 WP 3 AND ISO/IEC JTC 1/SC 29/WG 11, JVET-A1001 , 1ND MEETING: GENEVA , CH, February 2016 (2016-02-01), pages i - ii, 1-25, XP030150000**

# EP 3 457 696 B1

**Description**

Technical Field

The present invention relates to a prediction image generation device, a video decoding device, and a video coding device.

Background Art

In order to efficiently transmit or record video, a video coding device which generates coded data by coding video, and a video decoding device which generates a decoded image by decoding the coded data have been used.

Specific examples of a video coding scheme include schemes proposed in H.264/MPEG-4. AVC or High-Efficiency Video Coding (HEVC).

In such a video coding scheme, images (pictures) constituting video are managed by a hierarchical structure including slices obtained by partitioning the images, units of coding (also referred to as Coding Units: CUs) obtained by partitioning the slices, and prediction units (PUs) and transform units (TUs) which are blocks obtained by partitioning the coding units, and each CU is coded/decoded.

In such a video coding scheme, generally, an input image is coded/decoded to obtain a local decoded image, based on the local decoded image, a prediction image is generated, and the prediction image is subtracted from the input image (original image) to obtain a prediction residual (also referred to as a "difference image" or a "residual image"), and the prediction residual is coded. Examples of a method for generating a prediction image include inter-screen prediction (inter prediction) and intra-screen prediction (intra prediction).

One of video coding and decoding technologies in recent year is disclosed in NPL 1.

NPL 2 discloses an OBMC generation in which the overlapped region is reduced for chroma components.

Citation List

Non Patent Literature

NPL 1: Video/JVET, "Algorithm Description of Joint Exploration TestModel 1 (JEM 1)", INTERNATIONAL ORGANIZATION FOR STANDARDIZATION ORGANISATION INTERNATIONALE DE NORMALISATION ISO/IEC JTC1/SC29/WG11 CODING OF MOVING PICTURES AND AUDIO, ISO/IEC JTC1/SC29/WG11/N15790, October 2015, Geneva, CH.
NPL 2: ZHENG X. ET AL.: "CE2 Summary report of core experiment on Motion Partitioning and OBMC", 7. JCT-VC MEETING; 98 MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG. 16); URL:HTTP://WFTP3.ITU.INT/AV_ARCH/ JCTVC_SITE/, no. JCTVC-G032, 21 November 2011, XP030110023.

Summary of Invention

Technical Problem

In video coding and decoding technology in recent years, motion compensation processing in a prediction image generation utilizes processing (OBMC processing) for generating an interpolation image of a target PU with the use of an interpolation image generated by using an inter-prediction parameter added to the target PU and an interpolation image generated by using a motion parameter of a neighboring PU of the target PU. On the other hand, OBMC processing includes a first problem of large memory band for accessing image data.

In addition, a second problem is included that processing amount increases in a case of performing OBMC processing.

Furthermore, in the case of performing OBMC processing, a third problem is included that accuracy of a prediction image degrades in the OBMC processing. An object of the disclosure is to provide an image decoding device, an image coding device, and a prediction image generation device capable of solving at least any of the above first, second, and third problems.

Solution to Problem

The above problems are solved by the subject-matter of the independent claims.

In order to solve the above problems, a video decoding or video encoding device according to claim 1 or claim 7 is provided.

Advantageous Effects of Invention

According to the above configuration, at least any of the above first, second, and third problems can be solved.

Brief Description of Drawings

FIGS. 1A to 1F are diagrams illustrating a hierarchical structure of data of a coded stream according to the present embodiment.

FIGS. 2A to 2H are diagrams illustrating patterns for a PU partition mode. FIGS. 2A to 2H respectively illustrate partition shapes in cases that the PU partition mode is 2N x 2N, 2N x N, 2N x nU, 2N x nD, N x 2N, nL x 2N, nR x 2N, and N x N.

FIG. 3 is a conceptual diagram illustrating an example of a reference picture list.

FIG. 4 is a conceptual diagram illustrating an example of a reference picture.

FIG. 5 is a block diagram illustrating a configuration of an image decoding device according to the present embodiment.

FIG. 6 is a schematic diagram illustrating a configuration of an inter-prediction parameter decoding unit according to the present embodiment.

FIG. 7 is a schematic diagram illustrating a configuration of a merge prediction parameter derivation unit according to the present embodiment.

FIG. 8 is a schematic diagram illustrating a configuration of an AMVP prediction parameter derivation unit according to the present embodiment.

FIG. 9 is a conceptual diagram illustrating an example of vector candidates.

FIG. 10 is a schematic diagram illustrating a configuration of an inter-prediction parameter decoding controller according to the present embodiment.

FIG. 11 is a schematic diagram illustrating a configuration of an inter-prediction image generation unit according to the present embodiment.

FIG. 12A is a diagram for illustrating Bilateral matching in the above matching process. FIG. 12B is a diagram for illustrating Template matching. It is a block diagram illustrating a configuration of an image coding device according to the present embodiment.

FIG. 13 is a diagram illustrating an example in which a motion vector mvLX of each of sub-blocks which constitute a PU (width nPbW) whose motion vector is to be predicted is derived.

FIG. 14 is a diagram illustrating an example of an area for performing prediction image generation by using a motion parameter of a neighboring PU according to the present embodiment.

FIG. 15 is a block diagram illustrating main components of a motion compensation unit which performs OBMC processing according to the present embodiment.

FIG. 16 is a flowchart illustrating an example of a processing flow of the motion compensation unit according to the present embodiment.

FIG. 17 illustrates a pseudo-code which represents the OBMC processing according to the present embodiment.

FIG. 18 is a diagram for illustrating whether or not the motion parameter of the neighboring sub-block is unknown.

FIGS. 19A and 19B are diagrams illustrating an overview of filter processing performed by the motion compensation unit according to the present embodiment.

FIG. 20 is a flowchart illustrating an example of the processing flow of the inter-prediction image generation unit according to the present embodiment.

FIG. 21 is a pseudo-code indicating the processing of the inter-prediction image generation unit according to the present embodiment.

FIGS. 22A and 22B are diagrams illustrating an overview of an example of filter processing performed by the motion compensation unit according to the present embodiment.

FIG. 23 is a flowchart illustrating an example of a processing flow of the motion compensation unit according to the present embodiment.

FIG. 24 is a pseudo-code illustrating an example of the processing of the motion compensation unit according to the present embodiment.

FIGS. 25A to 25C are diagrams illustrating an overview of an example of the processing of the motion compensation unit according to the present embodiment.

FIG. 26 is a flowchart illustrating an example of a processing flow of the motion compensation unit according to the present embodiment.

FIG. 27 is a pseudo-code illustrating an example of the processing of the motion compensation unit according to the present embodiment.

FIG. 28 is a flowchart illustrating an example useful for illustrative purposes of the processing flow of the motion compensation unit.

FIG. 29 is a pseudo-code illustrating an example of the processing of the motion compensation unit according to the present embodiment.

FIGS. 30A and 30B are diagrams illustrating an overview of an example of filter processing performed by the additional motion compensation unit according to the present embodiment.

FIG. 31 is a flowchart illustrating an example of a processing flow of the motion compensation unit according to the present embodiment.

FIGS. 32A to 30C are diagrams illustrating an overview of an example of filter processing performed by the motion compensation unit according to the present embodiment.

FIGS. 33A and 33B are diagrams illustrating an overview of an example of the processing of the motion compensation unit according to the present embodiment.

FIG. 34 is a flowchart illustrating an example of the processing flow of the motion compensation unit according to the present embodiment.

FIGS. 35A and 35B are diagrams illustrating an overview of an example of the processing of the motion compensation unit according to the present embodiment.

FIG. 36 is a flowchart illustrating an example of the processing flow of the motion compensation unit according to the present embodiment.

FIGS. 37A to 37C are diagrams illustrating an overview of an example of processing performed by the motion compensation unit according to the present embodiment.

FIG. 38 is a block diagram illustrating a configuration of an image coding device according to the present embodiment.

FIG. 39 is a schematic diagram illustrating a configuration of an inter-prediction image generation unit of an image coding device according to the present embodiment.

FIG. 40 is a block diagram illustrating main components of the motion compensation unit which performs OBMC processing of the image coding device according to the present embodiment.

FIG. 41 is a schematic diagram illustrating a configuration of an inter-prediction parameter coding unit of the image coding device according to the present embodiment.

FIGS. 42A and 42B are diagrams illustrating configurations of a transmission device equipped with the image coding device and a reception device equipped with the image decoding device according to the present embodiment. FIG. 42A illustrates the transmission device equipped with the image coding device and FIG. 42B illustrates the reception device equipped with the image decoding device.

FIGS. 43A and 43B are diagrams illustrating configurations of a recording device equipped with the image coding device and a reproducing device equipped with the image decoding device according to the present embodiment. FIG. 43A illustrates the recording device equipped with the image coding device and FIG. 43B illustrates the reproducing device equipped with the image decoding device.

FIG. 44 is a schematic diagram illustrating a configuration of an image transmission system according to an embodiment of the disclosure.

Description of Embodiments

First Embodiment

Hereinafter, embodiments of the present invention are described in detail with reference to the drawings.

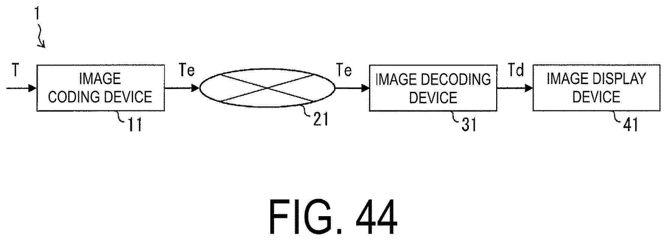

FIG. 44 is a schematic diagram illustrating a configuration of an image transmission system 1 according to the present embodiment.

The image transmission system 1 is a system in which a code obtained by coding a coding target image is transmitted and the image obtained by decoding the transmitted code is displayed. The image transmission system 1 is configured to include an image coding device 11 (video coding device), a network 21, an image decoding device 31 (video decoding device), and an image display device 41.

Signals T representing an image of a single layer or multiple layers are input to the image coding device 11. A layer is a concept used to distinguish multiple pictures in a case that a certain time period is constituted by one or more pictures.

For example, scalable coding applies in a case that the same picture is coded in multiple layers which are different in image quality or resolution, and view scalable coding applies in a case that pictures different in a viewpoint are coded in multiple layers. In a case that prediction is performed between pictures of multiple layers (inter-layer prediction, inter-view prediction), the coding efficiency is highly improved. In a case also that prediction is not performed (simulcast), the coded data can be collected.

The network 21 transmits a coded stream Te generated by the image coding device 11 to the image decoding device 31. The network 21 includes the Internet, a Wide Area Network (WAN), or a Local Area Network (LAN), or a combination thereof. The network 21 is not necessarily limited to a bidirectional communication network, but may be a unidirectional or bidirectional communication network transmitting broadcast waves such as digital terrestrial broadcasting and satellite broadcasting. The network 21 may be substituted by a storage medium in which the coded stream Te is recorded such as a Digital Versatile Disc (DVD) and a Blue-ray Disc (BD).

The image decoding device 31 decodes each coded stream Te transmitted by the network 21, and generates one or multiple decoded images Td.

The image display device 41 displays all or some of one or multiple decoded images Td generated by the image decoding device 31. The image display device 41 includes a display device, for example, a liquid crystal display and an organic Electro-luminescence (EL) display. In spatial scalable coding and SNR scalable coding, the image decoding device 31 and the image display device 41 display an enhancement layer image which is higher in image quality in a case of having high processing capability, and display a base layer image for which processing capability and display capability are required not so much high as the enhancement layer in a case of having only lower processing capability.

Structure of Coded Stream Te

Before describing in detail, the image coding device 11 and the image decoding device 31 according to the present embodiment, a description is given of a data structure of the coded stream Te which is generated by the image coding device 11 and decoded by the image decoding device 31.

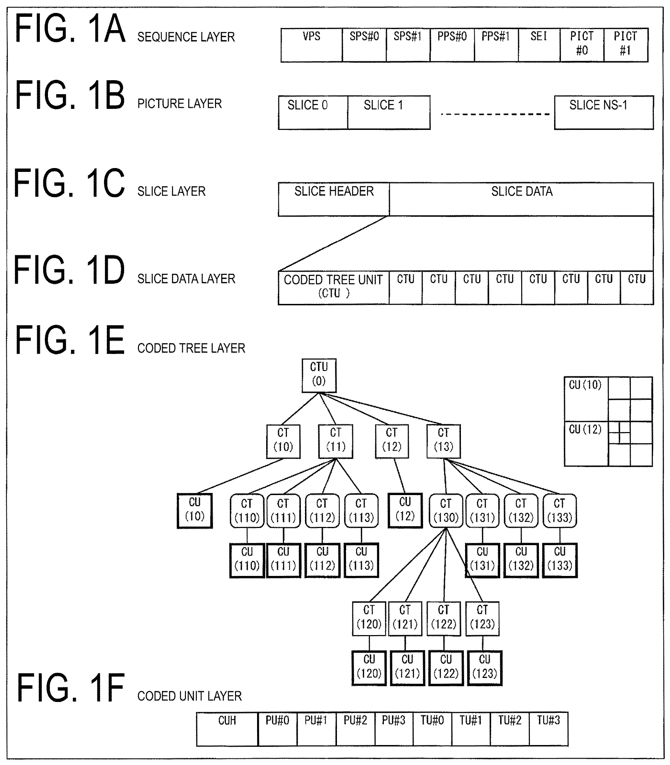

FIGS. 1A to 1F are diagrams illustrating a hierarchical structure of data in the coded stream Te. The coded stream Te exemplarily contains a sequence and multiple pictures constituting the sequence. FIGS. 1A to 1F are diagrams respectively illustrating a sequence layer specifying a sequence SEQ, a picture layer specifying a picture PICT, a slice layer specifying a slice S, a slice data layer specifying slice data, a coded tree layer specifying a coded tree unit included in the slice data, and a coded unit layer specifying a Coding Unit (CU) included in the coding tree.

Sequence Layer

The sequence layer specifies a set of data to which the image decoding device 31 refers in order to decode the sequence SEQ to be processed. The sequence SEQ contains, as illustrated in FIG. 1A, a Video Parameter Set, a Sequence Parameter Set (SPS), a Picture Parameter Set (PPS), a picture PICT, and Supplemental Enhancement Information (SEI). Here, a value following "#" indicates a layer ID. FIGS. 1A to 1F illustrate an example in which there is coded data of #0 and #1, that is, a layer 0 and a layer 1, but types of layer and the number of layers are not limited thereto.

The video parameter set VPS specifies, for a video configured with multiple layers, set of coding parameters common to multiple videos and a set of coding parameters associated with multiple layers and individual layers contained in the video.

The sequence parameter set SPS specifies a set of coding parameters to which the image decoding device 31 refers in order to decode a target sequence. For example, a width and height of a picture are specified. There may be multiple SPSs. In this case, any of multiple SPSs is selected from the PPS.

The picture parameter set PPS specifies a set of coding parameters to which the image decoding device 31 refers in order to decode pictures in the target sequence. For example, the PPS includes a reference value of a quantization width (pic_init_qp_minus26) used to decode the picture and a flag indicating that a weighted prediction is applied (weighted_pred_flag). There may be multiple PPSs. In this case, any of multiple PPSs is selected from the pictures in the target sequence.

Picture Layer

The picture layer specifies a set of data to which the image decoding device 31 refers in order to decode a picture PICT to be processed. The picture PICT contains slices S0 to SNS-1 (NS represents the total number of slices contained in the picture PICT) as illustrated in FIG. 1B.

Hereinafter, the slices S0 to SNS-1 may be expressed with their suffixes omitted in a case that it is not necessary to distinguish them from each other. The same holds for other data with a suffix which is contained in the coded stream Te described below.

Slice Layer

The slice layer specifies a set of data to which the image decoding device 31 refers in order to decode a slice S to be processed. The slice S contains a slice header SH and slice data SDATA, as illustrated in FIG. 1C.

The slice header SH contains a coding parameter group to which the image decoding device 31 refers in order to determine a method of decoding a target slice. Slice type specifying information (slice_type) specifying a slice type is an example of the coding parameter contained in the slice header SH.

Examples of the slice type specifiable by the slice type specifying information include (1) I slice that is coded using intra prediction only, (2) P slice that is coded using unidirectional prediction or intra prediction, and (3) B slice that is coded using unidirectional prediction, bidirectional prediction, or intra prediction.

The slice header SH may include reference to the picture parameter set PPS (pic_parameter_set_id) which is contained in the above sequence layer.

Slice Data Layer

The slice data layer specifies a set of data to which the image decoding device 31 refers in order to decode slice data SDATA to be processed. The slice data SDATA contains a Coding Tree Unit (CTU) as illustrated in FIG. 1D. The CTU is a block having a fixed size (e.g., 64 x 64) constituting a slice, and may be also referred to as a Largest Cording Unit (LCU).

Coded Tree Layer

The coded tree layer specifies a set of data to which the image decoding device 31 refers in order to decode a coded tree unit to be processed as illustrated in FIG. 1E. The coded tree unit is partitioned by recursive quadtree partitioning. A node of a tree structure obtained by the recursive quadtree partitioning is called a Coding Tree (CT). An intermediate node of the quadtree is a coded tree and the coded tree unit itself is specified as a top CT. The CTU contains a split flag (split_flag), and is partitioned into four coded tree CT in a case that split_flag is 1. In a case that split_flag is 0, the coded tree CT is not partitioned and has one Coding Unit (CU) as a node. The coding unit CU is a terminal node of the coded tree layer and is not partitioned any further in this layer. The coding unit CU is a basic unit for coding processing.

In a case that a size of the coded tree unit CTU is 64 x 64 pixel, a size of the coding unit may be any of 64 x 64 pixel, 32 x 32 pixel, 16 x 16 pixel, and 8 x 8 pixel.

Coded Unit Layer

The coded unit layer specifies a set of data to which the image decoding device 31 refers in order to decode a coding unit to be processed, as illustrated in FIG. 1F. Specifically, the coding unit includes a prediction tree, a transform tree, and a CU header CUH. The CU header specifies a partition mode, a division method (PU partition mode), and the like.

The prediction tree specifies prediction information (reference picture index, motion vector, etc.) of each of the prediction units (PU) which are obtained by partitioning the coding unit into one or multiple pieces. In other words, the prediction unit/units is/are one or multiple non-overlapping areas which constitute the coding unit. The prediction tree includes one or multiple prediction units which are obtained by the above partitioning. Hereinafter, a unit of prediction obtained by further partitioning the prediction unit is called a "sub-block". The sub-block is configured with multiple pixels. In a case that a size of the prediction unit is equal to a size of the sub-block, the number of sub-blocks in the prediction unit is one. In a case that a size of the prediction unit is larger than a size of the sub-block, the prediction unit is partitioned into the sub-blocks. For example, in a case that a size of the prediction unit is 8 x 8 and a size of the sub-block is 4 x 4, the prediction unit is partitioned horizontally into two and vertically into two to be partitioned into four sub-blocks.

Prediction processing may be performed for each of these prediction units (sub-blocks).

A type of partition for the prediction tree is roughly classified into two for a case of the intra prediction and a case of the inter prediction. The intra prediction is prediction within an identical picture, and the inter prediction is prediction processing performed between pictures different from each other (e.g., between display times, between layer images).

In the case of the intra prediction, a partition method includes method using 2N x 2N (the same size as the coding unit) and N x N.

In the case of the inter prediction, a partition method includes coding in a PU partition mode (part_mode) in the coded data, and includes methods using 2N x 2N (the same size as the coding unit), 2N x N, 2N x nU, 2N x nD, N x 2N, nL x 2N, nR x 2N, and N x N. Note that 2N x nU indicates that a 2N x 2N coding unit are partitioned into two areas, 2N x 0.5N and 2N x 1.5N, in this order from the upside. 2N x nD indicates that a 2N x 2N coding unit is partitioned into two areas, 2N x 1.5N and 2N x 0.5N, in this order from the upside. nL x 2N indicates that a 2N x 2N coding unit is partitioned into two areas, 0.5N x 2N and 1.5N x 2N, in this order from the left. nR x 2N indicates that a 2N x 2N coding unit is partitioned into two areas, 1.5N x 2N and 0.5N x 1.5N, in this order from the left. The number of partitions is any of 1, 2, and 4, and thus, the number of PUs included in the CU is 1 to 4. These PUs are expressed as PU0, PU1, PU2, and PU3 in this order.

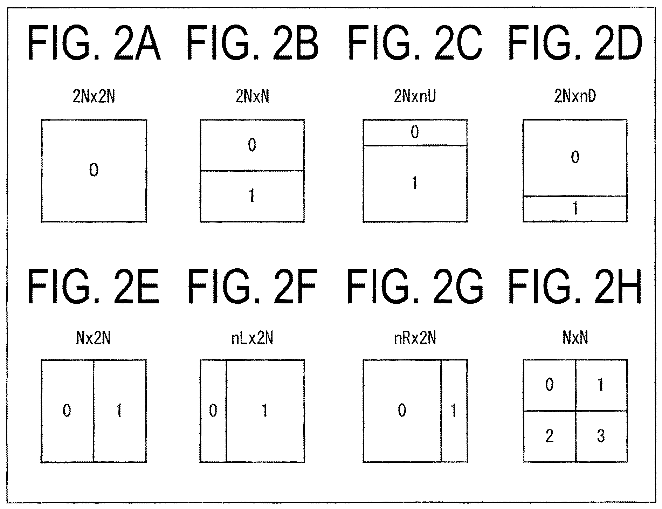

Each of FIGS. 2A to 2H specifically illustrates a boundary location of PU partitioning in the CU for each partition type.

FIG. 2A illustrates a PU partition mode for 2N x 2N in which the CU is not partitioned.

FIGS. 2B, 2C and 2D illustrate respectively partition shapes in cases that the PU partition modes are 2N x N, 2N x nU, and 2N x nD. Hereinafter, the partitions in the cases that the PU partition modes are 2N x N, 2N x nU, and 2N x nD are collectively referred to as a horizontally-long partition.

FIGS. 2E, 2F and 2G illustrate respectively partition shapes in the cases that the PU partition modes are N x 2N, nL x 2N, and nR x 2N. Hereinafter, the partitions in the case that the PU partition types are N x 2N, nL x 2N, and nR x 2N are collectively referred to as a vertically-long partition.

The horizontally-long partition and the vertically-long partition are collectively referred to as a rectangular partition.

FIG. 2H illustrates a partition shape in a case that the PU partition mode is N x N. The PU partition modes in FIGS. 2A and 2H are also referred to as square partitioning based on their partition shapes. The PU partition modes in FIGS. 2B to 2G are also referred to as non-square partitioning.

In FIGS. 2A to 2H, the number assigned to each partition indicates an identification number, and the partitions are processed in the order of the identification number. To be more specific, the identification number represents a scan order for partitioning.

In FIGS. 2A to 2H, assume that an upper left corner is a base point (origin) of the CU.

In the transform tree, the coding unit is partitioned into one or multiple transform units, and a location and size of each transform unit is specified. In other words, the transform unit/units is/are one or multiple non-overlapping areas which constitute the coding unit. The transform tree includes one or multiple transform units which are obtained by the above partitioning.

Partitioning in the transform tree includes that performed by allocating an area having the same size as the coding unit as a transform unit, and that performed by the recursive quadtree partitioning similar to the partitioning of the CU described above.

Transform processing is performed for each of these transform units.

Prediction Parameter

A prediction image in the prediction unit (PU) is derived according to a prediction parameter associated with the PU. The prediction parameter includes a prediction parameter for intra prediction or a prediction parameter for inter prediction. Hereinafter, the prediction parameter for inter prediction (inter-prediction parameter) is described. The inter-prediction parameter includes prediction list utilization flags predFlagL0 and predFlagL1, reference picture indices refIdxL0 and refIdxL1, and vectors mvL0 and mvL1. The prediction list utilization flags predFlagL0 and predFlagL1 are flags respectively indicating whether or not reference picture lists called L0 list and L1 list are used, and in a case that a value of each thereof is 1, the corresponding reference picture list is used. Here, assume that in a case that an expression "a flag indicating whether or not XX" is used herein, "1" corresponds to a case of XX and "0" corresponds to a case of not XX, and "1" represents true and "0" represents false in logical NOT, logical AND or the like (the same applies hereinafter). However, other values may be used as a true value or a false value in actual device or methods. A case that two reference picture lists are used, that is, a case of predFlagL0 = 1 and predFlagL1 = 1, corresponds to bi-prediction BiPred, and a case that one reference picture list is used, that is, a case of (predFlagL0, predFlagL1) = (1, 0) or (predFlagL0, predFlagL1) = (0, 1), corresponds to uni-prediction UniPred. Information on the prediction list utilization flag can be also expressed by an inter-prediction identifier inter_pred_idc described below.

The flag biPred indicating whether bi-prediction BiPred is used or not can be derived from whether both the two prediction list utilization flags indicate one. For example, the flag can be derived according to equations below.

$$\mathrm{biPred} = (\mathrm{predFlagL0} == 1\ \&\&\ \mathrm{predFlagL1} == 1)$$

Examples of a syntax element for deriving the inter-prediction parameter included in the coded data include a partition mode part_mode, a merge flag merge_flag, a merge index merge _idx, an inter-prediction identifier inter_pred_idc, a reference picture index refIdxLX, a prediction vector index mvp_LX_idx, a difference vector mvdLX, and an OBMC flag obmc_flag for example.

Example of Reference Picture List

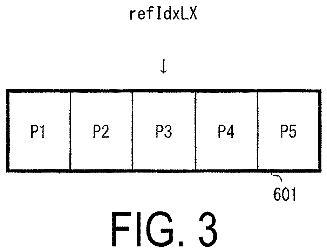

Next, a description is given of an example of the reference picture list. The reference picture list is a row constituted by the reference pictures stored in a reference picture memory 306. FIG. 3 is a conceptual diagram illustrating an example of the reference picture list. In a reference picture list 601, each of five rectangles horizontally aligned represents a reference picture. Signs P1, P2, P3, P4, and P5 indicated from a left end to the right are signs representing corresponding reference pictures. A suffix indicates a picture order count POC. A downward arrow immediately under "refIdxLX" represents that the reference picture index refIdxLX is an index for referring to a reference picture P3 in the reference picture memory 306.

Example of Reference Pictures

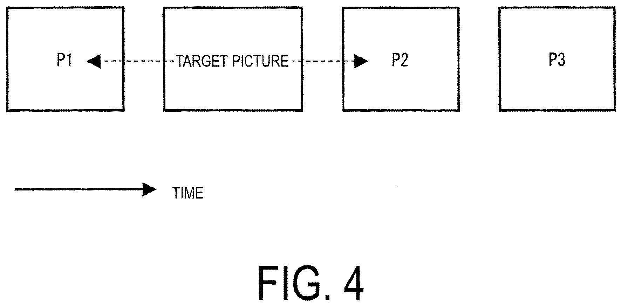

Next, a description is given of an example of the reference pictures which is used to derive a vector. FIG. 4 is a conceptual diagram illustrating an example of the reference pictures. In FIG. 4, a horizontal axis represents a display time. Four rectangles illustrated in FIG. 4 represent respectively pictures. The second rectangle from the left among four rectangles represents a decoding target picture (target picture) and the other three rectangles represent the reference pictures. The reference picture P1 indicated by a leftward arrow from the target picture is a previous picture. The reference picture P2 indicated by a rightward arrow from the target picture is a future picture. In FIG. 4, the reference picture P1 or P2 is used in motion prediction in which the target picture is used as a reference.

Inter-prediction Identifier and Prediction List Utilization Flag

The inter-prediction identifier inter_pred_idc, and the prediction list utilization flags predFlagL0 and predFlagL1 are mutually transformable as below. Therefore, the prediction list utilization flag may be used as the inter-prediction parameter or inter-prediction identifier may be used. In the following description, in determination using the prediction list utilization flag, the inter-prediction identifier may be alternatively used. In contrast, in determination using the inter-prediction identifier, the prediction list utilization flag may be alternatively used.

$$\text{inter\_pred\_idc} = (\text{predFlagL1} << 1) + \text{predFlagL0}$$

$$\text{predFlagL0} = \text{inter\_pred\_idc} \ \& \ 1$$

$$\text{predFlagL1} = \text{inter\_pred\_idc} >> 1$$

Here, >> represents right bit shift, << represents left bit shift, and & represents bitwise AND.

The flag biPred indicating bi-prediction BiPred or not can be derived depending on whether an inter-prediction identifier is a value indicating that two prediction lists (reference pictures) are used. For example, the flag can be derived according to equation below.

$$\text{biPred} = (\text{inter\_pred\_idc} == 3) \ ? \ 1 : 0 \ 1 : 0$$

The above-described equation can be expressed as the following equation.

$$\text{biPred} = (\text{inter\_pred\_idc} == 3)$$

Merge Prediction and AMVP Prediction

A prediction parameter decoding (coding) method includes a merge prediction (merge) mode and an Adaptive Motion Vector Prediction (AMVP) mode, and a merge flag merge_flag is a flag identifying these modes. In both the merge prediction mode and the AMVP mode, a prediction parameter for an already processed PU is used to derive a prediction parameter for a target PU. The merge prediction mode is a mode in which a prediction list utilization flag predFlagLX (or inter-prediction identifier inter_pred_idc), a reference picture index refIdxLX, and a motion vector mvLX are not included in the coded data, and the prediction parameter already derived for a neighboring PU is used as it is. The AMVP mode is a mode in which the inter-prediction identifier inter_pred_idc, the reference picture index refIdxLX, and the motion vector mvLX are included in the coded data. The motion vector mvLX is coded as a prediction vector index mvp_LX_idx identifying the prediction vector mvpLX and as a difference vector mvdLX.

The inter-prediction identifier inter_pred_idc is data indicating types and the number of the reference pictures, and has a value Pred_L0, Pred_L1, or Pred_Bi. Pred_L0 and Pred_L1 indicate that the reference pictures stored in the reference picture lists called L0 list and L1 list, respectively, are used, and indicate that one reference picture is used (uni-prediction). The predictions using L0 list and L1 list are called L0 prediction and L1 prediction, respectively. Pred_Bi indicates that two reference pictures are used (bi-prediction BiPred), and indicates that two reference pictures stored in L0 list and L1 list are used. The prediction vector index mvp_LX_idx is an index indicating a prediction vector, and the reference picture index refIdxLX is an index indicating a reference picture stored in the reference picture list. "LX" is a description method used in a case that the L0 prediction and the L1 prediction are not distinguished from each other, and a parameter for L0 list and a parameter for L1 list are distinguished by replacing "LX" with "L0" or "L1". For example, refIdxL0 is a reference picture index used for the L0 prediction, refIdxL1 is a reference picture index used for the L1 prediction, and refIdxLX is an expression used in a case that refIdxL0 and refIdxL1 are not distinguished from each other.

The merge index merge_idx is an index indicating which prediction parameter is used as a prediction parameter for the decoding target CU, among prediction parameter candidates (merge candidates) derived from the PU on which the processing is completed.

Motion Vector

The motion vector mvLX indicates a displacement between the blocks on two pictures which are different in times. The prediction vector and difference vector for the motion vector mvLX are called respectively a prediction vector mvpLX and a difference vector mvdLX.

Configuration of Image Decoding Device

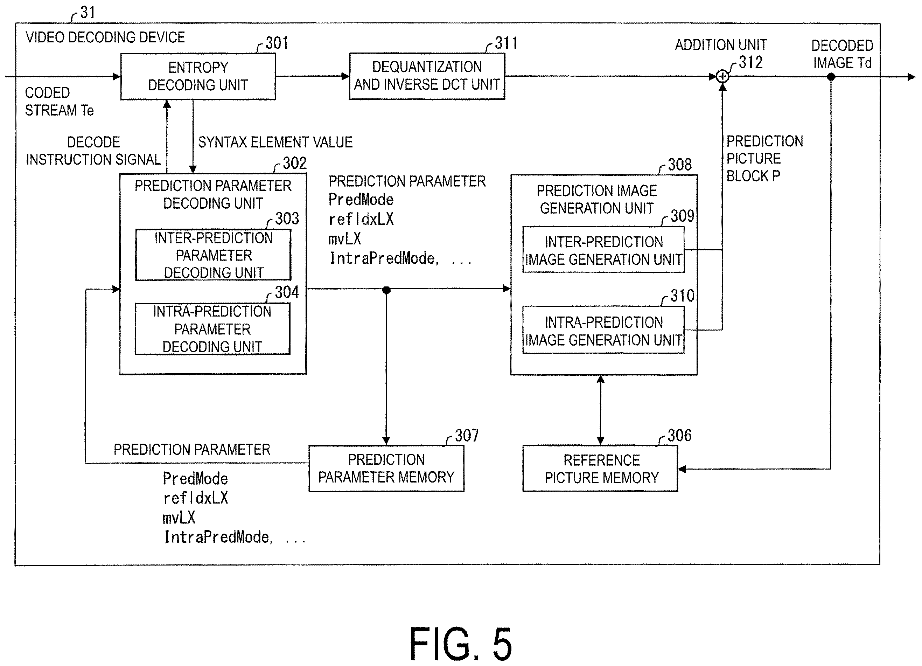

Next, a description is given of a configuration of the image decoding device 31 according to the present embodiment. FIG. 5 is a schematic diagram illustrating the configuration of the image decoding device 31 according to the present embodiment. The image decoding device 31 is configured to include an entropy decoding unit 301, a prediction parameter decoding unit (prediction image generation device) 302, a reference picture memory 306, a prediction parameter memory 307, a prediction image generation unit (prediction image generation device) 308, a dequantization and inverse DCT unit 311, and an addition unit 312.

The prediction parameter decoding unit 302 is configured to include an inter-prediction parameter decoding unit 303 and an intra-prediction parameter decoding unit 304. The prediction image generation unit 308 is configured to include an inter-prediction image generation unit 309 and an intra-prediction image generation unit 310.

The entropy decoding unit 301 performs entropy decoding on the coded stream Te input from outside to demultiplex and decode individual codes (syntax elements). Examples of the demultiplexed codes include the prediction information for generating the prediction image and residual information for generating the difference image.

The entropy decoding unit 301 outputs some of the demultiplexed codes to the prediction parameter decoding unit 302. Some of the demultiplexed codes are, for example, a prediction mode PredMode, partition mode part_mode, merge flag merge_flag, merge index merge_idx, inter-prediction identifier inter_pred_idc, reference picture index refIdxLX, prediction vector index mvp_LX_idx, and difference vector mvdLX. Control on which code is to be decoded is based on an instruction from the prediction parameter decoding unit 302. The entropy decoding unit 301 outputs quantized coefficients to the dequantization and inverse DCT unit 311. The quantized coefficients are coefficients obtained by performing Discrete Cosine Transform (DCT) on the residual signal and quantization in the coding processing.

The inter-prediction parameter decoding unit 303 refers to the prediction parameter stored in the prediction parameter memory 307, based on the code input from the entropy decoding unit 301 to decode the inter-prediction parameter.

The inter-prediction parameter decoding unit 303 outputs the decoded inter-prediction parameter to the prediction image generation unit 308 and stores the parameter in the prediction parameter memory 307. The inter-prediction parameter decoding unit 303 is described in detail later.

The intra-prediction parameter decoding unit 304 refers to the prediction parameter stored in the prediction parameter memory 307, based on the code input from the entropy decoding unit 301 to decode the intra-prediction parameter. The intra-prediction parameter is a parameter used for processing to predict the CU within one picture, for example, an intra-prediction mode IntraPredMode. The intra-prediction parameter decoding unit 304 outputs the decoded intra-prediction parameter to the prediction image generation unit 308 and stores the parameter in the prediction parameter memory 307.

The intra-prediction parameter decoding unit 304 may derive an intra-prediction mode different in luminance and chrominance. In this case, the intra-prediction parameter decoding unit 304 decodes a luminance prediction mode IntraPredModeY as a prediction parameter for luminance, and a chrominance prediction mode IntraPredModeC as a prediction parameter for chrominance. The luminance prediction mode IntraPredModeY has 35 modes, which correspond to planar prediction (0), DC prediction (1), and angular predictions (2 to 34). The chrominance prediction mode IntraPredModeC uses any of the planar prediction (0), the DC prediction (1), the angular predictions (2 to 34), and LM mode (35). The intra-prediction parameter decoding unit 304 decodes a flag indicating whether or not IntraPredModeC is the same mode as the luminance mode, may assign IntraPredModeC equal to IntraPredModeY in a case that the flag indicates the same mode as the luminance mode, and may decode the planar prediction (0), the DC prediction (1), the angular predictions (2 to 34), and the LM mode (35) as IntraPredModeC in a case that the flag indicates a mode different from the luminance mode.

The reference picture memory 306 stores the decoded image of the CU generated by the addition unit 312 in a predefined location for each decoding target picture and CU.

The prediction parameter memory 307 stores the prediction parameters in a predefined location for each decoding target picture and each prediction unit (or sub-block, fixed-size block, pixel). To be more specific, the prediction parameter memory 307 stores the inter-prediction parameter decoded by the inter-prediction parameter decoding unit 303, the intra-prediction parameter decoded by the intra-prediction parameter decoding unit 304, and the prediction mode predMode demultiplexed by the entropy decoding unit 301. Examples of the stored inter-prediction parameter include the prediction list utilization flag predFlagLX (inter-prediction identifier inter_pred_idc), the reference picture index refIdxLX, and the motion vector mvLX.

Input to the prediction image generation unit 308 are the prediction mode predMode which is input from the entropy decoding unit 301 and the prediction parameters from the prediction parameter decoding unit 302. The prediction image generation unit 308 reads out the reference picture from the reference picture memory 306. The prediction image generation unit 308 uses the input prediction parameters and the read-out reference picture to generate a prediction image of the PU in the prediction mode indicated by the prediction mode predMode.

Here, in a case that the prediction mode predMode indicates the inter-prediction mode, the inter-prediction image generation unit 309 uses the inter-prediction parameter input from the inter-prediction parameter decoding unit 303 and the read-out reference picture to generate the prediction image of the PU by the inter-prediction.

The inter-prediction image generation unit 309 reads out from the reference picture memory 306 a reference picture block at a location which is indicated by the motion vector mvLX with reference to the decoding target PU from the reference picture indicated by the reference picture index refIdxLX with respect to the reference picture list having the prediction list utilization flag predFlagLX of 1 (L0 list or L1 list). The inter-prediction image generation unit 309 performs prediction, based on the read-out reference picture block to generate the prediction image of the PU. The inter-prediction image generation unit 309 outputs the generated prediction image of the PU to the addition unit 312.

In a case that the prediction mode predMode indicates the intra-prediction mode, the intra-prediction image generation unit 310 uses the intra-prediction parameter input from the intra-prediction parameter decoding unit 304 and the read-out reference picture to perform the intra-prediction. To be more specific, the intra-prediction image generation unit 310 reads out from the reference picture memory 306 the neighboring PU in a predefined range from the decoding target PU in the already decoded PUs of the decoding target picture. The predefined range is, for example, any of the left, upper left, upper, and upper right neighboring PUs in a case that the decoding target PU sequentially moves in the order of a so-called raster scan, and depends on the intra-prediction mode. The order of the raster scan is an order of sequentially moving from a left end to a right end of each row from an upper end to a bottom end in each picture.

The intra-prediction image generation unit 310 performs prediction on the read-out neighboring PU in the prediction mode indicated by the intra-prediction mode IntraPredMode to generate the prediction Y image of the PU. The intra-prediction image generation unit 310 outputs the generated prediction image of the PU to the addition unit 312.

In a case that the intra-prediction parameter decoding unit 304 derives the intra-prediction mode different in luminance and chrominance, the intra-prediction image generation unit 310 generates a luminance prediction image of the PU by any of the planar prediction (0), the DC prediction (1), and the angular predictions (2 to 34) depending on the luminance prediction mode IntraPredModeY, and generates a chrominance prediction image of the PU by any of the planar prediction (0), the DC prediction (1), the angular predictions (2 to 344), and the LM mode (35) depending on the chrominance prediction mode IntraPredModeC.

The dequantization and inverse DCT unit 311 dequantizes the quantized coefficients input from the entropy decoding unit 301 to find DCT coefficients. The dequantization and inverse DCT unit 311 performs Inverse Discrete Cosine Transform (inverse DCT) on the found DCT coefficients to compute a decoded residual signal. The dequantization and inverse DCT unit 311 outputs the computed decoded residual signal to the addition unit 312.

The addition unit 312 adds the prediction image of the PU input from the inter-prediction image generation unit 309 and intra-prediction image generation unit 310 and the decoded residual signal input from the dequantization and inverse DCT unit 311 for each pixel to generate a decoded image of the PU. The addition unit 312 stores the generated decoded image of the PU in the reference picture memory 306, and outputs, to outside, a decoded image Td in which the generated decoded image of the PUs are integrated for each picture.

Configuration of Inter-Prediction Parameter Decoding Unit

Next, a description is given of a configuration of the inter-prediction parameter decoding unit 303.

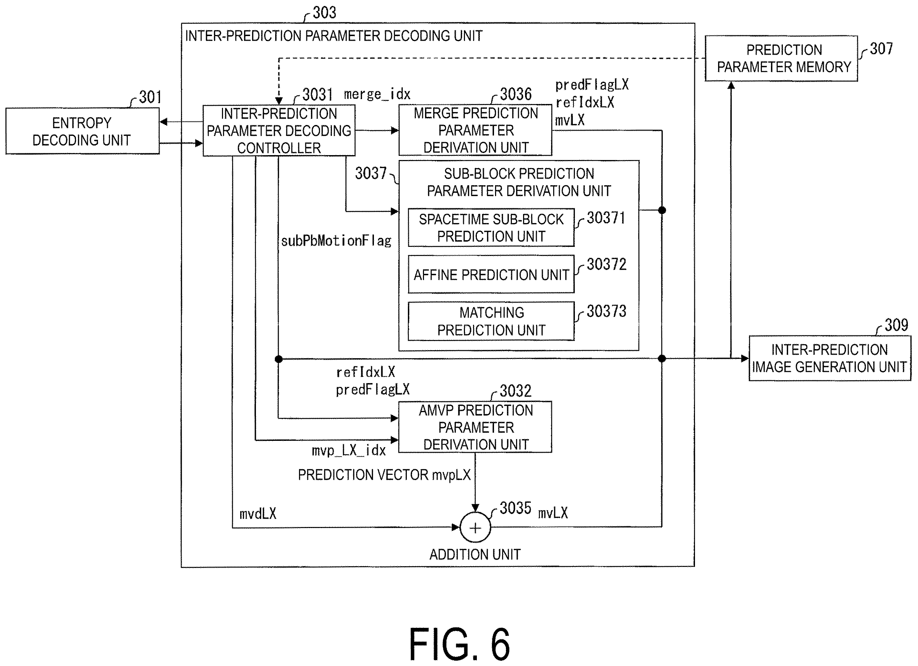

FIG. 6 is a schematic diagram illustrating the configuration of the inter-prediction parameter decoding unit 303 according to the present embodiment. The inter-prediction parameter decoding unit 303 is configured to include an inter-prediction parameter decoding controller 3031, an AMVP prediction parameter derivation unit 3032, an addition unit 3035, a merge prediction parameter derivation unit 3036, and a sub-block prediction parameter derivation unit 3037.

The inter-prediction parameter decoding controller 3031 instructs the entropy decoding unit 301 to decode the code (syntax element) associated with the inter-prediction to extract the code (syntax element) included in the coded data, for example, the partition mode part_mode, the merge flag merge_flag, the merge index merge _idx, the inter-prediction identifier inter_pred_idc, the reference picture index refIdxLX, the prediction vector index mvp_LX_idx, the difference vector mvdLX, the OBMC flag obmc_flag, and the sub-block prediction mode flag subPbMotionFlag.

The inter-prediction parameter decoding controller 3031 first extracts the merge flag. An expression that the inter-prediction parameter decoding controller 3031 extracts a certain syntax element means instructing the entropy decoding unit 301 to decode a code of a certain syntax element to read the syntax element from the coded data. Here, in a case that the merge flag indicates a value of 1, that is, the merge prediction mode, the inter-prediction parameter decoding controller 3031 extracts the merge index merge_idx as a prediction parameter related to the merge prediction. The inter-prediction parameter decoding controller 3031 outputs the extracted merge index merge_idx to the merge prediction parameter derivation unit 3036.

In a case that the merge flag merge_flag is 0, that is, indicates the AMVP prediction mode, the inter-prediction parameter decoding controller 3031 uses the entropy decoding unit 301 to extract the AMVP prediction parameter from the coded data. Examples of the AMVP prediction parameter include the inter-prediction identifier inter_pred_idc, the reference picture index refIdxLX, the prediction vector index mvp_LX_idx, and the difference vector mvdLX. The inter-prediction parameter decoding controller 3031 outputs the prediction list utilization flag predFlagLX derived from the extracted inter-prediction identifier inter_pred_idc and the reference picture index refIdxLX to the AMVP prediction parameter derivation unit 3032 and the prediction image generation unit 308 (FIG. 5), and stores the predFlagLX and refIdxLX in the prediction parameter memory 307. The inter-prediction parameter decoding controller 3031 outputs the extracted prediction vector index mvp_LX_idx to the AMVP prediction parameter derivation unit 3032. The inter-prediction parameter decoding controller 3031 outputs the extracted difference vector mvdLX to the addition unit 3035.

The sub-block prediction parameter derivation unit 3037 performs any of subblock predictions depending on the value of the subblock prediction mode flag subPbMotionFlag supplied from the inter-prediction parameter decoding controller 3031 to dereive the motion vector mvLX. Here, examples of the inter-prediction parameter include the motion vector mvLX.

In the sub-block prediction mode, the sub-block prediction parameter derivation unit 3037 partitions the PU into multiple sub-blocks and derives a motion vector in units of sub-block obtained by partitioning. In other words, in the sub-block prediction mode, the prediction block is predicted in a small block unit of 4 x 4 or 8 x 8. The image coding device 11 described below partitions a CU into multiple partitions (PUs with 2N x N, N x 2N, N x N, or the like), and collects multiple partitions into sets to code the syntax of the prediction parameter for each of the set in the sub-block prediction mode, for a method of coding the syntax of the prediction parameter in units of partition. Therefore, motion information for many partitions can be coded with a small code amount.

Describing in detail, the sub-block prediction parameter derivation unit 3037 includes at least one of a spacetime sub-block prediction unit 30371 performing sub-block prediction in the sub-block prediction mode, an affine prediction unit 30372, and a matching prediction unit 30373.

Sub-Block Prediction Mode Flag

Here, a method of deriving a sub-block prediction mode flag subPbMotionFlag indicating whether the prediction mode for a certain PU is the sub-block prediction mode in the image coding device 11 (details are described below) will be described. The image coding device 11 derives the sub-block prediction mode flag subPbMotionFlag, based on whether any of a space sub-block prediction SSUB described below, a time sub-block prediction TSUB, an affine prediction AFFINE, and a matching prediction MAT are used. For example, in a case that the prediction mode selected for a certain PU is N (for example, N is a label indicating a selected merge candidate), the sub-block prediction mode flag subPbMotionFlag may be derived by the following equation.

subPbMotionFlag = (N == TSUB) || (N == SSUB) || (N == AFFINE) || (N == MAT)

Here, || represents a logical sum (the same applies hereinafter).

Moreover, according to a mode type of the sub-block prediction performed by the image coding device 11, the above-described equation may be changed appropriately as follows. The image coding device 11 may derive the sub-block prediction mode flag subPbMotionFlag in a following manner in a case that the image coding device 11 is configured to perform the space sub-block prediction SSUB or the affine prediction AFFINE.

$$subPbMotionFlag = (N == SSUB) \,||\, (N == AFFINE)$$

The image coding device 11 may be configured to set subPbMotionFlag to one, in the processing of the prediction mode corresponding to each subblock prediction, in a case of performing prediction with each prediction mode (for example, spacetime sub-block prediction, affine prediction, matching prediction) included in the sub-block prediction,

Moreover, for example, in a case that the CU size is 8 x 8 (logarithm CU size log2CbSize == 3) and that the PU is small in size such as a case where the partitioning type is other than 2N x 2N, PU can be used as the sub-block with the number of partitioning being one. In this case, the sub-block prediction mode subPbMotionFlag may be derived as follows.

$$subPbMotionFlag \,|= (log2CbSize == 3 \,\&\&\, PartMode \,!= 2N \times 2N)$$

Note that |= means that subPbMotionFlag may be derived by a sum operation (OR) with another condition. In other words, subPbMotionFlag may be derived by the sum operation of the determination of the prediction mode N and the determination of the small PU size as follows (the same applies hereinafter).

subPbMotionFlag = (N == TSUB) || (N == SSUB) || (N == AFFINE) || (N == MAT) || (log2CbSize == 3 && PartMode != 2N × 2N)

Furthermore, for example, a case in which the CU size is 8 x 8 (log2CbSize == 3) and the partitioning type is any of 2N x N, N x 2N, and N x N may be included in the sub-block prediction. In other words, subPbMotionFlag may be derived as follows.

subPbMotionFlag |= (log2CbSize == 3 && (PartMode == 2N × N || PartMode == N × 2N || PartMode == N × N))

Furthermore, for example, a case in which the CU size is 8 x 8 (log2CbSize == 3) and the partitioning type is N x N may be included in the sub-block prediction. In other words, subPbMotionFlag may be derived as follows.

$$subPbMotionFlag \,|= (log2CbSize == 3 \,\&\&\, PartMode == N \times N)$$

Moreover, the cases of determining as the subblock prediction may include a case where the width or the height of the PU is four. In other words, the sub-block prediction mode flag subPbMotionFlag may be derived as follows.

$$subPbMotionFlag \,|= (nPbW == 4 \,||\, nPbH == 4)$$

Sub-Block Prediction Unit

Next, a sub-block prediction unit will be described.

Spacetime Sub-Block Prediction Unit 30371

The spacetime sub-block prediction unit 30371 derives the motion vector of the sub-block obtained by partitioning the target PU, from the motion vector of the PU on the reference image (for example, a picture immediately before the target PU) temporally neighboring the target PU, or the motion vector of the PU spatially neighboring the target PU. Specifically, scaling the motion vector of the PU on the reference image according to the reference picture which the target PU refers to, allows the derivation of the motion vector spMvLX [xi][yi] (xi = xPb + nSbW * i, yj = yPb + nSbH * j, i = 0, 1, 2,..., nPbW/nSbW - 1, j=0, 1, 2,..., nPbH/nSbH - 1) of each sub-block in the target PU (time sub-block prediction). Here, (xPb, yPb) are upper left coordinates of the target PU, nPbW and nPbH indicate the size of the target PU, and nSbW and nSbH indicate the size of the sub-block.

Moreover, calculating a weighted average according to the motion vector of the PU neighboring the target PU and a distance from the sub-block obtained by partitioning the target PU, may allow the derivation of the motion vector spMvLX [xi][yi] (xi = xPb + nSbW * i, yj = yPb + nSbH * j, i = 0, 1, 2,..., nPbW/nSbW - 1, j=0, 1, 2,..., nPbH/nSbH - 1) of each sub-block in the target PU (space sub-block prediction).

The time sub-block prediction candidate TSUB and the space sub-block prediction candidate SSUB that are described above are selected as one mode (merge candidate) of a merge mode.

Affine Prediction Unit

The affine prediction unit 30372 derives affine prediction parameters of the target PU. In the present embodiment, as the affine prediction parameters, motion vectors (mv0_x, mv0_y) (mv1_x, mv1_y) of two control points (V0, V1) of the target PU is derived. Specifically, the motion vectors of respective control points may be derived by predicting from the motion vector of the neighboring PU of the target PU, or the motion vectors of respective control points may be derived by the sum of the prediction vector derived as the motion vector of the control point and a difference vector derived from coded data.

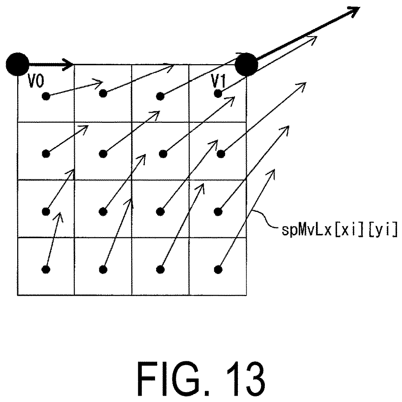

FIG. 13 is a drawing illustrating an example in which a motion vector spMvLX of each subblock constituting a target PU (nPbW x nPbH) is derived from the motion vector (mv0_x, mv0_y) of the control point V0, and the motion vector (mv1_x, mv1_y) of V1. As illustrate in the drawing, the motion vector spMvLX of each sub-block is derived as a motion vector for each point located at a center of each sub-block as illustrated in FIG. 13.

The affine prediction unit 30372 derives, based on the affine prediction parameters of the target PU, the motion vector spMvLX [xi][yi] (xi = xPb + nSbW * i, yj = yPb + nSbH * j, i = 0, 1, 2,..., nPbW/nSbW - 1, j=0, 1, 2,..., nPbH/nSbH - 1) of each sub-block in the target PU, by using the following equations.

spMvLX [xi][yi][0] = mv0_x + (mv1_x - mv0_x)/nPbW * (xi + nSbW/2) - (mv1_y - mv0_y)/nPbH * (yi + nSbH/2) spMvLX [xi][yi][1] = mv0_y + (mv1_y - mv0_y)/nPbW * (xi + nSbW/2) + (mv1_x - mv0_x)/nPbH * (yi + nSbH/2)

Here, xPb and yPb are upper left coordinates of the target PU, nPbW and nPbH are the width and height of the target PU, and nSbW and nSbH are the width and height of the sub-block.

Matching Prediction Unit 30373

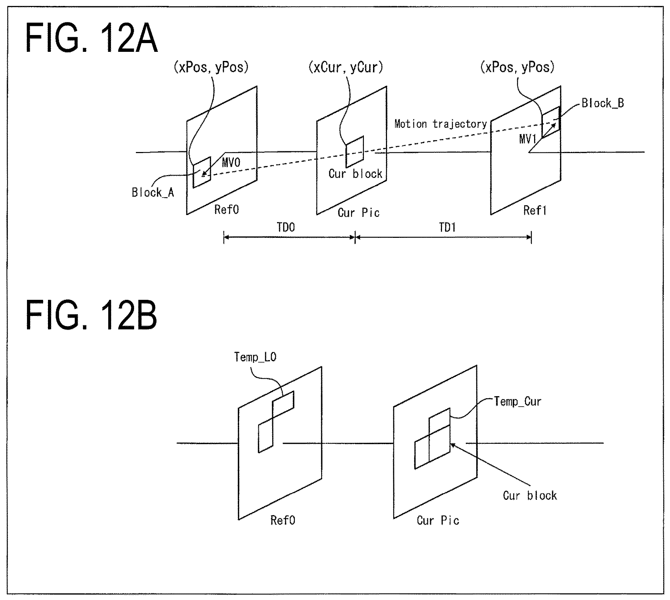

The matching prediction unit 30373 performs any matching process of bilateral matching and template matching to derive a motion vector spMvLX of each sub-block constituting the PU. FIGS. 12A and 12B are diagrams for illustrating Bilateral matching and Template matching, respectively. The matching prediction mode is selected as one merge candidate (matching candidate) of a merge mode.

The matching prediction unit 30373 assumes that an object performs uniform motion to derive the motion vector by matching of areas in multiple reference images. In the bilateral matching, a certain object is assumed to pass through an area of the reference image A, the target PU of the target picture Cur Pic, and an area of the reference image B by uniform motion, and the motion vector of the target PU is derived by matching between the reference images A and B. In the template matching, it is assumed that the motion vector of the neighboring area of the target PU is the same as the motion vector of the target PU, and a motion vector is derived by matching of the neighboring area of the target PU and the neighboring area of the reference block. The matching prediction unit partitions the target PU into multiple sub-blocks, and performs bilateral matching or template matching described below in units of sub-block obtained by the partitioning, to derive the motion vector spMvLX [xi][yi] (xi = xPb + nSbW * i, yj = yPb + nSbH * j, i = 0, 1, 2,..., nPbW/nSbW - 1, j=0, 1, 2,..., nPbH/nSbH - 1) of each sub-block.

As illustrated in FIG. 12A, in the bilateral matching, two reference images are referred to in order to derive the motion vector of the sub-block Cur_block in the target picture Cur_Pic. To be more specific, first, assuming that coordinates of the sub-block Cur_block are (xCur, yCur), a Block_A and a Block_B are configured, where the Block_A is an area in a reference picture (called as a reference picture A) specified by a reference picture index Ref0 and has upper left coordinates (xPos, yPos) specified by

$$(xPos, yPos) = (xCur + MV0\_x, yCur + MV0\_y), \text{ and}$$

the Block_B is an area in a reference picture (called as a reference picture B) specified by a reference picture index Ref1 and has upper left coordinates (xPos, yPos) specified by

$$(xPos, yPos) = (xCur - MV0\_x * TD1/TD0, yCur - MV0\_y * TD1/TD0).$$

In the above equation, TD0 and TD1 represent an inter-picture distance between the target picture Cur_Pic and the reference picture A, and an inter-picture distance between the target picture Cur_Pic and the reference picture B, respectively, as illustrated in FIG. 12A.

Next, (MVO_x, MV0_y) is determined such that a matching cost for the Block_A and Block_B is minimum. (MV0_x, MV0_y) derived in this way is the motion vector provided to the sub-block.

On the other hand, FIG. 12B illustrates Template matching in the above matching process.

As illustrated in FIG. 12B, in the template matching, one reference picture is referred to in order to derive a motion vector of the sub-block Cur_block in the target picture (Cur_Pic).

To be more specific, first, a Block_A is specified where the Block_A is an area in the reference picture (called as the reference picture A) specified by the reference picture index Ref0 and has upper left coordinates (xPos, yPos) specified by

$$(xPos, yPos) = (xCur + MV0\_x, yCur + MV0\_y).$$

In the above equation, (xCur, yCur) represent upper left coordinates of the sub-block Cur_block.

Next, a template region Temp_Cur neighboring to the sub-block Cur_block is configured in the target picture Cur_Pic and a template region Temp_L0 neighboring to the Block_A is configured in the reference picture A. In the example illustrated in FIG. 12B, the template region Temp_Cur is constituted by an area neighboring to an upper side of the sub-block Cur_block and an area neighboring to a left side of the sub-block Cur_block. The template region Temp_L0 is constituted by an area neighboring to an upper side of the Block_A and an area neighboring to a left side of the Block_A.

Next, (MV0_x, MV0_y) minimizing the matching cost of Temp_Cur and TempL0 is determined, and is set as a motion vector spMvLX to be given to the sub-block.

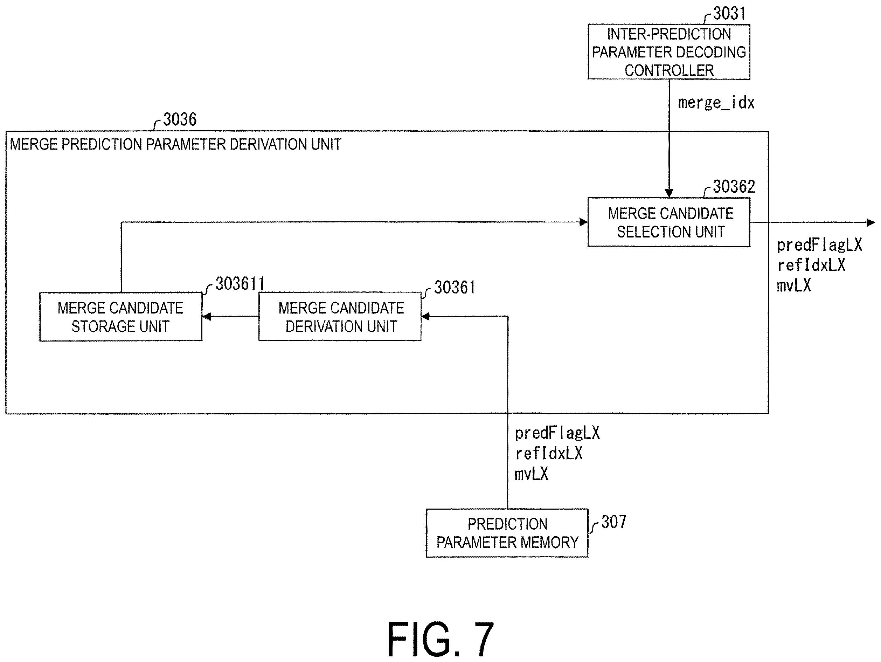

FIG. 7 is a schematic diagram illustrating a configuration of the merge prediction parameter derivation unit 3036 according to the present embodiment. The merge prediction parameter derivation unit 3036 includes a merge candidate derivation unit 30361 and a merge candidate selection unit 30362. The merge candidate storage unit 303611 stores therein merge candidates input from the merge candidate derivation unit 30361. The merge candidate is configured to include the prediction list utilization flag predFlagLX, the motion vector mvLX, and the reference picture index refIdxLX. The merge candidate stored in the merge candidate storage unit 303611 is assigned with an index according to a prescribed rule.

The merge candidate derivation unit 30361 uses, without change, a motion vector and reference picture index refIdxLX of a neighboring PU on which the decode processing has been already applied to derive the merge candidates. Affine prediction may be used as another way to derive the merge candidates. This method is described below in detail. The merge candidate derivation unit 30361 may use the affine prediction for spatial merge candidate derivation processing, temporal merging candidate derivation processing, combined merge candidate derivation processing, and zero merge candidate derivation processing which are described below. The affine prediction is performed in units of sub-blocks, and the prediction parameter is stored in the prediction parameter memory 307 for each sub-block. Alternatively, the affine prediction may be performed in units of pixels.

Spatial Merge Candidate Derivation Processing

In the spatial merge candidate derivation processing, the merge candidate derivation unit 30361 reads out the prediction parameter (prediction list utilization flag predFlagLX, motion vector mvLX, reference picture index refIdxLX) stored by the prediction parameter memory 307 according to a prescribed rule to derive the read-out prediction parameter as a merge candidate. The read-out prediction parameters are prediction parameters related to each of the PUs in a predefined range from the decoding target PU (e.g., all or some of PUs in contact with a lower left end, upper left end, and upper right end of the decoding target PU). The merge candidate derived by the merge candidate derivation unit 30361 is stored in the merge candidate storage 303611.

Temporal Merge Candidate Derivation Processing

In temporal merge candidate derivation processing, the merge candidate derivation unit 30361 reads out, as merge candidates, the prediction parameters for the PU in the reference image including coordinates on the lower right of the decoding target PU from the prediction parameter memory 307. As a method of specifying the reference image, the reference picture index refIdxLX specified in the slice header may be used, or a minimum one of the reference picture indices refIdxLX of the PUs neighboring to the decoding target PU may be used, for example. The merge candidate derived by the merge candidate derivation unit 30361 is stored in the merge candidate storage 303611.

Combined Merge Candidate Derivation Processing

In the combined merging derivation processing, the merge candidate derivation unit 30361 uses vectors and reference picture indices of two different derived merge candidates which are already derived and stored in the merge candidate storage unit 303611 as vectors for L0 and L1, respectively, to combine, and thus derives a combined merge candidate. The merge candidate derived by the merge candidate derivation unit 30361 is stored in the merge candidate storage unit 303611.

Zero Merge Candidate Derivation Processing

In the zero merge candidate derivation processing, the merge candidate derivation unit 30361 derives a merge candidate including a reference picture index refIdxLX of 0 and both an X component and Y component of 0 of a motion vector mvLX. The merge candidate derived by the merge candidate derivation unit 30361 is stored in the merge candidate storage 303611.

The merge candidate selection unit 30362 selects, as an inter-prediction parameter for the target PU, a merge candidate assigned with an index corresponding to the merge index merge_idx input from the inter-prediction parameter decoding controller 3031, among the merge candidates stored in the merge candidate storage unit 303611. The merge candidate selection unit 30362 stores the selected merge candidate in the prediction parameter memory 307 and outputs the candidate to the prediction image generation unit 308 (FIG. 5).

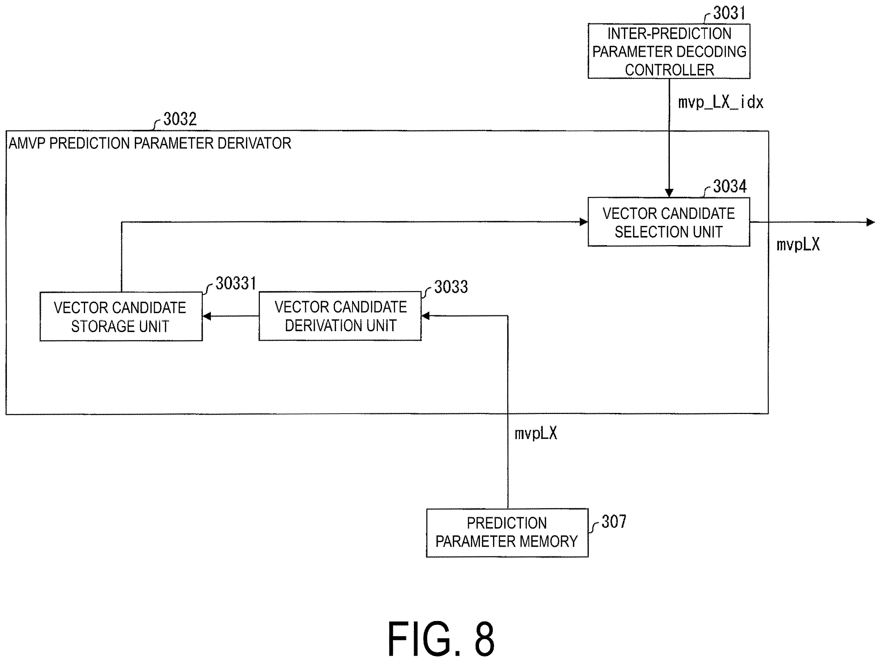

FIG. 8 is a schematic diagram illustrating a configuration of the AMVP prediction parameter derivation unit 3032 according to the present embodiment. The AMVP prediction parameter derivation unit 3032 includes the vector candidate derivation unit 3033 and the vector candidate selection unit 3034. The vector candidate derivation unit 3033 reads out the vector stored in the prediction parameter memory 307 as the prediction vector candidate mvpLX, based on the reference picture index refIdx. The read-out vector is a vector related to each of the PUs in a predefined range from the decoding target PU (e.g., all or some of PUs in contact with a lower left end, upper left end, and upper right end of the decoding target PU).

The vector candidate selection unit 3034 selects, as a prediction vector mvpLX, a vector candidate indicated by the prediction vector index mvp_LX_idx input from the inter-prediction parameter decoding controller 3031, among the vector candidates read out by the vector candidate derivation unit 3033. The vector candidate selection unit 3034 outputs the selected prediction vector mvpLX to the addition unit 3035.

The vector candidate storage unit 30331 stores therein the vector candidate input from the vector candidate derivation unit 3033. The vector candidate is configured to include the prediction vector mvpLX. The vector candidate stored in the vector candidate storage unit 30331 is assigned with an index according to a prescribed rule.

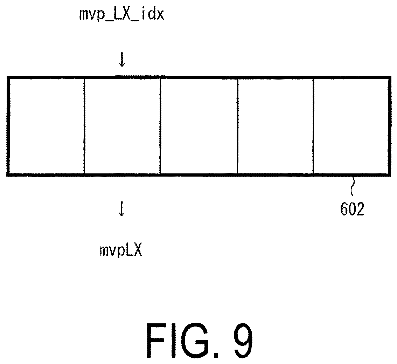

FIG. 9 is a conceptual diagram illustrating an example of the vector candidates. A prediction vector list 602 illustrated in FIG. 9 is a list constituted by multiple vector candidates derived by the vector candidate derivation unit 3033. In the prediction vector list 602, each of five rectangles horizontally aligned represents a prediction vector. A downward arrow immediately under "mvp_LX_idx" located at the second rectangle from the left end, and mvpLX under the arrow indicate that the prediction vector index mvp_LX_idx is an index referring to the vector mvpLX in the prediction parameter memory 307.

The vector candidates are generated based on vectors related to PUs referred to by the vector candidate selection unit 3034. Each PU referred to by the vector candidate selection unit 3034 may be a PU on which the decoding processing is completed, the PU being in a predefined range from the decoding target PU (e.g., neighboring PU). The neighboring PU includes a PU spatially neighboring to the decoding target PU such as a left PU and an upper PU, and an area temporally neighboring to the decoding target PU such an area which includes the same location as the decoding target PU and is obtained from the prediction parameters for the PU different in a display time.

The addition unit 3035 adds the prediction vector mvpLX input from the AMVP prediction parameter derivation unit 3032 and the difference vector mvdLX input from the inter-prediction parameter decoding controller 3031 to compute a motion vector mvLX. The addition unit 3035 outputs the computed motion vector mvLX to the prediction image generation unit 308 (FIG. 5).

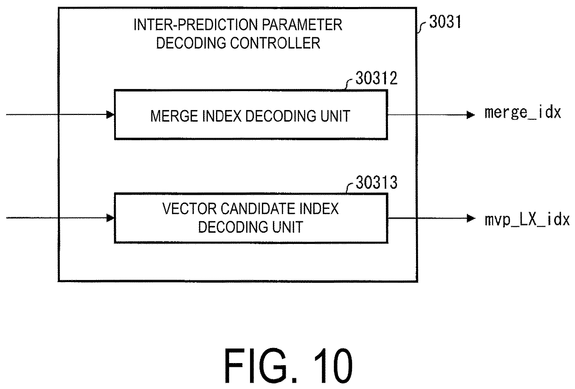

FIG. 10 is a schematic diagram illustrating a configuration of the inter-prediction parameter decoding controller 3031 according to the present embodiment. The inter-prediction parameter decoding controller 3031 is configured to include a merge index decoding unit 30312, a vector candidate index decoding unit 30313, and a not illustrated partition mode decoding unit, merge flag decoding unit, inter-prediction identifier decoding unit, reference picture index decoding unit, vector difference decoding unit, and the like. The partition mode decoding unit, the merge flag decoding unit, the merge index decoding unit, the inter-prediction identifier decoding unit, the reference picture index decoding unit, the vector candidate index decoding unit 30313, and the vector difference decoding unit decode respectively the partition mode part_mode, the merge flag merge_flag, the merge index merge_idx, the inter-prediction identifier inter_pred_idc, the reference picture index refIdxLX, the prediction vector index mvp_LX_idx, and the difference vector mvdLX.

Inter-Prediction Image Generation Unit 309

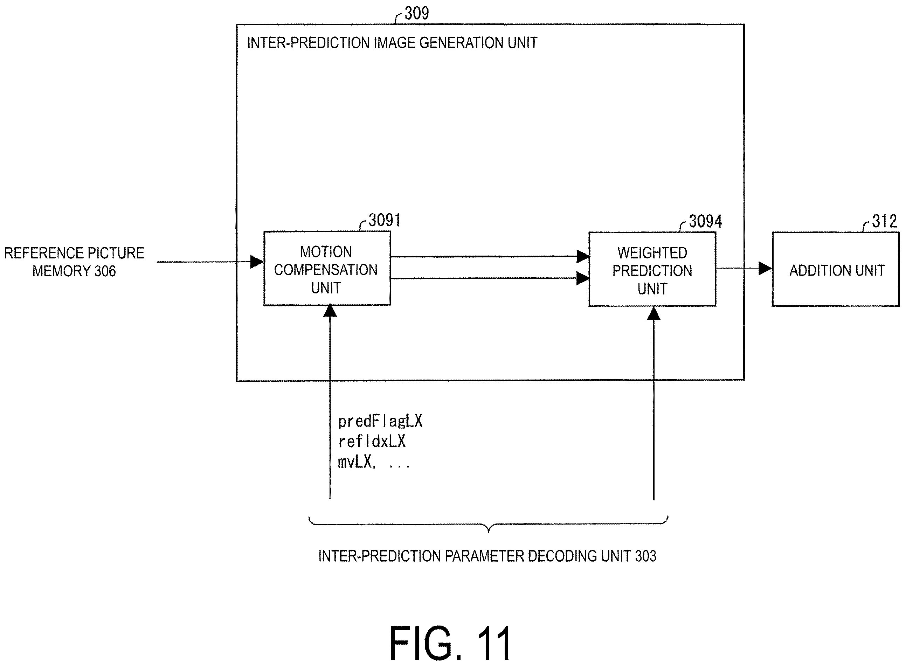

FIG. 11 is a schematic diagram illustrating a configuration of the inter-prediction image generation unit 309 according to the present embodiment. The inter-prediction image generation unit 309 is configured to include a motion compensation unit (prediction image generation device) 3091 and a weighted prediction unit 3094.

Motion Compensation

The motion compensation unit 3091 reads out from the reference picture memory 306 a block which is displaced by a motion vector mvLX from a starting point at a location of the decoding target PU in the reference picture specified by the reference picture index refIdxLX, based on the inter-prediction parameters input from the inter-prediction parameter decoding unit 303 (such as the prediction list utilization flag predFlagLX, the reference picture index refIdxLX, and the motion vector mvLX) to generate an interpolation image (a motion compensation image). Here, in a case that a precision of the motion vector mvLX is not an integer precision, a motion compensation image is generated by filtering called a motion compensation filter for generating a pixel at decimal position.

Hereinafter, an interpolation image of the PU derived based on the inter-prediction parameters is called a PU interpolation image, and an interpolation image derived based on the inter-prediction parameters for OBMC is called an OBMC interpolation image. In a case the OBMC processing is not performed, the PU interpolation image without change is the motion compensation image of the PU. In a case the OBMC processing is performed, the motion compensation image of the PU is derived from the PU interpolation image and the OBMC interpolation image.

Weighted Prediction

The weighted prediction unit 3094 multiplies an input motion compensation image predSamplesLX by weight coefficients to generate a prediction image of the PU. The input motion compensation image predSamplesLX in the case of the residual prediction is an image on which the residual prediction is applied. In a case that one of reference list utilization flags (predFlagL0 or predFlagL1) is 1 (that is, in a case of the uni-prediction) and the weighted prediction is not used, processing by the following equation is performed to conform the input motion compensation image predSamplesLX (LX is L0 or L1) to the number of pixel bits bitDepth.

predSamples [X][Y] = Clip3(0, (1 << bitDepth) - 1, (predSamplesLX [X][Y] + offset1) >> shift1) where shift1 = 14 - bitDepth, offset1 = 1 << (shift1-1).

In a case that both of the reference list utilization flags (predFlagL0 or predFlagL1) are 1 (that is, in a case of the bi-prediction BiPred) and the weighted prediction is not used, processing by the following equation is performed to average the input motion compensation images predSamplesL0 and predSamplesL1 to be conformed to the number of pixel bits.

predSamples [X][Y] = Clip3(0, (1 << bitDepth) - 1, (predSamplesL0 [X][Y] + predSamplesL1 [X][Y] + offset2) >> shift2)

where shift2 = 15 - bitDepth, offset2 = 1 << (shift2 - 1). Clip3 (a, b, c) is a function which clips c to a value equal to a or more and equal to b or less, and is a function which returns "a" in a case of c < a, "b" in a case of c > b, and "c" in other cases (where, a <= b).

Furthermore, in a case of the uni-prediction and that the weighted prediction is performed, the weighted prediction unit 3094 derives a weighted prediction coefficient w0 and an offset o0 from the coded data and performs processing by the following equation.

predSamples [X][Y] = Clip3(0, (1 << bitDepth) - 1, ((predSamplesLX [X][Y] * w0 + 2^(log2WD - 1)) >> log2WD) + o0) where log2WD represents a variable indicating a prescribed shift amount.

Further, in a case of the bi-prediction BiPred and that the weighted prediction is performed, the weighted prediction unit 3094 derives weighted prediction coefficients w0, w1, o0, and o1 from the coded data and performs processing by the following equation.

predSamples [X][Y] = Clip3 (0, (1 << bitDepth) - 1, (predSamplesL0 [X][Y] * w0 + predSamplesL1 [X][Y] * w1 + ((o0 + o1 + 1) << log2WD)) >> (log2WD + 1))

OBMC Processing

Outline of OBMC Processing

The motion compensation unit 3091 according to the present embodiment may generate the prediction image by using OBMC processing. Herein, Overlapped block motion compensation (OBMC) processing will be described. The OBMC processing is processing for generating the interpolation image (motion compensation image) of the target PU by using the interpolation image (PU interpolation image) generated using the inter-prediction parameter (hereinafter, motion parameter) added to the target PU, and the interpolation image (OBMC interpolation image) generated using a motion parameter of the neighboring PU of the target PU. Particularly, in a pixel (boundary pixel) within a target PU close to a boundary between the PUs, the OBMC interpolation image based on the motion parameter of the neighboring PU is used to perform processing for correcting the interpolation image of the target PU.

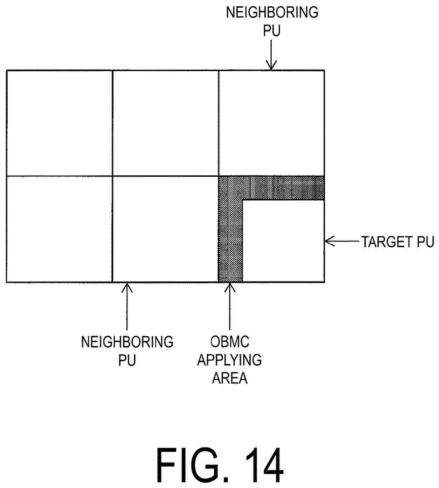

FIG. 14 is a diagram illustrating an example of an area for performing prediction image generation using the motion parameter of the neighboring PU according to the present embodiment. As illustrated in FIG. 14, in a case that the OBMC processing is applied to the prediction image generation, a pixel within a predetermined distance from the PU boundary illustrated by a solid black color is an application target of the OBMC processing.

Further, the shapes of the target PU and the neighboring PU are not necessarily the same, so that the OBMC processing is preferably performed in a sub-block unit obtained by partitioning the PU. The size of the sub-block can take various values from 4 x 4, 8 x 8 to PU size. At this time, in the boundary pixel of the sub-block, OBMC interpolation image generation and correction processing using a motion parameter of a neighboring sub-block are referred to as OBMC processing.

Interpolation Image Generation

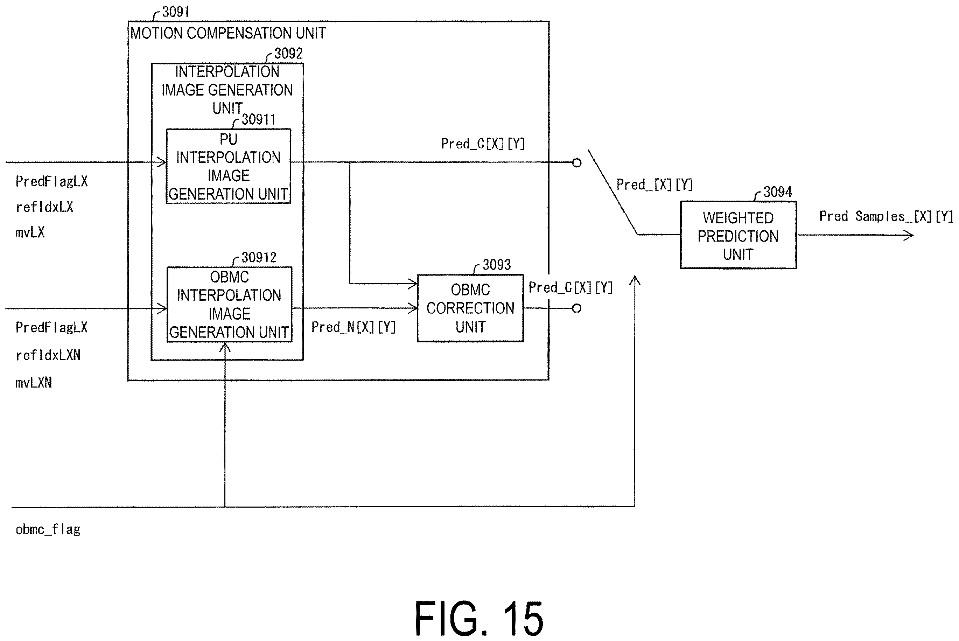

FIG. 15 is a block diagram illustrating main components of a motion compensation unit 3091 included in an inter-prediction image generation unit 309 which performs the OBMC processing according to the present embodiment. As illustrated in FIG. 15, the motion compensation unit 3091 includes an interpolation image generation unit 3092 (PU interpolation image generation unit 30911 and OBMC interpolation image generation unit 30912) and an OBMC correction unit 3093.

The interpolation image generation unit 3092 derives an interpolation image based on the inter-prediction parameter (prediction list utilization flag predFlagLX, reference picture index refIdxLX, motion vector mvLX, and OBMC flag obmc_flag).

The PU interpolation image generation unit 30911 generates a PU interpolation image Pred_C [x][y] (x = 0 ... nPbW - 1, y = 0...nPbH - 1) based on a prediction list utilization flag predFlagLX [xPb][yPb], a reference picture index refIdxLX [xPb][yPb], and a motion vector mvLX [xPb][yPb] inputted from the inter-prediction parameter decoding unit 303. The PU interpolation image generation unit 30911 transmits the generated PU interpolation image Pred_C [x][y] to the OBMC correction unit 3093. Further, (xPb, yPb) are the upper left coordinates of the PU, and nPbW, nPbH are widths and heights of the PU. Further, herein, a suffix C represents "current".

In other words, the interpolation image is generated by applying motion information of a target prediction unit (PU) to a sub-block on a reference image corresponding to a target sub-block.

Moreover, the OBMC interpolation image generation unit 30912 generates an OBMC interpolation image Pred_N [x][y] (x = 0..nPbW - 1, y = 0..nPbH - 1) based on obmc_ flag, a prediction list utilization flag predFlagLX [xNb][yNb], a reference picture index refIdxLXN [xNb][yNb] of a neighboring block, and a motion vector mvLXN [xNb][yNb] of the neighboring block inputted from the inter-prediction parameter decoding unit 303. In other words, an additional interpolation image is generated by applying motion information of the neighboring sub-block which neighbors the target sub-block to the sub-block on the reference image corresponding to the target sub-block. The OBMC interpolation image generation unit 30912 transmits the generated OBMC interpolation image Pred_N [x][y] to the OBMC correction unit 3093. Further, (xNb, yNb) represent positions of the neighboring sub-block of the PU. Further, herein, a suffix N represents "neighbour".

Further, in the above description, the PU interpolation image generation unit 30911 and the OBMC interpolation image generation unit 30912 are distinguished. However, the PU interpolation image generation unit 30911 and the OBMC interpolation image generation unit 30912 perform processing for generating the interpolation images from the motion parameter. Therefore, one means for performing both processing is prepared, so that the means may perform these processing.

In a case that the motion vector mvLX or the motion vector mvLXN inputted to the interpolation image generation unit 3092 does not have integer precision, but has 1/M pixel precision (M is a natural number equal to or larger than 2), the interpolation image generation unit 3092 (PU interpolation image generation unit 30911 and OBMC interpolation image generation unit 30912) generates an interpolation image from a pixel value of a reference image of an integer-pixel position by an interpolation filter.

In a case that the motion vector mvLX does not have integer precision, the interpolation image generation unit 3092 generates the above-mentioned PU interpolation image Pred_C [x][y] or OBMC interpolation image Pred_N [x][y] from a filter coefficient mcFilter [nFrac][k] (k = 0..NTAP - 1) of an NTAP tap corresponding to a phase nFrac, and a product-sum operation of a pixel of the reference image.

Specifically, the interpolation image generation unit 3092 generates the interpolation image by using, as an input parameter, the upper left coordinates (xb, yb) of a prediction block (PU or sub-block), sizes (nW, nH), the motion vector mvLX, a reference image reflmg (reference picture indicated by reference picture index refIdxLXP), an interpolation filter coefficient mcFilter [], and the number of taps NTAP of the interpolation filter.

In derivation of the PU interpolation image Pred_C [x][y], the interpolation image generation unit 3092 uses, as an input parameter, (xb, yb) = (xPb, yPb), (nW, nH) = (nPbW, nPbH), mvLX = motion vector mvLXC of target PU (target sub-block), the reference image reflmg, a motion vector precision M, and the number of taps NTAP. Further, in a case of partitioning the PU into a sub-block for processing, (xb, yb) = (xPb + nSbW * i, yPb + nSbH * j) (herein, i = 0, 1, 2, ...nPbW/nSbW - 1, j = 0, 1, 2, ...nPbH/nSbH - 1), (nW, nH) = (nSbW, nSbH), mvLXP = mvLX = the motion vector mvLXN of the neighboring sub-block, the reference image reflmg = a reference picture indicated by the reference picture index refIdxLXN of the neighboring sub-block, the motion vector precision M, and the number of taps NTAP are used as a parameter. In derivation of the OBMC interpolation image Pred_N [x][y], the interpolation image generation unit 3092 uses, as an input parameter, (xb, yb) = (xPb + nSbW * i, yPb + nSbH * j) (herein, i = 0, 1, 2, ...nPbW/nSbW - 1, j = 0, 1, 2, ...nPbH/nSbH - 1), (nW, nH) = (nSbW, nSbH), mvLXP = mvLXN, the reference image reflmg, the motion vector precision M, and the number of taps NTAP.

The interpolation image generation unit 3092 primarily derives integer positions (xInt, yInt) and phases (xFrac, yFrac) corresponding to coordinates (x, y) within the prediction block by the following formulas.

$$xInt = xb + (mvLX\,[0] >> (\log2(M))) + x$$

$$xFrac = mvLX\,[0]\ \&\ (M - 1)$$

$$yInt = yb + (mvLX\,[1] >> (\log2(M))) + y$$

$$yFrac = mvLX\,[1]\ \&\ (M - 1)$$

Herein, x = 0...nW - 1, y = 0...nH - 1, and M represent precision (1/M pixel precision) of the motion vector mvLX.

That is, as illustrated in the above formulas, the interpolation image generation unit 3092 applies the motion information of the target prediction unit (PU) to the sub-block on the above-mentioned reference image corresponding to the target sub-block.

The interpolation image generation unit 3092 derives a temporary image temp [][] by performing vertical interpolation processing by using the interpolation filter with respect to the reference image reflmg (following Σ is a sum related to k of k = 0...NTAP - 1, and shift1 is a normalization parameter for adjusting a range of a value).

temp [x][y] = (ΣmcFilter [yFrac][k] * reflmg [xInt][yInt + k - NTAP/2 + 1] + offset1) >> shift1

Subsequently, the interpolation image generation unit 3092 derives an interpolation image Pred [][] by performing horizontal interpolation processing to the temporary image temp [][] (following Σ is a sum related to k of k = 0...NTAP - 1, and shift2 is a normalization parameter for adjusting a range of a value).

Pred [x][y] = (ΣmcFilter[xFrac] [k] * temp [xInt + k - NTAP/2 + 1] [yInt] + offset2) >> shift2

Example of Filter Coefficient

Next, in a motion vector precision M = 4, an example of interpolation filters mcFilterN2, mcFilterN4, mcFilterN6, and mcFilterN8 corresponding to each number of taps of NTAP = 2, 4, 6, and 8 is illustrated. Further, the filter coefficient is not limited to this.

```
mcFilterN8 [] = {
{0, 0, 0, 64, 0, 0, 0, 0},
{-1, 4, -10, 58, 17, -5, 1, 0},
{-1, 4, -11, 40, 40, -11, 4, -1},
{0, 1, -5, 17, 58, -10, 4, -1}
```

```
        }
mcFilterN6 [] = {
{0, 0, 64, 0, 0, 0},
{2, -8, 56, 18, -6, 2},
{2, -10, 40, 40, -10, 2},
{2, -6, 18, 56, -8, 2},
}
mcFilterN4 [] = {
{0, 64, 0, 0},
{-4, 54, 16, -2},
{-4, 36, 36, -4},
{-2, 16, 54, -4}
}
mcFilterN2 [] = {
{64, 0},
{48, 16},
{32, 32},
{16, 48}
}
```

Further, in a case that the OBMC processing is not performed, only the PU interpolation image generation unit 30911 may be configured to perform processing.

Weighted Average

In a configuration for performing the OBMC processing, the above-mentioned OBMC correction unit 3093 generates or corrects a prediction image Pred_ [x][y] by performing weighted average processing to the received OBMC interpolation image Pred_N [x][y] and PU interpolation image Pred_C [x][y]. To describe in detail, in a case that the OBMC flag obmc_flag inputted from the inter-prediction parameter decoding unit 303 is 1 (OBMC processing is valid), the OBMC correction unit 3093 performs the weighted average processing represented by the following formula.

Prediction image Pred_ [x][y] = ((w1 * PU interpolation image Pred_C [x][y] + w2 * OBMC interpolation image Pred_N [x][y]) + o) >> shift

Herein, weights w1, w2 in the weighted average processing will be described. The weights w1, w2 in the weighted average processing are determined in accordance with a distance (number of pixels) of a target pixel from the PU boundary. A shift value shift may be changed or fixed in accordance with a distance.

Hereinafter, description will be given on generation of the prediction image Pred_ [x][y] in a case that nObmcW and nObmcH which are OBMC processing sizes are 4 pixels.

In a case that the shift value is changed in accordance with a distance, {w1, w2, o, shift} = {3, 1, 2, 2}, {7, 1, 4, 3}, {15, 1, 8, 4}, {31, 1, 16, 5} may be adopted, for example. In this case, the prediction image Pred_[x][y] is generated by the following formulas.

Pred_ [x][y] = (3 * Pred_C [x][y] +1 * Pred_N [x][y] + 2) >> 2 distance = 0 pixels Pred_ [x][y] = (7 * Pred_C [x][y] + 1 * Pred_N [x][y] + 4) >> 3 distance = 1 pixel Pred_ [x][y] = (15 * Pred_C [x][y] + +1 * Pred_N [x][y] + +8) >> 4 distance = 2 pixels Pred_ [x][y] = (31 * Pred_C [x][y] + +1 * Pred_N [x][y] + 16) >> 5 distance = 3 pixels

Moreover, in a case that the shift value is fixed without being related to a distance, {w1, w2} = {24, 8}, {28, 4}, {30, 2}, {31, 1}, o = 16, shift = 5 may be adopted, for example. In this case, the prediction image Pred_ [x][y] is generated by the following formulas.

Pred_ [x][y] = (24 * Pred_C [x][y] + +8 * Pred_N [x][y] + 16) >> 5 distance = 0 pixels Pred_ [x][y] = (28 * Pred_C [x][y] + 4 * Pred_N [x][y] + 16) >> 5 distance = 1 pixels Pred_ [x][y] = (30 * Pred_C [x][y] + +2 * Pred_N [x][y] + 16) >> 5 distance = 2 pixels Pred_ [x][y] = (31 * Pred_C [x][y] + +1 * Pred_N [x][y] + 16) >> 5 distance = 3 pixels

Further, Pred_ [x][y] generated from the above-mentioned formulas in the case that the shift value is changed in accordance with a distance is equivalent to Pred_ [x][y] generated from the above-mentioned formulas in the case that the shift value is fixed without being related to a distance.

Moreover, in a case that nObmcW and nObmcH which are OBMC processing sizes are 2 pixels, the prediction image Pred_ [x][y] is generated as follows.

In the case that the shift value is changed in accordance with a distance, {w1, w2, o, shift} = {3, 1, 2, 2}, {7, 1, 4, 3} may be adopted, for example. In this case, the prediction image Pred_ [x][y] is generated by the following formulas.

Pred_ [x][y] = (3 * Pred_C [x][y] +1 * Pred_N [x][y] + 2) >> 2 distance = 0 pixels Pred_ [x][y] = (7 * Pred_C [x][y] + 1 * Pred_N [x][y] + 4) >> 3 distance = 1 pixel

Moreover, in the case that the shift value is fixed without being related to a distance, {w1, w2} = {24, 8}, {28, 4}, o = 16, shift = 5 may be adopted, for example. In this case, the prediction image Pred_ [X][Y] is generated by the following formulas.

Pred_ [x][y] = (24 * Pred_C [x][y] + +8 * Pred_N [x][y] + 16) >> 5 distance = 0 pixels Pred_ [x][y] = (28 * Pred_C [x][y] + 4 * Pred_N [x][y] + 16) >> 5 distance = 1 pixels

In the OBMC processing, the prediction image is generated using a motion parameter of a plurality of neighboring PUs (PU neighboring at the above, left, bottom, and right of the target PU). Herein, an outline of a method of generating Pred_ [x][y] from the motion parameter of the plurality of neighboring PUs will be described.

First, the OBMC correction unit 3093 generates the prediction image Pred_ [x][y] by applying the PU interpolation image Pred_C [x][y] and the OBMC interpolation image Pred_N [x][y] created using the motion parameter of the PU neighboring at the above of the target PU to the above-mentioned formulas.

Prediction image Pred_ [x][y] = ((w1 * prediction image Pred_C [x][y] + w2 * OBMC interpolation image Pred_N [x][y]) + o) >> shift

Next, the OBMC correction unit 3093 corrects the prediction image Pred_ [x][y] by using the OBMC interpolation image Pred_N [x][y] created using the motion parameter of the PU neighboring at the left of the target PU and the previously generated prediction image Pred_ [x][y]. That is, the correct is performed by the following formula.

Prediction image Pred_ [x][y] = ((w1 * prediction image Pred_ [x][y] + w2 * OBMC interpolation image Pred_N [x][y]) + o) >> shift

Similarly, the OBMC correction unit 3093 corrects the prediction image Pred_ [x][y] by using the OBMC interpolation image Pred_N [x][y] created using the motion parameter of the PU neighboring at the bottom and right of the target PU. The OBMC correction unit 3093 generates Pred_N [x][y] as the OBMC interpolation image created using the motion parameter of the PU neighboring at the bottom of the target PU, and corrects the prediction image Pred_ [x][y] by the following formula.

Prediction image Pred_ [x][y] = ((w1 * prediction image Pred_ [x][y] + w2 * OBMC interpolation image Pred_N [x][y]) + o) >> shift

The OBMC correction unit 3093 generates Pred_N [x][y] as the OBMC interpolation image created using the motion parameter of the PU neighboring at the right of the target PU, and corrects the prediction image Pred_ [x][y] by the following formula.

Prediction image Pred_ [x][y] = ((w1 * prediction image Pred_ [x][y] + w2 * OBMC interpolation image Pred_N [x][y]) + o) >> shift

According to the above configuration, the motion compensation unit 3091 generates an additional interpolation image by using the motion parameter of the PU neighboring the target PU. Then, the motion compensation unit 3091 can generate the prediction image by using the generated interpolation image. Therefore, a prediction image having high prediction precision can be generated.

Moreover, the size of the sub-block targeted for the OBMC processing may be any size (4 × 4 PU size). Moreover, a partition manner of the PU including the sub-block targeted for the OBMC processing may be any partition manner such as 2N × N, N × 2N, and N × N.

Flow of OBMC Processing

Next, a flow of the OBMC processing according to the present embodiment will be described.

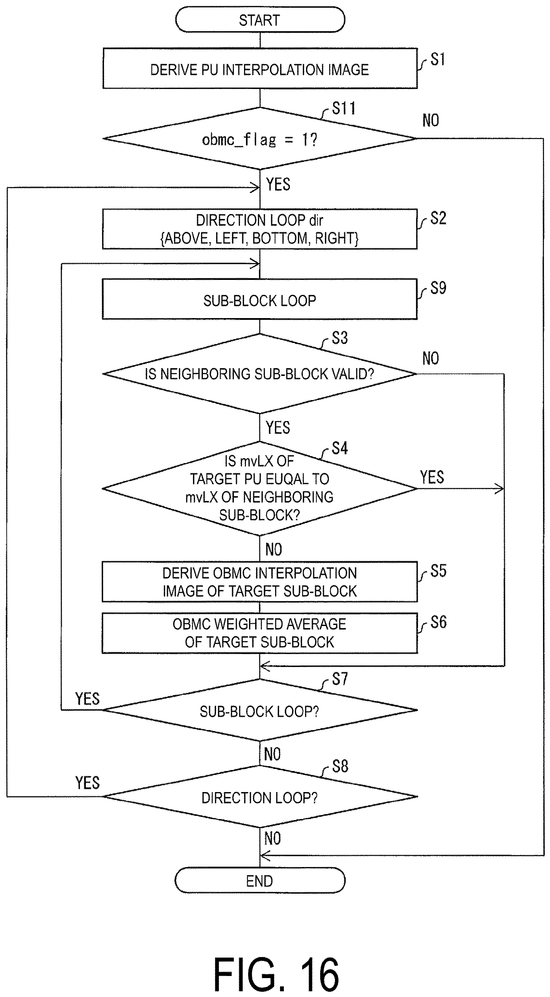

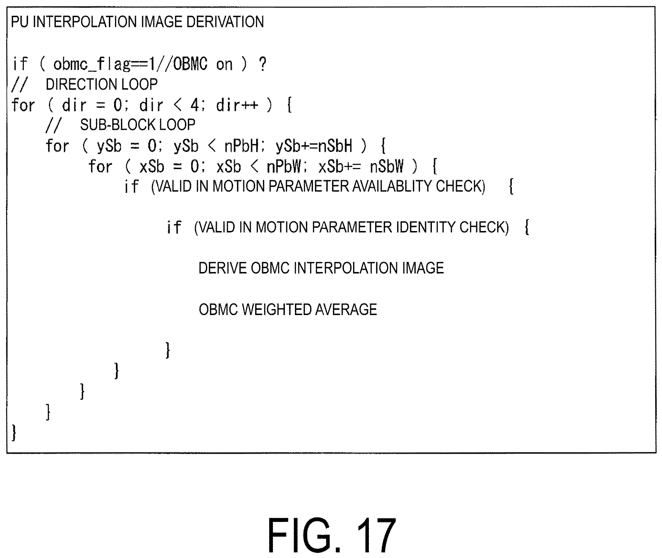

FIG. 16 is a flowchart illustrating a processing flow of the motion compensation unit 3091 according to the present embodiment. Moreover, FIG. 17 illustrates a pseudo-code which represents the OBMC processing.

The interpolation image generation unit 3092 derives the PU interpolation image Pred_C [x][y] (S1). Moreover, the interpolation image generation unit 3092 receives obmc_flag, and in a case that obmc_flag indicates 1, the interpolation image generation unit 3092 proceeds to a step of deriving the OBMC interpolation image Pred_N [x][y].

Further, in the case that the OBMC flag obmc_flag is 0, the interpolation image generation unit 3092 does not perform the OBMC processing, and the PU interpolation image Pred_C [x][y] becomes the prediction image Pred_ [x][y].

Further, in a case that the target CU is partitioned into 2N × 2N partition and the prediction mode is a merge mode (including a skip mode), an entropy decoding unit 301 does not decode the OBMC flag obmc_flag from coded data, and derives a value (1) indicating the OBMC is valid. That is, in a case that the target CU has 2N × 2N and the merge mode, the OBMC processing is constantly turned ON.

The motion compensation unit 3091 receives an OBMC flag obmc_flag and determines whether the OBMC flag obmc_flag is 1 (S11). In a case that obmc_flag is 1, that is, the OBMC is turned ON (YES in S11), the interpolation image generation unit 3092 and the OBMC correction unit 3093 perform loop processing in each direction dir of the above, left, bottom, and right (S2). A value of a direction included in a direction set dirSet (dirSet = {above, left, bottom, right}) to a loop variable dir of a direction loop is sequentially set, so that loop processing is performed (terminal end of loop is S8). Further, a value of 0, 1, 2, and 3 is allocated to the above, left, bottom, and right, and then dirSet = {0, 1, 2, 3} may undergo processing. Additionally, the interpolation image generation unit 3092 and the OBMC correction unit 3093 perform loop processing to each sub-block constituting the PU (S9). That is, in S9, a sub-block performing the OBMC processing is set. Loop variables of a sub-block loop are set to coordinates (xSb, ySb), and the interpolation image generation unit 3092 and the OBMC correction unit 3093 sequentially set a coordinate of the sub-block within the PU, and perform loop processing (terminal end of loop is S7). Further, in a case that OBMC is not turned ON (NO in S11), processing is ended.

Hereinafter, in a case that the direction dir of the neighboring sub-block set by S2 and the sub-block of the coordinate set by S9 satisfy conditions of S3 and S4 during the loop, the interpolation image generation unit 3092 generates the OBMC interpolation image Pred_N [x][y] used for generation and correct of the prediction image Pred_[x][y] (S5), and corrects the prediction image in the OBMC correction unit 3093 (S6).

The sub-block loop processing will be described in detail. The OBMC interpolation image generation unit 30912 determines whether or not a prediction parameter of the neighboring sub-block positioned in the direction dir of the target sub-block is valid (S3). Further, in a case that the direction dir is the above, left, bottom, and right, each of positions (xNb, yNb) of the neighboring sub-block referring to the motion parameter is set to (xSb, ySb - 1), (xSb - 1, ySb), (xSb, ySb + nSbH), and (xSb + nSbW, ySb). Herein, (xSb, ySb) represent the upper left coordinates of the sub-block, and nSbW, nSbH represent widths and heights of the sub-block.

To describe S3 in detail, the OBMC interpolation image generation unit 30912 determines whether or not the motion parameter of the neighboring sub-block of the directions is available (valid). For example, in a case that the prediction mode of the neighboring sub-block is set to intra-prediction, the neighboring sub-block is outside the frame, or the motion parameter of the neighboring sub-block is unknown, the OBMC interpolation image generation unit 30912 determines that the motion parameter of the neighboring sub-block cannot be available. In other words, in a case that the prediction mode of the neighboring sub-blocks (xNb, yNb) is a mode other than the intra-prediction, the positions (xNb, yNb) of the neighboring sub-blocks are in the frame, and a parameter (for example, reference picture index is other than -1) indicating the motion parameter of the neighboring sub-blocks (xNb, yNb) is known, the OBMC interpolation image generation unit 30912 determines that the motion parameter of the neighboring sub-blocks can be available. Moreover, in a case that the neighboring sub-block is an intra-block copy PU, the neighboring sub-block maintains the motion parameter, but the OBMC interpolation image generation unit 30912 may determine that the motion parameter cannot be available. Herein, "valid" represents a case that the motion parameter is determined to be available.

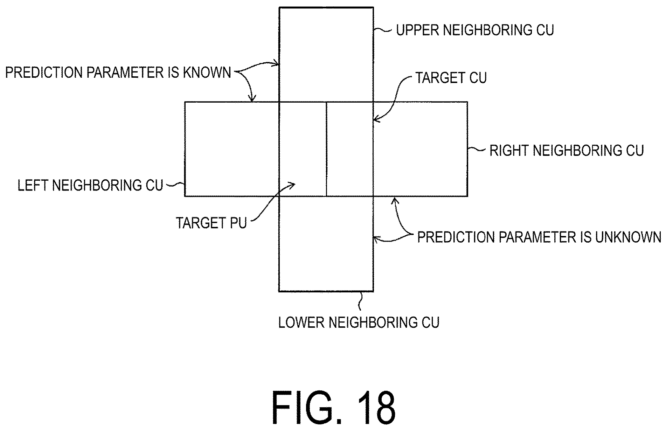

The case that the motion parameter of the neighboring sub-block is unknown will be described in detail with reference to FIG. 18. FIG. 18 is a diagram describing whether or not the motion parameter of the neighboring sub-block is unknown. As illustrated in FIG. 18, in a case where the motion parameter of each CU is derived, for example, by a Z scan order in units of the CU, the motion parameter of the PU included in a neighboring CU already processed (above and left neighboring CU) is known. However, the motion parameter of the PU included in the CU before processing (bottom and right neighboring CU) is unknown. Further, the motion parameter of the PU within the same CU is derived at the same time. Therefore, within the same CU, the motion parameter of the PU neighboring at the left, above, right, and bottom is known. In other words, in a CU boundary, the OBMC processing may be performed using only the motion parameter of the PU neighboring at the left and above. On the other hand, in a PU boundary, the OBMC processing is performed using the motion parameter of the PU neighboring at the left, above, right, and bottom.

Hereinafter, in the present invention, a boundary of the sub-block (PU) is distinguished into the CU boundary and the PU boundary as follows.

CU boundary: Of boundaries between the target sub-block and the neighboring sub-block, in a case that the CU including the target sub-block and the CU including the neighboring sub-block belong to a different CU, the boundary is referred to as the CU boundary. For example, in FIG. 18, the boundary between the target PU and the above neighboring CU and the boundary between the target PU and the right neighboring CU are the CU boundary.

PU boundary: Of boundaries between the target sub-block and the neighboring sub-block, boundaries other than the CU boundary (CU including target sub-block and CU neighboring sub-block belong to the same CU) are referred to as the PU boundary. For example, in FIG. 18, the boundary between the target PU and the PU on the right of the target PU is the PU boundary.

In a case that the neighboring sub-block is valid (Yes in S3), the OBMC interpolation image generation unit 30912 determines whether or not the motion parameter of the neighboring sub-blocks (xNb, yNb) is identical to the motion parameter of the target sub-block (S4). Herein, in a case that the motion parameter is different, DiffMotionAvail is set to 1, and in a case that the motion parameter is identical, DiffMotionAvail is set to 0. On the contrary, in a case that the neighboring sub-block is not valid (NO in S3), identity determination processing (S4), the OBMC interpolation image generation (S5), and prediction image correction (S6) are omitted and transferred to next sub-block processing (S7).

To describe S4 in detail, for example, the OBMC interpolation image generation unit 30912 may use a motion vector as the moving parameter used in the identity determination. In this case, determination is made on whether or not the motion vector mvLXN of the neighboring sub-blocks (xNb, yNb) is identical to the motion vector mvLX of the target sub-block.

The OBMC interpolation image generation unit 30912 may also determine based on the reference picture index in addition to the motion vector as the moving parameter used in the identity determination.

In a case that the motion vectors of the target sub-block are (mvLX [0], mvLX [1]), the reference picture index is (refIdxLX), the motion vectors of the neighboring sub-block are (mvLXN [0], mvLXN [1]), and the reference picture index is (refIdxLXN), and in a case that the motion vector or the reference picture index is different from the target sub-block and the neighboring sub-block, the OBMC interpolation image generation unit 30912 performs configuration of DiffMotionAvail = 1, and the OBMC interpolation image generation unit 30912 determines that the motion parameter is different (No in S4).

In the case that the identity determination of the motion parameter is represented by a formula, where

DiffMotionAvail = (mvLX [0] != mvLXN [0]) || (mvLX [1] != mvLXN [1]) || (refIdxLX != refIdxLXN), in a case that the motion parameter is different, where DiffMotionAvail = 1.

Moreover, in a case that the motion vector and the reference picture index are identical to the target sub-block and the neighboring sub-block, where DiffMotionAvail = 0. In this case, the OBMC interpolation image generation unit 30912 determines that the motion parameter is identical (YES in S4).

Picture Order Count (POC) may be used as the motion parameter used in the identity determination instead of the reference picture index. In this case, in a case that the motion vector or the POC is different from the target sub-block and the neighboring sub-block, the OBMC interpolation image generation unit 30912 performs configuration of DiffMotionAvail = 1, and the OBMC interpolation image generation unit 30912 determines that the motion parameter is different (NO in S4).

In the case that the identity determination of the motion parameter is represented by a formula, where

DiffMotionAvail = (mvLX [0] != mvLXN [0]) || (mvLX [1] != mvLXN [1]) || (refPOC != refPOCN)

Herein, refPOC and refPOCN are the POC of the reference image of the target sub-block and the neighboring sub-block.

In a case that the motion parameter of the neighboring sub-block is not identical to the motion parameter of the target sub-block (NO in S4), the OBMC interpolation image generation unit 30912 generates (derives) the OBMC interpolation image Pred_N [x][y] of the target sub-block (S5), the OBMC correction unit 3093 generates or corrects the prediction image Pred_ [x][y] by using the OBMC interpolation image Pred_N [x][y] of the target sub-block and the PU interpolation image Pred_C [x][y] (S6). On the contrary, in a case that the motion parameter is identical (YES in S4), generation of the OBMC interpolation image Pred_N of the target sub-block and prediction image correction using the OBMC interpolation image Pred_N are omitted and transferred to next sub-block processing (S7).

To describe S5 in detail, the OBMC interpolation image generation unit 30912 generates (derives) the OBMC interpolation image Pred_N [x][y] by using the motion parameter of the neighboring sub-block. For example, assume that the upper left coordinates of the target sub-block are set to (xSb, ySb), and the sub-block sizes are set to nSbW, nSbH. Herein, in a case that the prediction mode is not the sub-block prediction (processing is performed without portioning PU), the OBMC interpolation image generation unit 30912 configures, to 4 pixels, nObmcW indicating a width of the OBMC processing size and nObmcH indicating a height of the OBMC processing size. Moreover, in a case that the prediction mode is the sub-block prediction, the OBMC interpolation image generation unit 30912 configures, to 2 pixel, nObmcW and nObmcH which are the OBMC processing sizes.

In a case of dir == above, the OBMC interpolation image generation unit 30912 refers to the motion parameter of sub-blocks (xNb, yNb) = (xSb, ySb - 1) neighboring at the above of the sub-block, and derives an interpolation image of a block of sizes (nSbW, nObmcH) for setting (xSb, ySb) to the upper left coordinates.

Moreover, in a case of dir == left, the OBMC interpolation image generation unit 30912 refers to the motion parameter of sub-blocks (xNb, yNb) = (xSb - 1, ySb) neighboring at the left of the sub-block, and derives an interpolation image of a block of sizes (nObmcW, nSbH) for setting (xSb, ySb) to the upper left coordinates.

Moreover, in a case of dir == bottom, the OBMC interpolation image generation unit 30912 refers to the motion parameter of sub-blocks (xNb, yNb) = (xSb, ySb + nSbH) neighboring at the bottom of the sub-block, and derives an interpolation image of a block of sizes (nSbW, nObmcH) for setting (xSb, ySb + nSbH - nObmcH) to the upper left coordinates.

Moreover, in a case of dir == right, the OBMC interpolation image generation unit 30912 refers to the motion parameter of sub-blocks (xNb, yNb) = (xSb + nSbW, ySb) neighboring at the right of the sub-block, and derives an interpolation image of a block of sizes (nObmcW, nSbH) for setting (xSb + nSbW - nObmcW, ySb) to the upper left coordinates.

The above processing can be represented in a pseudo-code as follows. In the pseudo-code, interpolation image generation processing of a reference image refPic, coordinates (xb, yb), sizes nW, nH, and a motion vector mvRef is represented by Interpolation (refPic, xb, yb, nW, nH, mvRef). Herein, the motion parameter of the coordinates (xb, yb) is referred in mvLX [x][y], and refIdxLX [x][y].

nObmcW = nObmcH = (PU is not sub-block) ? 4 : 2

if (dir == above)

mvRef = mvLX [xSb] [ySb - 1], refPic = refIdxLX [xSb] [ySb - 1]

predN = Interpolation (refPic, xSb, ySb, nSbW, nObmcH, mvRef)

else if (dir == left)

mvRef = mvLX [xSb - 1] [ySb], refPic = refIdxLX [xSb - 1] [ySb]

predN = Interpolation (refPic, xSb, ySb, nObmcW, nSbH, mvRef)

else if (dir == bottom)

mvRef = mvLX [xSb] [ySb + nSbH], refPic = refIdxLX [xSb] [ySb + nSbH]

predN = Interpolation (refPic, xSb, ySb + nSbH - nObmcH, nSbW, nObmcH, mvRef) else if (dir == right)

mvRef = mvLX [xSb + nSbW] [ySb], refPic = refIdxLX [xSb + nSbW] [ySb]

predN = Interpolation (refPic, xSb + nSbW - nObmcW, ySb, nObmcW, nSbH, mvRef)

Next, the OBMC correction unit 3093 performs weighted average processing referring to the target sub-block OBMC interpolation image Pred_N [x][y] and the PU interpolation image Pred_C [x][y], and generates or corrects the prediction image Pred_ [x][y] (S6).

To describe S6 in detail, the OBMC correction unit 3093 performs weighted average processing referring to the OBMC interpolation image Pred_N [x][y] and the PU interpolation image Pred_C [x][y] in accordance with a distance from a boundary between the neighboring sub-blocks. The weighted average processing is performed as follows.

$$Pred\_ [x][y] = Pred\_C [x][y]$$

In a case of dir == above, where i = 0... nSbW - 1, j = 0... nObmcH - 1, the OBMC correction unit 3093 drives the prediction image Pred_ [x][y] from the following formulas.

$$x = xSb + i, \ y = ySb + j$$

$$Pred\_ [x][y] = (w1 * Pred\_ [x][y] + w2 * Pred\_N [i][j] + o) >> shift$$

$$w1 = weightObmc [j], \ w2 = (1 << shift) - w1, \ o = (1 << (shift - 1))$$

Moreover, in a case of dir == left, where i = 0... nObmcW - 1, j = 0.. nSbH - 1, the OBMC correction unit 3093 drives the prediction image Pred_ [x][y] from the following formulas.

$$x = xSb + i, \ y = ySb + j$$

$$Pred\_ [x][y] = (w1 * Pred\_ [x][y] + w2 * Pred\_N [i][j] + o) >> shift$$

$$w1 = weightObmc\ [i],\ w2 = (1 << shift) - w1,\ o = (1 << (shift - 1))$$

Moreover, in a case of dir == bottom, where i = 0... nSbW - 1, j = 0... nObmcH - 1, the OBMC correction unit 3093 drives the prediction image Pred_ [x][y] from the following formulas.

$$x = xSb + i,\ y = ySb + nSbH - nObmcH + j$$

$$Pred\_\ [x][y] = (w1 * Pred\_\ [x][y] + w2 * Pred\_N\ [i][j] + o) >> shift$$

w1 = weightObmc [nObmcH - 1 - j], w2 = (1 << shift) - w1, o = (1 << (shift - 1))

Moreover, in a case of dir == right, where i = 0... nObmcW - 1, j = 0... nSbH - 1, the OBMC correction unit 3093 drives the prediction image Pred_ [x][y] from the following formulas.

$$x = xSb + nSbW - nObmcW + i,\ y = ySbH + j$$

$$Pred\_\ [x][y] = (w1 * Pred\_\ [x][y] + w2 * Pred\_N\ [i][j] + o) >> shift$$

w1 = weightObmc [nObmcW - 1 - i], w2 = (1 << shift) - w1, o = (1 << (shift - 1))

As mentioned above, a weight is configured in accordance with a distance (number of pixels) from the boundary, and a weight table weightObmc may be set as follows.

$$weightObmc\ [] = \{24,\ 28,\ 30,\ 31\},\ shift = 5$$

$$w1\ [i] = weightObmc\ [i],\ w2 = (1 << shift) - w1$$

$$Pred\_\ [x][y] = (w1 * Pred\_\ [x][y] + w2 * Pred\_N\ [i][j] + o) >> shift$$

$$weightObmc\ [] = \{8,\ 4,\ 2,\ 1\},\ shift = 5$$

$$w1\ [i] = weightObmc\ [i],\ w2 = (1 << shift) - w1$$

$$Pred\_\ [x][y] = (w2 * Pred\_\ [x][y]] + w1 * Pred\_N\ [i][j] + o) >> shift$$

Next, the motion compensation unit 3091 determines whether or not there is an unprocessed sub-block out of sub-blocks of an OBMC processing target (S7).

In a case that there is no unprocessed sub-block in the PU (NO in S7), the motion compensation unit 3091 determines whether or not the OBMC processing of S3 to S6 is performed using the motion parameter of the neighboring sub-block on all directions of the target PU (S8). That is, determination is made on whether processing is performed on all directions included in the direction set dirSet.

In a case that the OBMC processing is performed using the motion parameter of the neighboring sub-block on all directions (NO in S8), processing is ended.

Further, in a case that there is an unprocessed sub-block in the PU (YES in S7), processing proceeds to S9, and processing of the next sub-block is continued. Moreover, in a case that the OBMC processing is not performed using the motion parameter of the neighboring sub-block on all directions (YES in S8), processing proceeds to S2, and processing of the next direction is performed.

Further, in a case of obmc_flag = 0, where PRED_ [][] = PRED_C [][].

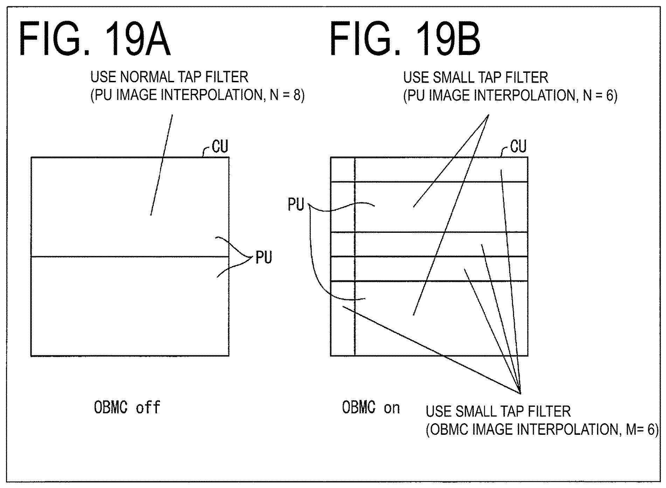

The image decoding device 31 according to the present embodiment will be described in more details with reference to FIGS. 19A to 37C.

The OBMC processing needs to perform motion interpolation of each PU (generation of a PU interpolation image), as well as, OBMC interpolation (generation of an OBMC interpolation image) by using motion information of a neighboring PU in an area neighboring the boundary of each PU. Thus, the processing uses up a large memory bandwidth for accessing image data. The configuration of the image decoding device 31 according to the following embodiment (simplification of the OBMC processing) can decrease the memory bandwidth.

OBMC Processing Using

Small Tap Filter 1

The image decoding device 31 according to the present embodiment will be described below.

The motion compensation unit 3091 according to the present embodiment (prediction image generation device) generates a prediction image by referring to a reference image. The motion compensation unit 3091 generates a prediction image for a target sub-block. The motion compensation unit 3091 includes a PU interpolation image generation unit (interpolation image generation unit) 30911 that generates a PU interpolation image (interpolation image) by applying a motion parameter (motion information) of a target PU and filter processing to a sub-block on the reference image corresponding to the target sub-block.

The motion compensation unit 3091 further includes an OBMC interpolation image generation unit (additional interpolation image generation unit) 30912 that generates an OBMC interpolation image (additional interpolation image) by applying a motion parameter of a neighboring sub-block that neighbors a target sub-block and filter processing to a sub-block on a reference image corresponding to the target sub-block.

Furthermore, the motion compensation unit 3091 includes an OBMC correction unit (prediction unit) 3093 that generates a prediction image in a case that the OBMC processing for generating a prediction image from a PU interpolation image and an OBMC interpolation image is ON (first mode).

In a case that the first mode is selected, the PU interpolation image generation unit 30911 and the OBMC interpolation image generation unit 30912 perform processing, each using a filter with a smaller number of taps compared with a case that the OBMC processing OFF is selected where a prediction image is generated only by using a PU interpolation image (second mode).

According to the above-described configuration, in a case that the first mode is selected, the PU interpolation image generation unit 30911 and the OBMC interpolation image generation unit 30912 perform filter processing with a smaller number of taps compared with the one in a case that the second mode is selected. In this way, the memory bandwidth for accessing image data can be decreased.

An example of the processing of the motion compensation unit 3091 according to the present embodiment will be described with reference to FIGS. 19A to 21.

FIGS. 19A and 19B are diagrams illustrating an overview of the filter processing that the motion compensation unit 3091 of the present embodiment (the PU interpolation image generation unit 30911 and the OBMC interpolation image generation unit 30912) performs.

FIG. 19A illustrates filter processing for PUs in a case that the OBMC processing is OFF, while FIG. 19B illustrates filter processing for PUs in a case that the OBMC processing is ON. As illustrated in FIG. 19A, in a case that the OBMC processing is OFF, the PU interpolation image generation unit 30911 generates a PU interpolation image by using a filter with a normal number of taps N, such as N = 8. Then, no OBMC interpolation image is generated. In other words, a prediction image is generated using only a PU interpolation image.

Whereas, as illustrated in FIG. 19B, in a case that the OBMC processing is ON, the PU interpolation image generation unit 30911 generates a PU interpolation image by using a filter with a smaller number of taps Nobmc than the number of taps in a case that the OBMC processing is OFF, for example, a filter of Nobmc = 6, and the OBMC interpolation image generation unit 30912 generates an OBMC interpolation image by using a smaller number of taps M than the number of taps in a case that the OBMC processing is OFF (a normal number of taps). For example, a filter of M = 6 is used and OBMC interpolation image is generated.

Note that, in a case that the OBMC processing is ON, the motion compensation unit 3091 may use filters with smaller numbers of taps, Nobmc and M, to generate a PU interpolation image and an OBMC interpolation image (Nobmc < N, M < N) compared with a filter with the number of taps N that is used for generating a PU interpolation image in a case that the OBMC processing is OFF, provided, however, the numbers of taps of filters used in a case that the OBMC processing is ON or OFF are not particularly limited to the above examples.

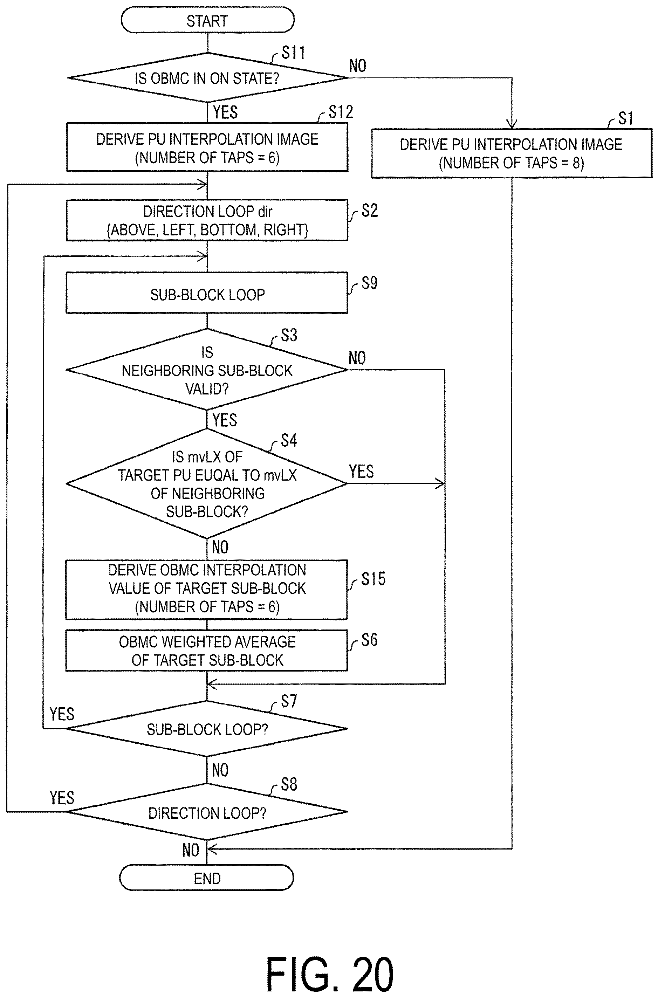

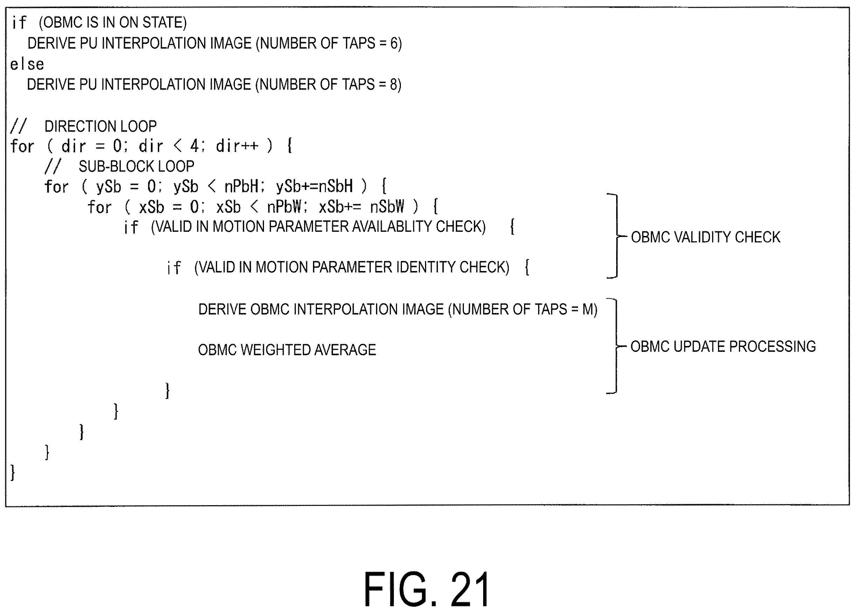

FIG. 20 is a flowchart illustrating the flow of the processing of the inter-prediction image generation unit 309 according to the present embodiment. FIG. 21 is a pseudo-code indicating the processing of the inter-prediction image generation unit 309 according to the present embodiment.

In the flow of the processing illustrated in FIG. 20, steps that differ from those in the processing flow of the motion compensation unit 3091 illustrated in FIG. 16 are indicated by different numbers from those of FIG. 16. In the following paragraphs, only the steps that differ from those in the processing flow of the motion compensation unit 3091 illustrated in FIG. 16 will be described.

The motion compensation unit 3091 receives the OBMC flag obmc_flag, and determines whether the OBMC flag obmc_flag is 1 (S11). In a case that obmc_flag is 1, namely, the OBMC is ON (YES at S11), the PU interpolation image generation unit 30911 interpolates using a filter with the number of taps Nobmc (for example, 6) and derives a PU interpolation image Pred_C [x][y] (S12). Next, the processing of S2 to S4 will be performed. In a case that the motion vector mvLXN of a neighboring sub-block is not the same as the motion vector mvLX of a target sub-block (NO at S4), the OBMC interpolation image generation unit 30912 interpolates using a filter with the number of taps M (for example, 6) and derives an OBMC interpolation image Pred_N [x][y] (S15). S6 follows next.

In a case that obmc_flag is 0, namely, the OBMC is OFF (NO at S11), the PU interpolation image generation unit 30911 interpolates using a filter with the number of taps N (for example, 8) and derives a PU interpolation image Pred_C [x][y] (S1). In this case, the PU interpolation image Pred_C [x][y] becomes a prediction image Pred_[x][y].

OBMC Processing Using Small Tap Filter 2

Next, another image decoding device 31 according to the present embodiment will be described below.

The motion compensation unit 3091 according to the present embodiment (prediction image generation device) generates a prediction image by referring to a reference image. The motion compensation unit 3091 generates a prediction image for a target sub-block. The motion compensation unit 3091 includes a PU interpolation image generation unit (interpolation image generation unit) 30911 that generates a PU interpolation image (interpolation image) by applying a motion parameter (motion information) of a target PU and filter processing to a sub-block on a reference image corresponding to the target sub-block.

The motion compensation unit 3091 further includes an OBMC interpolation image generation unit (additional interpolation image generation unit) 30912 that generates an OBMC interpolation image (additional interpolation image) by applying a motion parameter of a neighboring sub-block that neighbors a target sub-block and filter processing to a sub-block on the reference image corresponding to the target sub-block.

Furthermore, the motion compensation unit 3091 includes an OBMC correction unit (prediction unit) 3093 that generates a prediction image in a case that the OBMC processing for generating a prediction image from a PU interpolation image and an OBMC interpolation image is ON (first mode). In a case that the OBMC processing ON (first mode) is selected, the OBMC interpolation image generation unit 30912 configures the number of taps of a filter that is used for generating an OBMC interpolation image smaller than the number of taps of a filter used for generating a PU interpolation image.

According to the above-described configuration, in a case that the first mode is selected, the OBMC interpolation image generation unit 30912 configures the number of taps M of a filter that is used in the OBMC interpolation processing smaller than the number of taps N of a filter used in the PU interpolation processing. In this way, the memory bandwidth for accessing image data can be decreased.

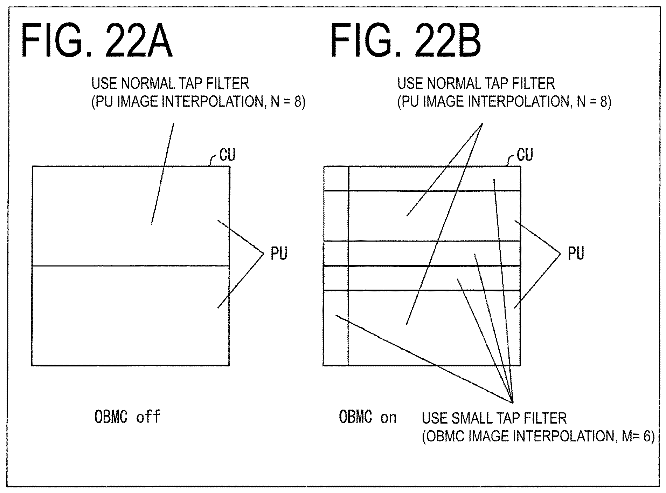

An example of the processing of the motion compensation unit 3091 according to the present embodiment will be described with reference to FIGS. 22A to 24.

FIGS. 22A and 22B are diagrams illustrating an overview of the filter processing that the motion compensation unit 3091 according to the present embodiment (the PU interpolation image generation unit 30911 and the OBMC interpolation image generation unit 30912) performs.

FIG. 22A illustrates filter processing for PUs in a case that the OBMC processing is OFF, while FIG. 22B illustrates filter processing for PUs in a case that the OBMC processing is ON. As illustrated in FIG. 22A, in a case that the OBMC processing is OFF, the PU interpolation image generation unit 30911 generates a PU interpolation image by using a filter with the number of taps for a PU interpolation image, such as N = 8. Whereas, as illustrated in FIG. 22B, in a case that the OBMC processing is ON, the PU interpolation image generation unit 30911 generates a PU interpolation image by using a filter with the number of taps N for a PU interpolation image. In addition, the OBMC interpolation image generation unit 30912 generates an OBMC interpolation image by using a filter with the number of taps M for an OBMC interpolation image, which satisfies M < N, such as M = 6.

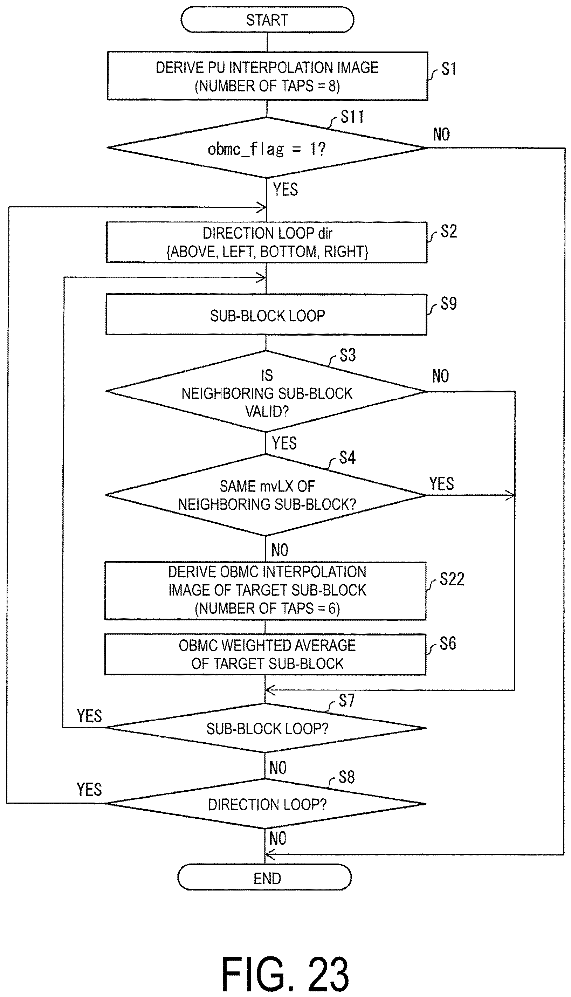

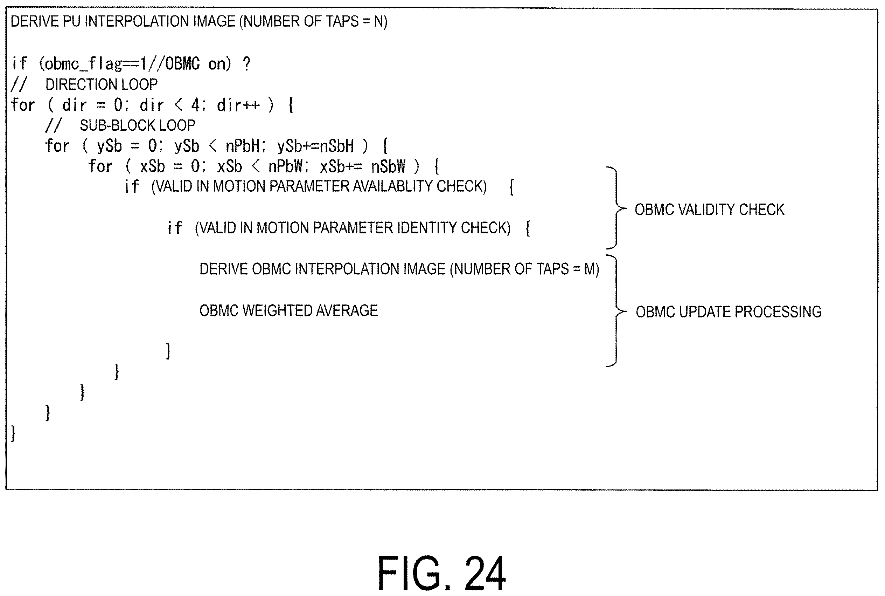

Note that, in a case that the OBMC processing is ON, the OBMC interpolation image generation unit 30912 may configure the number of taps M of a filter used for the OBMC interpolation processing smaller than the number of taps N of a filter used for the PU interpolation processing. The number of taps of a filter used for the PU interpolation processing and the number taps of a filter used for the OBMC interpolation processing are not limited to the above-described examples. FIG. 23 is a flowchart illustrating the flow of the processing of the motion compensation unit 3091 according to the present embodiment. FIG. 24 is a pseudo-code illustrating the processing of the motion compensation unit 3091 according to the present embodiment.

In the flow of the processing illustrated in FIG. 23, a step that differs from those in the processing flow of the motion compensation unit 3091 illustrated in FIG. 16 is indicated by a different number from those of FIG. 16. In the following paragraph, only the step that differs from those in the processing flow of the motion compensation unit 3091 illustrated in FIG. 16 will be described.

A different step from those of FIG. 16 is the following step. In a case that the motion vector mvLXN of a neighboring sub-block is different from the motion vector mvLX of a target sub-block or a reference image of the neighboring sub-block and a reference image of the target sub-block are different (NO at S4), the OBMC interpolation image generation unit 30912 derives an OBMC interpolation image Pred_N [x][y]. At this time, the number of taps of a filter for generating an OBMC interpolation image is configured as M (for example, 6) (S22).

Small Size OBMC Processing

Next, another image decoding device 31 according to an embodiment of the claimed invention will be described below.

The motion compensation unit 3091 according to the present embodiment (prediction image generation device) generates a prediction image by referring to a reference image. The motion compensation unit 3091 generates a prediction image by performing any of inter-frame predictions of uni-prediction and bi-prediction.

The motion compensation unit 3091 includes an interpolation image generation unit (image generation unit) 3092 that generates a PU interpolation image (interpolation image) that is acquired by applying motion information of a target PU and filter processing to a PU on the above-described reference image corresponding to the target PU, as well as, an obmc interpolation image (additional interpolation image) that is acquired by applying motion information of a neighboring PU and filter processing to pixels in a boundary area of PUs on the above-described reference image corresponding to the target PU.

The motion compensation unit 3091 further includes an OBMC correction unit (prediction unit) 3093 that generates a prediction image by referring to a PU interpolation image and an OBMC interpolation image for the above-described boundary area.

The interpolation image generation unit 3092 configures a boundary area narrower in a case that a prediction image is generated by bi-prediction (Bipred) than in a case that a prediction image is generated by uni-prediction.

Note that, although in this example bi-prediction is exemplified as high load processing, high load processing is not limited to bi-prediction. Thus, the above-described configuration can be rephrased as follows. The interpolation image generation unit 3092 configures a boundary area narrower in a case that a prediction image is generated by the OBMC processing under environment where another high load processing is performed, compared with a case that a prediction image is generated by the OBMC processing under environment where high load processing is not performed.

According to the above-described configuration, the interpolation image generation unit 3092 configures a boundary area narrower in a case that a prediction image is generated by bi-prediction (Bipred) than in a case that a prediction image is generated by uni-prediction. In this way, the memory bandwidth for accessing image data can be decreased.

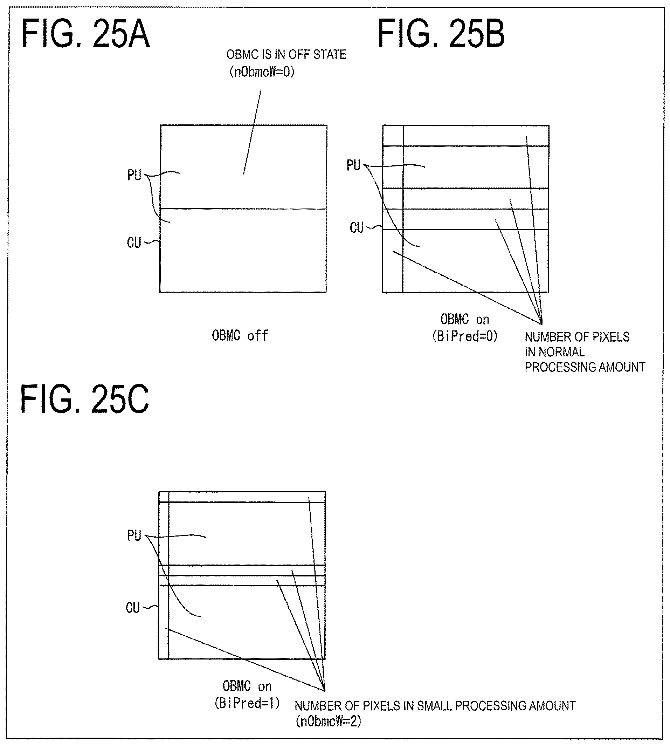

An example of the processing of the motion compensation unit 3091 according to the present embodiment will be described with reference to FIGS. 25A to 27.

FIGS. 25A to 25C are diagrams illustrating an overview of the processing of the motion compensation unit 3091 according to the present embodiment. FIG. 25A illustrates the size of an area where the OBMC processing is performed for PUs in a case that the OBMC processing is OFF. FIG. 25B illustrates the size of an area where the OBMC processing is performed for PUs in a case that the OBMC processing is ON and Bipred is OFF. FIG. 25C illustrates the size of an area where the OBMC processing is performed for PUs (a boundary area size) in a case that the OBMC processing is ON and Bipred is ON. As illustrated in FIG. 25A, in a case that the OBMC processing is OFF, the motion compensation unit 3091 (OBMC interpolation image generation unit 30912) configures the OBMC processing size nObmcW and nObmcH to 0 pixels. In other words, the OBMC processing is not performed. As illustrated in FIG. 25B, in a case that the OBMC processing is ON and Bipred is OFF (Bipred = 0), the OBMC interpolation image generation unit 30912 configures the OBMC processing size nObmcW and nObmcH to nObmcW0 and nObmcHO. In this example, nObmcW0 and nObmcHO are configured to the number of pixels other than 0, for example, 4 pixels. Further, in a case that the OBMC processing is ON and Bipred is ON, the OBMC interpolation image generation unit 30912 configures the OBMC processing size nObmcW and nObmcH to nObmcW1 and nObmcH1. For example, nObmcW1 and nObmcH1 are configured to 2 pixels.

Note that the OBMC processing size that is configured for bi-prediction or uni-prediction is not particularly restricted, as long as an OBMC processing area is configured narrower in a case that a prediction image is generated by bi-prediction (Bipred), compared with a case that a prediction image is generated by uni-prediction. In other words, without restriction to the above examples, the OBMC processing size nObmcW1 and nObmcH1 in a case that Bipred is ON and the OBMC processing size nObmcW0 and nObmcHO in a case that Bipred is OFF, may be configured to satisfy nObmcW1 < nObmcW0 and nObmcH1 < nObmcHO.

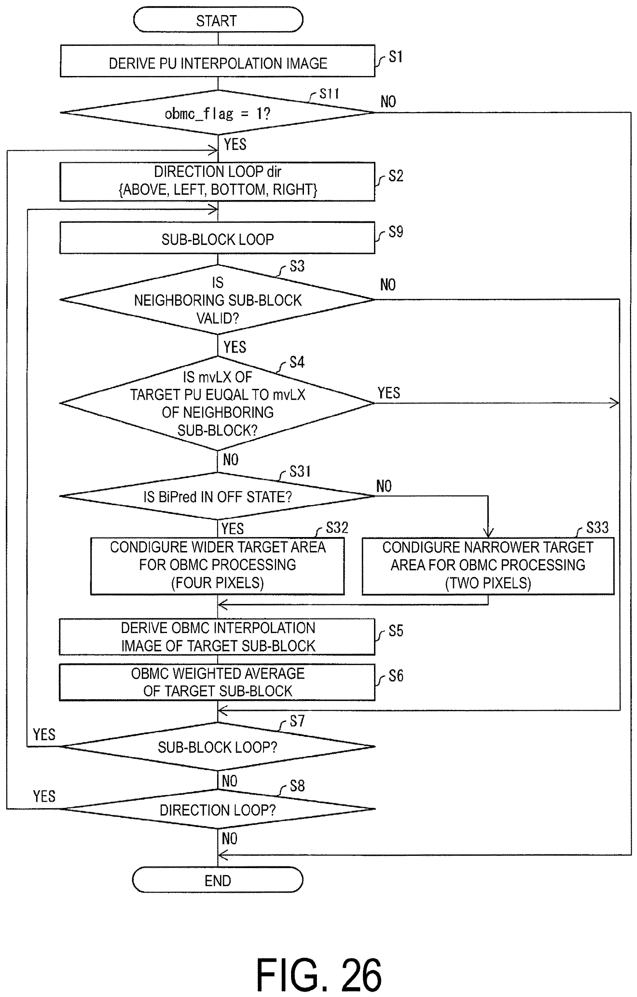

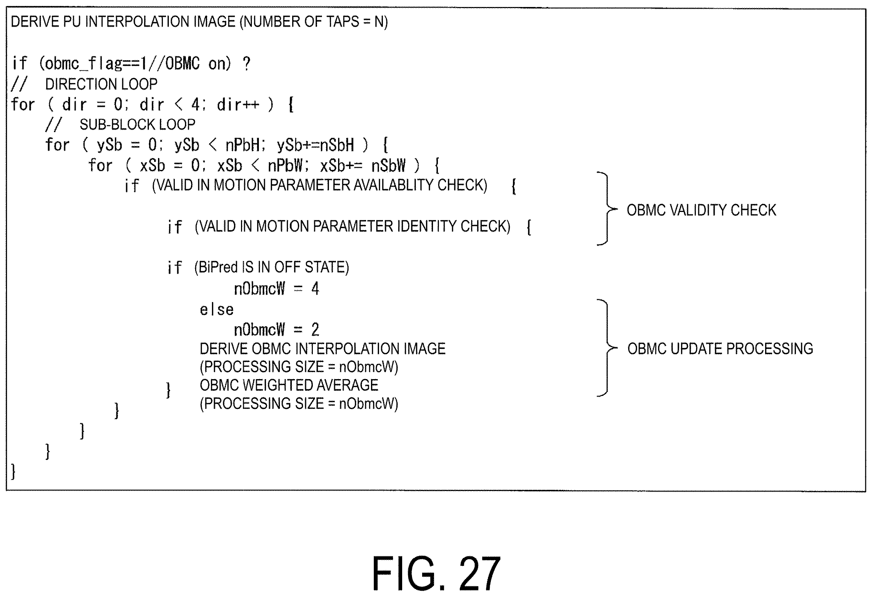

FIG. 26 is a flowchart illustrating a processing flow of the motion compensation unit 3091 according to the present embodiment. FIG. 27 is a pseudo-code illustrating the processing of the motion compensation unit 3091 according to the present embodiment.

In the processing flow illustrated in FIG. 26, steps that differ from those in the processing flow of the inter-prediction image generation unit 309 illustrated in FIG. 16 are indicated by different numbers from those of FIG. 16. In the following paragraphs, only the steps that differ from those in the processing flow of the motion compensation unit 3091 illustrated in FIG. 16 will be described.

In a case that the motion vector mvLXN of a neighboring sub-block is different from the motion vector mvLX of a target sub-block or a reference image of the neighboring sub-block and a reference image of the target sub-block are different (NO at S4), the OBMC interpolation image generation unit 30912 determines whether bi-prediction is OFF (S31).

In a case that bi-prediction is OFF (YES at S31), the OBMC interpolation image generation unit 30912 configures an OBMC processing target area wider (for example, nObmcW0 = nObmcHO = 4 pixels) (S32). Alternatively, in a case that bi-prediction is ON (NO at S31), the OBMC interpolation image generation unit 30912 configures an OBMC processing target area narrower (for example, nObmcW1 = nObmcH1 = 2 pixels) (S33).

Note that prediction may be performed using three or more reference images. In such a case, multiple reference prediction Pred is used instead of bi-prediction BiPred.

One-Dimensional OBMC Processing

Next, another motion compensation unit 3091 according to the present embodiment will be described below.

The motion compensation unit 3091 according to the present embodiment (prediction image generation device) includes an inter-prediction image generation unit (prediction image generation unit) 309 that generates a prediction image by performing any one of inter predictions of uni-prediction and bi-prediction.

The motion compensation unit 3091 includes a PU interpolation image generation unit (interpolation image generation unit) 30911 that generates a PU interpolation image (interpolation image) by applying motion information of a target PU and filter processing to a PU on the above-described reference image corresponding to the target PU. The motion compensation unit 3091 further includes an OBMC interpolation image generation unit (availability check unit) 30912 that checks availability of motion information, in each neighboring direction, in a PU that neighbors a target PU in the neighboring direction. The OBMC interpolation image generation unit 30912 generates an OBMC interpolation image (additional interpolation image) by applying motion information that is determined as available and filter processing to a PU on the above-described reference image corresponding to the target PU.

Further, the inter-prediction image generation unit 309 includes an OBMC correction unit (prediction unit) 3093 that generates a prediction image by referring to a PU interpolation image and an OBMC interpolation image.

The OBMC interpolation image generation unit 30912 configures the number of neighboring directions smaller in a case that a prediction image is generated by bi-prediction than in a case that a prediction image is generated by uni-prediction. In other words, the OBMC interpolation image generation unit 30912 restricts the neighboring sub-blocks to be referred to.

According to the above-described configuration, the OBMC interpolation image generation unit 30912 configures the number of times of OBMC processing smaller in a case that a prediction image is generated by bi-prediction than in a case that a prediction image is generated by uni-prediction. In this way, the memory bandwidth for accessing image data can be decreased.

In the present embodiment (the one-dimensional OBMC processing), the OBMC interpolation image generation unit 30912 does not refer to a neighboring block in every direction of a PU. In other words, the OBMC interpolation image generation unit 30912 refers only to neighboring blocks in a limited portion of directions of a PU.

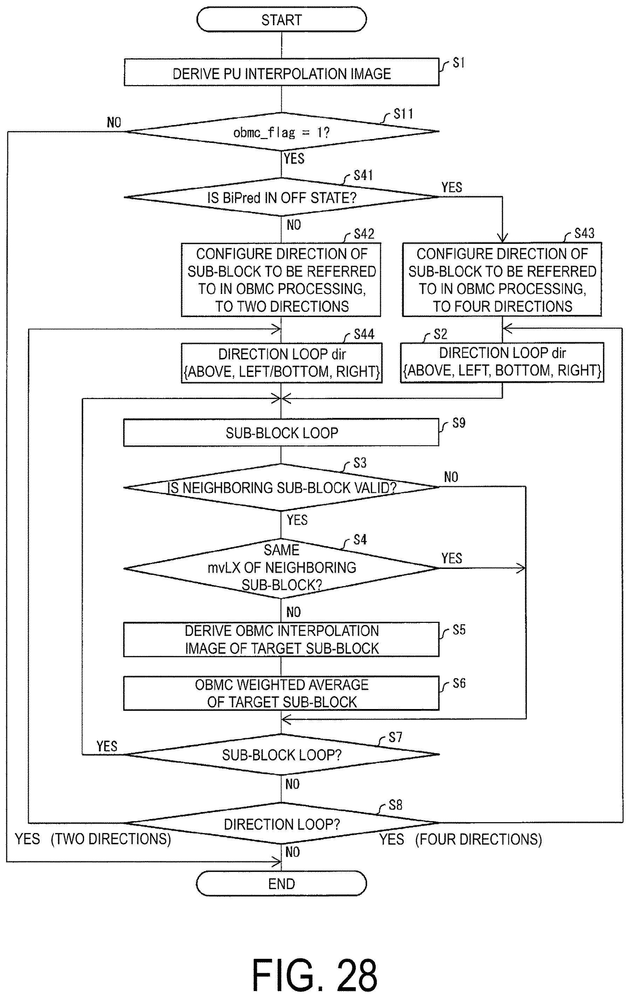

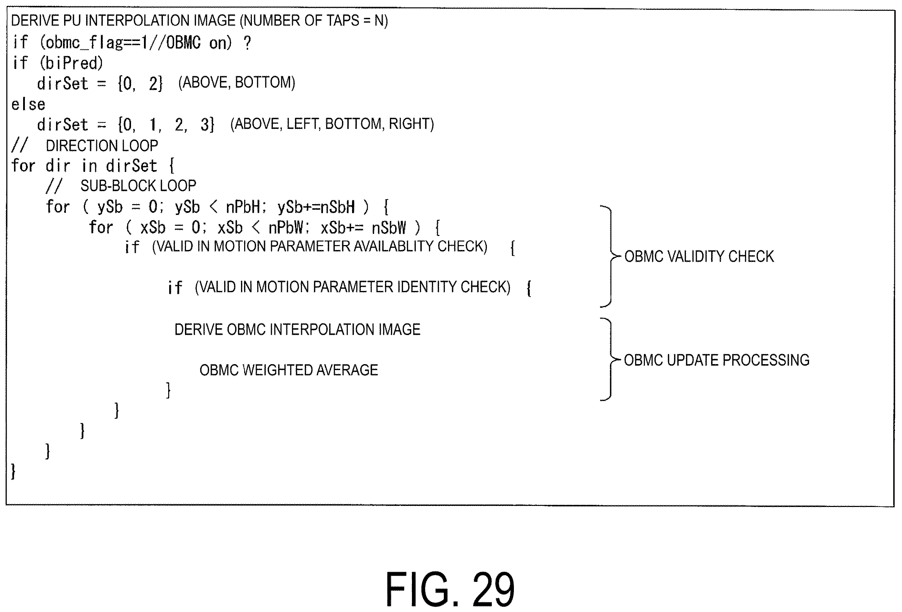

FIG. 28 is a flowchart illustrating a processing flow of the motion compensation unit 3091 according to the present embodiment. FIG. 29 is a pseudo-code illustrating the processing of the motion compensation unit 3091 according to the present embodiment.

In the processing flow illustrated in FIG. 28, steps that differ from those in the processing flow of the motion compensation unit 3091 illustrated in FIG. 16 are indicated by different numbers from those of FIG. 16. In the following paragraphs, only the steps that differ from those in the processing flow of the motion compensation unit 3091 illustrated in FIG. 16 will be described.

Subsequent to S1, the OBMC interpolation image generation unit 30912 determines whether the bi-prediction (Bipred) is OFF (S41). In a case that Bipred is ON (NO at S41), the OBMC interpolation image generation unit 30912 configures itself such that neighboring blocks in two directions are referred to (S42). The two directions may be left and right or up and down.

Subsequent to S42, the interpolation image generation unit 3092 and the OBMC correction unit 3093 perform loop processing for each direction 'dir' in up 'above' and down 'bottom' directions or 'left' and 'right' directions (S44).

In a case that Bipred is OFF (YES at S41), the OBMC interpolation image generation unit 30912 configures itself such that neighboring blocks in four directions are referred to (S43). S2 follows next.

Although, a configuration where directions of neighboring sub-blocks that the OBMC interpolation image generation unit 30912 refers to are configured by referring to ON/OFF of Bipred has been described in this processing, a direction set of neighboring sub-blocks dirSet that the OBMC interpolation image generation unit 30912 refers to may be selected from dirSetH = {left, right}, dirSetV = {above, bottom}, and dirSetF = {above, left, bottom, right} by making them correspond to arbitrary conditions A, B, and C.

According to the above configuration, compared with a case that neighboring sub-blocks in four directions are referred to, the number of times of the OBMC processing in a prediction image generation process can be decreased by restricting the directions of the neighboring sub-blocks to be referred to. In this way, the memory bandwidth for accessing image data can be decreased.

Alternatively, as will be described below, the one-dimensional OBMC processing may be performed.

The OBMC interpolation image generation unit 30912 selects a direction to be referred to in the one-dimensional OBMC processing by referring to the motion vector of a neighboring sub-block. For example, the OBMC interpolation image generation unit 30912 derives difference vectors of the motion vectors of first representative sub-blocks (left and up sub-blocks) and the motion vectors of second representative sub-blocks (right and down sub-blocks) (i.e., a difference vector between motion vectors of left and right sub-blocks diffMvHor, and a difference vector between motion vectors of up and down sub-blocks diffMvVer). In a case that a PU is divided into a plurality of sub-blocks, and a vertical difference vector diffMvVer is larger than a horizontal difference vector diffMvHor (diffMvVer > diffMvHor), the OBMC interpolation image generation unit 30912 performs the OBMC processing in directions of up and down (dirSet = {above, bottom}). Further, in a case that the vertical difference vector diffMvVer is smaller than the horizontal difference vector diffMvHor, the OBMC interpolation image generation unit 30912 performs the OBMC processing in directions of left and right (dirSet = {left, right}). In a case that a PU is constituted by one sub-block, the directions of the OBMC processing are up, left, down, and right (dirSet = {above, left, bottom, right}).

The above-described direction configuration can be expressed by the following equations:

$$
\begin{aligned}
&\text{if (subPbMotionFlag) } \{ \\
&\quad \text{if (diffMvVer > diffMvHor)} \\
&\qquad \text{dirSet = \{above, bottom\} // dirSetV} \\
&\quad \text{else // (diffMvVer <= diffMvHor)} \\
&\qquad \text{dirSet = \{left, right\} // dirSetH} \\
&\} \\
&\text{else } \{ \\
&\quad \text{dirSet = \{above, left, bottom, right\} // dirSetF} \\
&\}
\end{aligned}
$$

Summary of OBMC Processing Simplification

The following will summarize the processing of the above-described OBMC processing simplification.

A: As described in "OBMC Processing Using Small Tap Filter 1," processing of the PU interpolation image generation unit 30911 and the OBMC interpolation image generation unit 30912, using filters with a smaller number of taps in a case that the OBMC processing is ON, compared with a case that the OBMC processing is OFF (Nobmc < N, M < N).

B: As described in "OBMC Processing Using Small Tap Filter 2," processing of the OBMC interpolation image generation unit 30912, where, in a case that the OBMC processing is ON, the compensation filter unit 309112 configures the number of taps M of a filer for generating an OBMC interpolation image smaller than the number of taps N of a filer for generating a PU interpolation image (M < N).

C: As described in "Small Size OBMC Processing," processing of the OBMC interpolation image generation unit 30912, where the OBMC processing area size nObmcW1, nObmcH1 in a case that a prediction image is generated by the OBMC processing under high load is configured narrower than the OBMC processing size nObmcW0, nObmcHO in a case that a prediction image is generated by the OBMC processing under other circumstances (low load) (nObmcW1 < nObmcW0, nObmcH1 < nObmcHO). The claimed invention concerns this simplification C.

D: As described in "One-Dimensional OBMC Processing," processing of the OBMC interpolation image generation unit 30912 with restriction to the directions of neighboring sub-blocks to be referred to (dirSet = dirSetHor or dirSetV or dirSetF).

In the above example, simplification processing by A or B has been described on the premise that the OBMC is ON. The conditions for simplification processing by A or B may be, for example, performing a: prediction in sub-block units, b: bi-prediction, c: matching prediction, d: non-integer vector, or the like.

For example, the following processing may be performed.

aA: processing of the PU interpolation image generation unit 30911 and the OBMC interpolation image generation unit 30912 using filters with smaller number of taps in a case that prediction in sub-block units and the OBMC processing is ON, than otherwise.

aB: processing of the OBMC interpolation image generation unit 30912 where the compensation filter unit 309112 configures the number of taps M of a filter for generating an OBMC interpolation image smaller than the number of taps N of a filter for generating a PU interpolation image, in a case that prediction in sub-block units and the OBMC processing is ON.

bA: processing of the PU interpolation image generation unit 30911 and the OBMC interpolation image generation unit 30912 using filters with a smaller number of taps in a case that bi-prediction and the OBMC processing is ON, than otherwise.

bB: processing of the OBMC interpolation image generation unit 30912 where the compensation filter unit 309112 configures the number of taps M of a filter for generating an OBMC interpolation image smaller than the number of taps N of a filter for generating a PU interpolation image, in a case that bi-prediction and the OBMC processing is ON.

cA: processing of the PU interpolation image generation unit 30911 and the OBMC interpolation image generation unit 30912 using filters with a smaller number of taps in a case that matching prediction and the OBMC processing is ON, than otherwise.

cB: processing of the OBMC interpolation image generation unit 30912 where the compensation filter unit 309112 configures the number of taps M of a filter for generating an OBMC interpolation image smaller than the number of taps N of a filter for generating a PU interpolation image, in a case that matching prediction and the OBMC processing is ON.

Further, conditions of simplification processing by A or B may be defined as in a case that prediction in sub-block units and bi-prediction (a&&b) is performed, in a case that bi-prediction and matching prediction (b&&c) is performed, or in a case that prediction in sub-block units and matching prediction (c&&a) is performed.

In the above-described example, performing b: bi-prediction has been a condition for performing simplification by C. However, a condition for performing simplification processing by C may be performing c: matching prediction. Further, b&&c: bi-prediction and matching prediction may be defined as another condition.

Alternatively, for example, the OBMC interpolation image generation unit 30912 may perform the following processing.

cC: processing of the OBMC interpolation image generation unit 30912, where the OBMC processing area size nObmcW1, nObmcH1 in a case that a prediction image is generated by the OBMC processing under high load (matching prediction) is configured narrower than the OBMC processing area size nObmcW0, nObmcHO in a case that a prediction image is generated by the OBMC processing under other circumstances (nObmcW1 < nObmcW0, nObmcH1 < nObmcHO).

b&&cC: processing of the OBMC interpolation image generation unit 30912, where the OBMC processing area size nObmcW1, nObmcH1 in a case that a prediction image is generated by the OBMC processing under high load (bi-prediction and matching prediction) is configured narrower than the OBMC processing area size nObmcW0, nObmcHO under other circumstances (nObmcW1 < nObmcW0, nObmcH1 < nObmcHO).

In the above example, a configuration where simplification processing is performed by D in a case that prediction in sub-block units is performed has been described. The conditions of performing simplification processing by D may be performing b: bi-prediction, c: matching prediction, or the like. Other conditions of performing simplification processing by D may be defined as in a case that prediction in sub-block units and bi-prediction (a&&b) are performed, bi-prediction and matching prediction are performed (b&&c), or prediction in sub-block units and matching prediction are performed (c&&a).

Alternatively, for example, the OBMC interpolation image generation unit 30912 may perform the following processing.

bD: processing of the OBMC interpolation image generation unit 30912 where a set of neighboring sub-block directions dirSet1 to be referred to under high load (bi-prediction) are a smaller number of directions than a set of neighboring sub-block directions dirSet1 to be referred to under other circumstances (dirSet1 = dirSetH or dirSetV, dirSet0 = dirSetF).

cD: processing of the OBMC interpolation image generation unit 30912 where a set of neighboring sub-block directions dirSet1 to be referred to under high load (matching prediction) are a smaller number of directions than a set of neighboring sub-block directions dirSet1 to be referred to under other circumstances (dirSet1 = dirSetH or dirSetV, dirSet0 = dirSetF).

Simplification of OBMC Processing at CU Boundary

In the OBMC processing, motion interpolation of each PU is performed in a larger scale than the real PU size, and an OBMC interpolation image of a neighboring PU is generated simultaneously with generation of a PU interpolation image for each PU. In this case, an OBMC interpolation image that is generated in a case that a PU interpolation image of a neighboring PU is generated is required to be stored until it is utilized in the OBMC processing on a subsequent PU. This requires a memory space for storing the generated OBMC interpolation image. In addition, memory management for storing images is complicated. Thus, it is difficult to use an OBMC interpolation image generated while processing a CU in the OBMC processing on a subsequent CU. Conversely, for PUs in the same CU, an OBMC interpolation image for a subsequent PU can be generated simultaneously with generation of a PU interpolation image. Accordingly, the processing amount of generation of an OBMC interpolation image for neighboring PUs across different CUs (generation of an OBMC interpolation image at a CU boundary) is larger than the processing amount of generation of an OBMC interpolation image for PUs within the same CU (generation of an OBMC interpolation image at a PU boundary).

The following configuration of the image decoding device 31 according to the present embodiment (simplification of the OBMC processing at a CU boundary) aims to decrease the processing amount of the image decoding device 31.

Small Tap Interpolation at CU Boundary

The image decoding device 31 according to the present embodiment will be described below.

The motion compensation unit 3091 according to the present embodiment (prediction image generation device) generates a prediction image by referring to a reference image. The motion compensation unit 3091 includes a PU interpolation image generation unit (interpolation image generation unit) 30911 that generates a PU interpolation image (interpolation image) by applying motion information of a target PU and filter processing to a sub-block on the reference image corresponding to a target sub-block. The motion compensation unit 3091 further includes an OBMC interpolation image generation unit (additional interpolation image generation unit) 30912 that generates an OBMC interpolation image (additional interpolation image) by applying motion information of a neighboring sub-block that neighbors a target sub-block and filter processing to a pixel in a boundary area of at least one of CU and PU where a sub-block corresponding to the target sub-block exists on the reference image.

Furthermore, the motion compensation unit 3091 includes an OBMC correction unit (prediction unit) 3093 that generates a prediction image from a PU interpolation image and an OBMC interpolation image after filter processing.

The OBMC interpolation image generation unit 30912 uses a filter with a smaller number of taps for a CU boundary area than the number of taps of a filter for a PU boundary area.

According to the above-described configuration, the OBMC interpolation image generation unit 30912 performs filter processing with a small number of taps for a boundary area of coding units (CUs) compared with a boundary area of prediction units (PUs). Thus, the processing amount of the OBMC processing can be decreased.

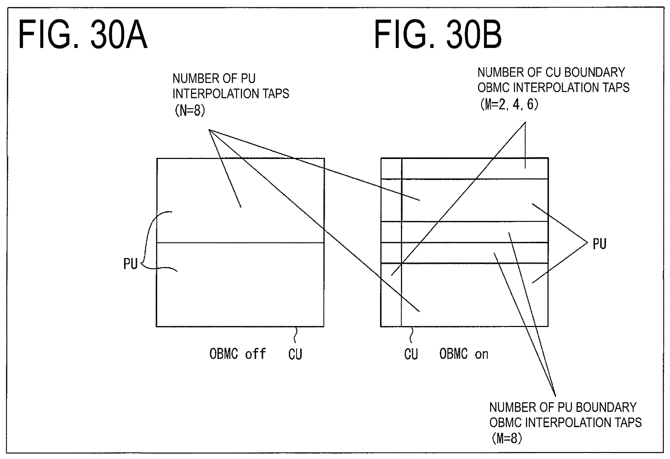

An example of the processing of the motion compensation unit 3091 according to the present embodiment will be described with reference to FIGS. 30A to 32C.

FIGS 30A and 30B are diagrams illustrating an overview of filter processing that the motion compensation unit 3091 of the present embodiment (PU interpolation image generation unit 30911 and OBMC interpolation image generation unit 30912) performs.

FIG. 30A illustrates filter processing for PUs in a case that the OBMC processing is OFF, while FIG. 30B illustrates filter processing for PUs in a case that the OBMC processing is ON. As illustrated in FIG. 30A, in a case that the OBMC processing is OFF, the PU interpolation image generation unit 30911 generates a PU interpolation image by using a filter of the number of taps N = 8. Further, as illustrated in FIG. 30B, in a case that the OBMC processing is ON, the PU interpolation image generation unit 30911 generates a PU interpolation image by using a filter with the number of taps N = 8. The OBMC interpolation image generation unit 30912 generates an OBMC interpolation image by using a filter with the number of taps M = 8 at a PU boundary and generates an OBMC interpolation image by using a filter with the number of taps Mcu (Mcu = 2, 4, or 6) at a CU boundary, where Mcu < M.

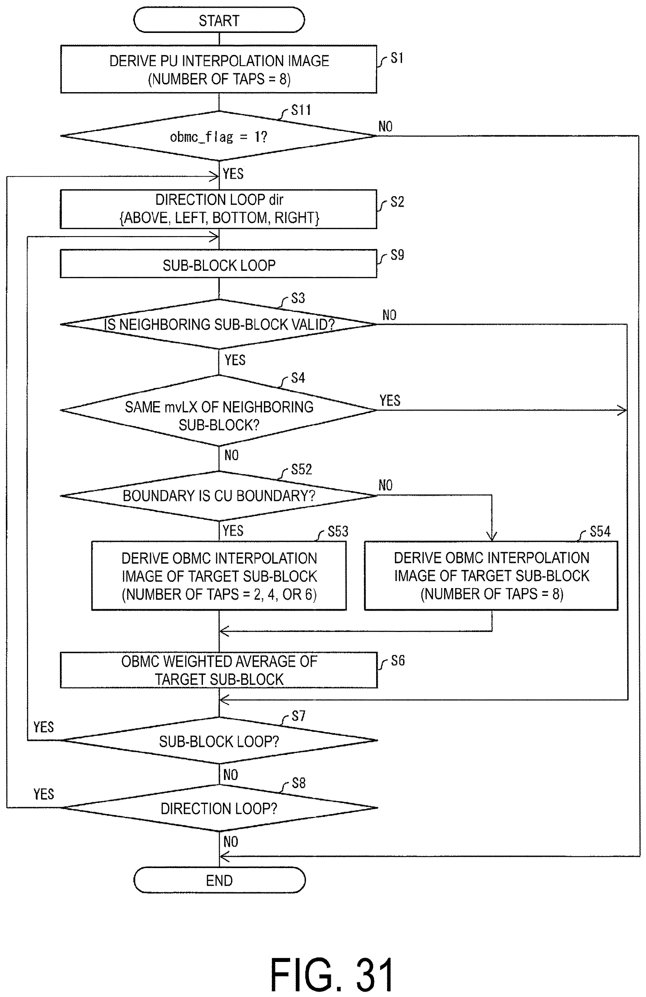

FIG. 31 is a flowchart illustrating a processing flow of the motion compensation unit 3091 according to the present embodiment. In the processing flow illustrated in FIG. 31, steps that differ from those in the processing flow of the motion compensation unit 3091 illustrated in FIG. 16 are indicated by different numbers from those of FIG. 16. In the following paragraphs, only the steps that differ from those in the processing flow of the motion compensation unit 3091 illustrated in FIG. 16 will be described.

In a case that the motion vector mvLXN of a neighboring sub-block is different from the motion vector mvLX of a target sub-block or a reference image of the neighboring sub-block and a reference image of the target sub-block are different (NO at S4), the OBMC interpolation image generation unit 30912 determines whether the boundary is a CU boundary (S52). At this time, the OBMC interpolation image generation unit 30912 may determine whether a target boundary is a CU boundary or a PU boundary based on the shape of the PU partition. In a case that the target boundary is a CU boundary (YES at S52), the OBMC interpolation image generation unit 30912 derives an OBMC interpolation image Pred_N [x][y] by using a filter of the number of taps Mcu (for example, 2, 4, or 6) (S53). In a case that the target boundary is a PU boundary (NO at S52), the OBMC interpolation image generation unit 30912 derives an OBMC interpolation image Pred_N [x][y] by using a filter with the number of taps M (for example, 8).

With regard to a boundary between a target sub-block (xSb, ySb) and a neighboring sub-block (xNb, yNb), the following method may be used as the determination method of CU boundary and PU boundary.

puBoundFlag = ((xSb >> log2(CUW)) == (xNb >> log2(CUH))) && ((ySb >> log2(CUW)) == (yNb >> log2(CUH)))

Here, CUW and CUH are respectively the width and height of a CU. In the above equations, in a case that the CU coordinate of a target sub-block that is derived by right-shifting a target sub-block with a logarithm value of CUW (xSb >> log2(CUW), ySb >> log2(CUH)) and the CU coordinate of a neighboring sub-block (xNb >> log2(CUW), yNb >> log2(CUH)) are the same, a flag puBoundFlag indicating that the boundary (PU boundary) is in the same CU is configured to 1. In a case that puBoundFlag is configured to 1, the boundary is a PU boundary, and in a case that puBoundFlag is configured to 0, the boundary is a CU boundary.

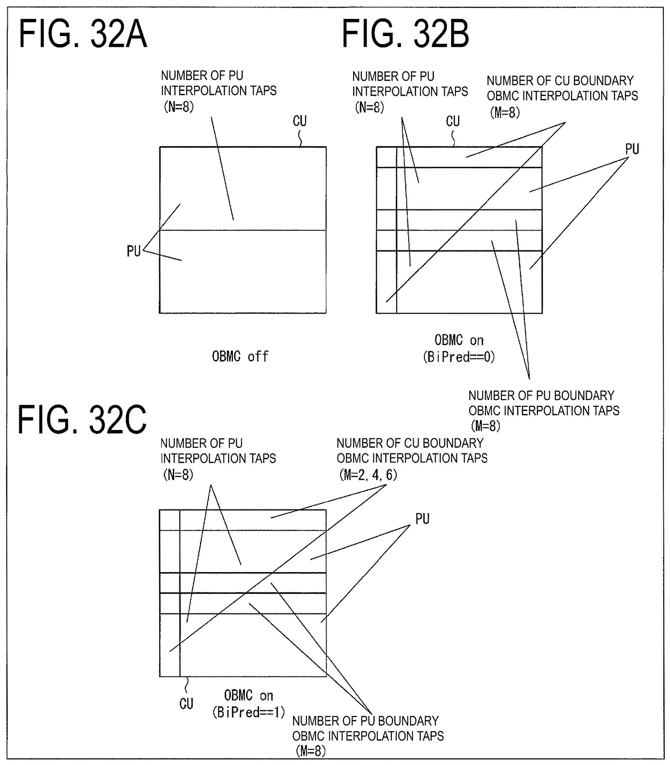

Here, another filter processing that the motion compensation unit 3091 according to the present embodiment performs will be described below. FIGS. 32A to 32C are diagrams illustrating an overview of another filter processing of the motion compensation unit 3091 according to the present embodiment.

FIG. 32A illustrates filter processing for PUs in a case that the OBMC processing is OFF. FIG. 32B illustrates filter processing for PUs in a case that the OBMC processing is ON and Bipred is OFF. FIG. 32C illustrates filter processing for PUs in a case that the OBMC processing is ON and Bipred is ON. As illustrated in FIG. 32A, in a case that the OBMC processing is OFF, the PU interpolation image generation unit 30911 generates a PU interpolation image by using a filter with the number of taps N = 8. Further, as illustrated in FIG. 32B, in a case that the OBMC processing is ON and Bipred is OFF, the PU interpolation image generation unit 30911 generates a PU interpolation image by using a filter with the number of taps N = 8. The OBMC interpolation image generation unit 30912 generates an OBMC interpolation image by using a filter with the number of taps M = 8 either at a PU boundary or a CU boundary. Further, as illustrated in FIG. 32C, in a case that the OBMC processing is ON and Bipred is ON, the PU interpolation image generation unit 30911 generates a PU interpolation image by using a filter with the number of taps N = 8. The OBMC interpolation image generation unit 30912 generates an OBMC interpolation image by using a filter with the number of taps M= 8 at a PU boundary and generates an OBMC interpolation image by using a filter with the number of taps Mcu = 2, 4, or 6 at a CU boundary. where Mcu < M.

Small Size OBMC Processing at CU Boundary 1

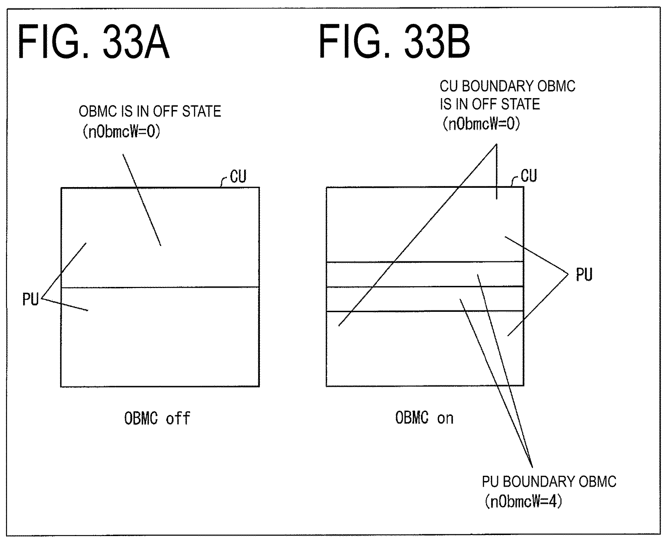

Another example of the processing of the motion compensation unit 3091 according to the present embodiment will be described with reference to FIGS. 33A to 36.

The image decoding device 31 according to the present embodiment includes a PU interpolation image generation unit (interpolation image generation unit) 30911 that generates an interpolation image by applying the motion information of a target PU to a target sub-block. The image decoding device 31 further includes an OBMC interpolation image generation unit (additional interpolation image generation unit) 30912 that generates an OBMC interpolation image (additional interpolation image) by applying the motion information of a neighboring sub-block that neighbors a target sub-block only to a PU boundary area. The image decoding device 31 further includes an OBMC correction unit 3093 that generates a prediction image from a PU interpolation image and an OBMC interpolation image.

According to the above configuration, the OBMC interpolation image generation unit 30912 generates an OBMC interpolation image only in a PU boundary area. Thus, the processing amount of the OBMC processing can be decreased.

FIGS. 33A and 33B are diagrams illustrating an overview of the processing of the motion compensation unit 3091 according to the present embodiment. FIG. 33A illustrates the size of an area where the OBMC processing is performed for PUs in a case that the OBMC processing is OFF. FIG. 33B illustrates the size of an area where the OBMC processing is performed for PUs in a case that the OBMC processing is ON.

As illustrated in FIG. 33A, in a case that the OBMC processing is OFF, the OBMC interpolation image generation unit 30912 configures the OBMC processing size nObmcW and nObmcH to 0 pixels. In other words, the OBMC processing is not performed. As illustrated in FIG. 33B, in a case that the OBMC processing is ON, the OBMC interpolation image generation unit 30912 configures the OBMC processing size at a CU boundary nObmcW and nObmcH to 0 pixels. The OBMC interpolation image generation unit 30912 configures the OBMC processing size at a PU boundary nObmcW and nObmcH to 4 pixels. In other words, the size of the boundary area is configured by the OBMC interpolation image generation unit 30912. For example, the boundary area is configured as an area where a distance from a PU boundary is 0 to 4 pixels.

In other words, in a case that the OBMC processing is ON, the motion compensation unit 3091 performs the OBMC processing only on pixels at a PU boundary.

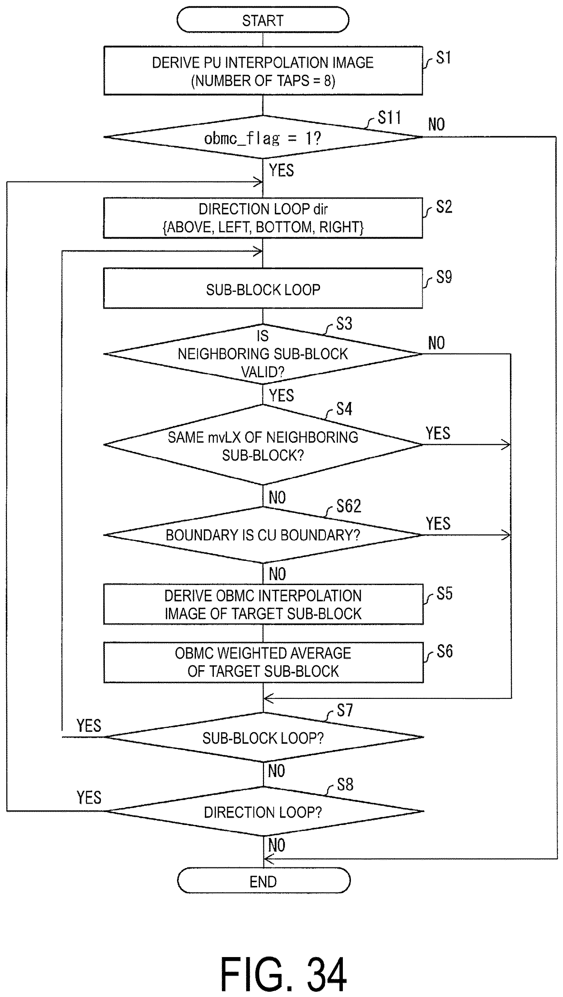

FIG. 34 is a flowchart illustrating a processing flow of the motion compensation unit 3091 according to the present embodiment. In the processing flow illustrated in FIG. 34, a step that differs from those in the processing flow of the inter-prediction image generation unit 309 illustrated in FIG. 16 is indicated by a different number from those of FIG. 16. In the following paragraphs, only the steps that differ from those in the processing flow of the motion compensation unit 3091 illustrated in FIG. 16 will be described.

In a case that the motion vector mvLXN of a neighboring sub-block is different from the motion vector mvLX of a target sub-block or a reference image of the neighboring sub-block and a reference image of the target sub-block are different (NO at S4), the OBMC interpolation image generation unit 30912 determines whether the boundary is a CU boundary (S62). Since S62 is the same as the above-described S52, detailed description thereof will be omitted here. In a case that a target boundary is not a CU boundary (NO at S62), namely, the boundary is a PU boundary, the processing transits to S5 where the OBMC interpolation image generation unit 30912 derives an OBMC interpolation image. Whereas, in a case that a target boundary is a PU boundary (YES at S62), the OBMC interpolation image generation unit 30912 transits to S7 without deriving an OBMC interpolation image.

Small Size OBMC Processing at CU Boundary 2

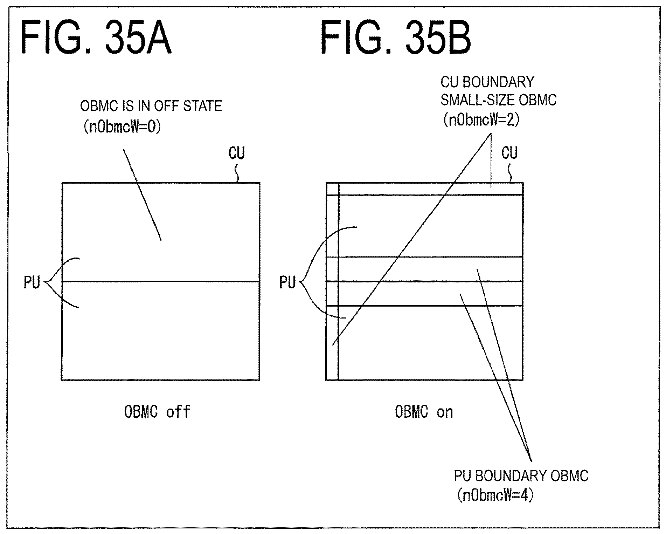

Another example of the processing of the motion compensation unit 3091 according to the present embodiment will be described with reference to FIGS. 35A to 37C.

The motion compensation unit 3091 according to the present embodiment (prediction image generation device) generates a prediction image by referring to a reference image. The motion compensation unit 3091 includes an interpolation image generation unit (image generation unit) 3092 that generates a PU interpolation image that can be acquired by applying motion information of a target PU and filter processing to a sub-block on the reference image corresponding to a target sub-block and an OBMC interpolation image that can be acquired by applying motion information of a neighboring sub-block and filter processing to a pixel in a boundary area of a sub-block on the reference image corresponding to the target sub-block. The motion compensation unit 3091 further includes an OBMC correction unit (prediction unit) 3093 that generates a prediction image by referring to a PU interpolation image and an OBMC interpolation image. The interpolation image generation unit 3092 configures a CU boundary area narrower than a PU boundary area in a sub-block on the reference image corresponding to a target sub-block.

According to the above-described configuration, in a case that a boundary area is a CU boundary area, the interpolation image generation unit 3092 configures the boundary area narrower than in a case that the boundary area is a PU boundary area. Thus, the processing amount of the OBMC processing can be decreased.

FIGS. 35A and 35B are diagrams illustrating an overview of the processing of the motion compensation unit 3091 according to the present embodiment. FIG. 35A illustrates the size of an area where the OBMC processing is performed for PUs in a case that the OBMC processing is OFF. FIG. 35B illustrates the size of an area where the OBMC processing is performed for PUs in a case that the OBMC processing is ON.

As illustrated in FIG. 35A, in a case that the OBMC processing is OFF, the OBMC interpolation image generation unit 30912 configures the OBMC processing size nObmcW and nObmcH to 0 pixels. In other words, the OBMC processing is not performed. As illustrated in FIG. 35B, in a case that the OBMC processing is ON, the OBMC interpolation image generation unit 30912 configures the OBMC processing size at a CU boundary nObmcWcu and nObmcHcu to 2 pixels. The OBMC interpolation image generation unit 30912 configures the OBMC processing size at a PU boundary nObmcWpu and nObmcHpu to 4 pixels.

Note that, in a case that a boundary area is a CU boundary area, the interpolation image generation unit 3092 may configure the boundary area narrower compared with a case that the boundary area is a PU boundary area, and the OBMC processing size of the CU boundary nObmcWcu, nObmcHcu and the OBMC processing size of the PU boundary nObmcWpu, nObmcHpu are not limited to the above example as long as nObmcWcu < nObmcWpu, nObmcHcu < nObmcHpu is satisfied.

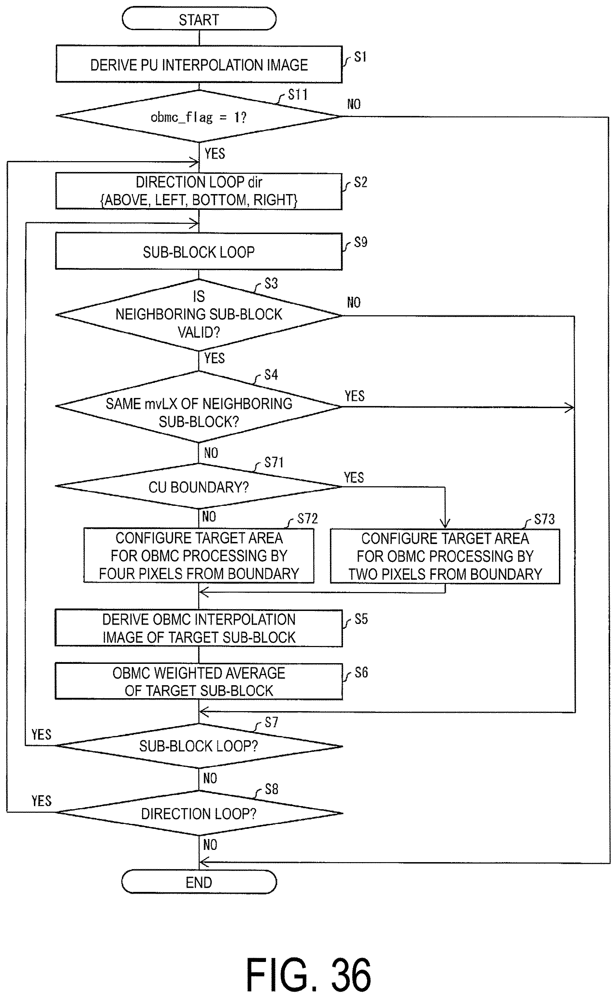

FIG. 36 is a flowchart illustrating a processing flow of the motion compensation unit 3091 according to the present embodiment. In the processing flow illustrated in FIG. 36, a step that differs from those in the processing flow of the inter-prediction image generation unit 309 illustrated in FIG. 16 is indicated by a different number from those of FIG. 16. In the following paragraphs, only the steps that differ from those in the processing flow of the motion compensation unit 3091 illustrated in FIG. 16 will be described.

In a case that the motion vector mvLXN of a neighboring sub-block is different from the motion vector mvLX of a target sub-block or a reference image of the neighboring sub-block and a reference image of the target sub-block are different (NO at S4), the OBMC interpolation image generation unit 30912 determines whether the boundary is a CU boundary (S71). Since S71 is the same as the above-described S52, detailed description thereof will be omitted here. In a case that the target boundary is not a CU boundary (NO at S71), namely, the boundary is a PU boundary, the OBMC interpolation image generation unit 30912 configures the target area of the OBMC processing as nObmcWcu, nObmcHcu pixels (for example, 4 pixels) from the boundary (S72). In a case that the target boundary is a CU boundary (YES at S71), the OBMC interpolation image generation unit 30912 configures the target area of the OBMC processing as nObmcWpu, nObmcHpu pixels (for example, 2 pixels) from the boundary (S73).

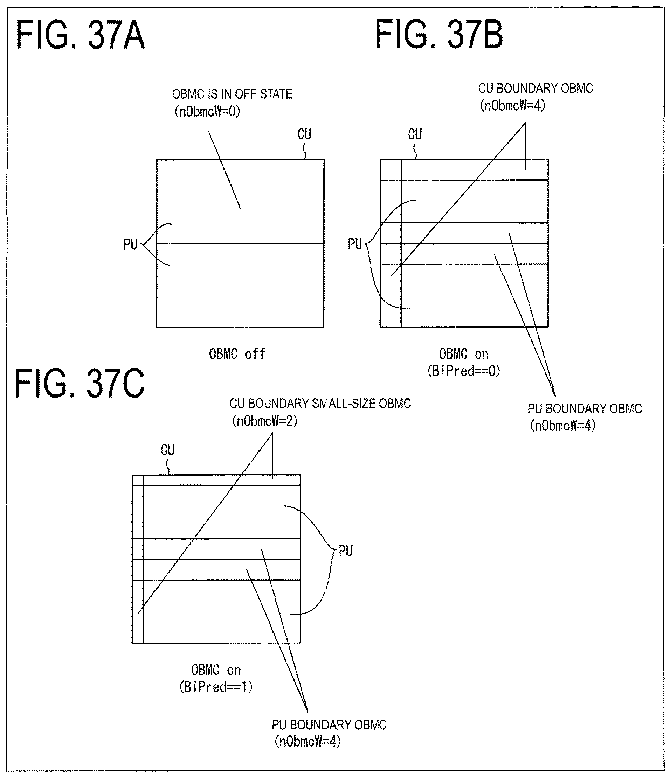

Here, another processing that the motion compensation unit 3091 according to the present embodiment performs will be described below. FIGS. 37A to 37C are diagrams illustrating an overview of the processing of the motion compensation unit 3091 according to the present embodiment. FIG. 37A illustrates the size of an area where the OBMC processing is performed for a CU in a case that the OBMC processing is OFF. FIG. 37B illustrates the size of an area where the OBMC processing is performed for a CU in a case that the OBMC processing is ON and Bipred is OFF. FIG. 37C illustrates the size of an area where the OBMC processing is performed for a CU in a case that the OBMC processing is ON and Bipred is ON. As illustrated in FIG. 37A, in a case that the OBMC processing is OFF, the OBMC interpolation image generation unit 30912 configures the OBMC processing size nObmcW to 0 pixels. In other words, the OBMC processing is not performed. As illustrated in FIG. 37B, in a case that the OBMC processing is ON and Bipred is OFF, the OBMC interpolation image generation unit 30912 configures the OBMC processing size nObmcW at a CU boundary and a PU boundary to 4 pixels. As illustrated in FIG. 37C, in a case that the OBMC processing is ON and Bipred is ON, the OBMC interpolation image generation unit 30912 configures the OBMC processing size at a CU boundary nObmcWcu to 2 pixels. The OBMC interpolation image generation unit 30912 configures the OBMC processing size at a PU boundary nObmcWpu to 4 pixels.

Summary of Simplification of OBMC Processing at CU Boundary

The following will summarize the processing of the above-described OBMC processing simplification at a CU boundary.

A1: As described in "Small Tap Interpolation at CU Boundary," filter processing with a smaller number of taps at a PU boundary area compared with the one at a CU boundary area.

C1: As described in "Small Size OBMC Processing at CU Boundary 1," application of the OBMC processing only to a PU boundary area.

C2: As described in "Small Size OBMC Processing at CU Boundary 2," processing of configuring a CU boundary area as a target of the OBMC processing narrower than a PU boundary area as a target of the OBMC processing.

The processing may be performed in a case that the following conditions are met. The conditions are as follows. The boundary is cu: CU boundary and a: sub-block prediction mode (cu&a). cu: CU boundary and bb: Bipred is ON (cu&b); cu: CU boundary and d: motion vector is not integer (cu&d). u: CU boundary and a: sub-block prediction mode and b: Bipred is ON (cu&a&b). cu: CU boundary and b: Bipred is ON and motion vector is not integer (cu&a&e); cu: CU boundary and d: motion vector is not integer and a sub-block prediction mode (cu&d&a). Further, in a case that the above conditions are not satisfied, the OBMC processing may be performed without performing simplification of the OBMC processing even at a CU boundary.

Alternatively, for example, the OBMC interpolation image generation unit 30912 may perform the following processing (without limitation to the following example).

cu&aA1: processing where, in OBMC interpolation image derivation for a sub-block under high load (sub-block prediction mode), the number of taps Mcu used for OBMC interpolation image derivation at a CU boundary is configured smaller than the number of taps M used for OBMC interpolation image derivation for other part (PU boundary).

cu&aC1: processing where, in a sub-block under high load (sub-block prediction mode), the OBMC processing is not performed at a CU boundary and the OBMC processing is performed at other boundary (PU boundary).

cu&aC2: processing where, in a sub-block under high load (sub-block prediction mode), the OBMC processing size at a CU boundary nObmcWcu, nObmcHcu is configured smaller than the OBMC processing size nObmcWpu, nObmcHpu at other part (PU boundary), and the CU boundary area as a target of the OBMC processing is configured narrower.

cu&bA1: processing where, in OBMC interpolation image derivation of a sub-block under high load (bi-prediction), the number of taps Mcu used for OBMC interpolation image derivation at a CU boundary is configured smaller than the number of taps M used for OBMC interpolation image derivation for other part (PU boundary).

cu&bC1: processing where, in a sub-block under high load (bi-prediction), the OBMC processing is not performed at a CU boundary and the OBMC processing is performed at other boundary (PU boundary).

cu&bC2: processing where, in a sub-block under high load (bi-prediction), the OBMC processing size at a CU boundary nObmcWcu, nObmcHcu is configured smaller than the OBMC processing size nObmcWpu, nObmcHpu at other part (PU boundary), and the boundary area of CUs as a target of the OBMC processing is configured narrower.

High Precision Weighted Average Processing

In the OBMC processing, conventionally, an OBMC interpolation image is derived using a motion parameter of a neighboring PU in the order of above, left, bottom, and right directions, and weighted average processing is performed for each direction. In a case that a sub-block that neighbors on left or top of a target PU is used in the OBMC processing, there is a problem that performing weighted average processing repeatedly in a plurality of directions (here, above and left) decreases the precision of a prediction image due to the lack of computing accuracy.

In addition, there is a problem that the result may be different depending on the application order of the directions. Further, there is a problem that repeated weighted average processing causes a decrease in the precision of a prediction image.

These problems are caused by the following reason. In weighted average processing using integer operations, a sum of products of weighted coefficients is divided (shifted) by a sum of weighted coefficients. The lower bits are lost by the above division (shift) processing. As such, the precision of a prediction image decreases.

The configuration of the image decoding device 31 according to the present embodiment (high precision weighted average processing), as will be described below, aims to suppress a decrease in precision of a prediction image.

The image decoding device 31 according to the present embodiment will be described below.

The motion compensation unit 3091 according to the present embodiment includes a PU interpolation image generation unit (interpolation image generation unit 30911) that generates an interpolation image by applying motion information of a target sub-block and filter processing to a sub-block on the above-described reference image corresponding to the target sub-block.

The motion compensation unit 3091 includes an OBMC interpolation image generation unit (availability check unit) 30912 that generates an OBMC interpolation image (additional interpolation image) by checking availability of motion information of a sub-block that neighbors a target sub-block in a neighboring direction for each neighboring direction included in a group of neighboring directions including a plurality of neighboring directions and applying motion information that has been determined as available and filter processing to the target sub-block.

The motion compensation unit 3091 further includes an OBMC correction unit (image correction unit) 3093 that corrects an image for correct by a linear sum of a PU interpolation image and the above-described OBMC interpolation image using coefficients of integer precision. The OBMC correction unit (image correction unit) 3093 generates a prediction image by, after updating an image for correct with regard to all the neighboring directions included in the above-described group of neighboring directions, adding the above-described two kinds of images for correct, the weigted interpolation image and the weigted additional interpolation image, and right-bit shifting the sum.

According to the above-described configuration, the OBMC correction unit 3093, after updating an image for correct with regard to all the neighboring directions included in the group of neighboring directions, adds the above-described two kinds of images for correct and bit-shifts the sum. In this way, a decrease in precision of the generated prediction image can be suppressed.

For example, in the "weighted average processing" indicated by the following equations, pixel values are right-bit shifted each time a prediction image is corrected for each neighboring direction. Note that the initial value of the prediction image is a PU interpolation image.

$$\text{Pred } [x][y] = \text{Pred\_C } [x][y]$$

$$\text{Pred } [x][y] = (w1a * \text{Pred } [x][y] + w2a * \text{Pred\_above } [i][j] + o) >> \text{shift}$$

$$\text{Pred } [x][y] = (w1\,l * \text{Pred } [x][y] + w2\,l * \text{Pred\_left } [i][j] + o) >> \text{shift}$$

$$\text{Pred } [x][y] = (w1b * \text{Pred } [x][y] + w2b * \text{Pred\_bottom } [i][j] + o) >> \text{shift}$$

$$\text{Pred } [x][y] = (w1r * \text{Pred } [x][y] + w2r * \text{Pred\_right } [i][j] + o) >> \text{shift}$$

Note that Pred_above [i][j], Pred_left [i][j], Pred_bottom [i][j], and Pred_right [i][j] indicate an OBMC interpolation image in each neighboring direction. The other part is the same as the content that has been described in above section (Weighted Average), thus, the description thereof will be omitted.

The weighted average processing according to the present embodiment can also be described as follows. The OBMC correction unit 3093 weights a PU interpolation image and an OBMC interpolation image that has been derived from a motion parameter of a neighboring sub-block in each direction. Then, the OBMC correction unit 3093 calculates a weighted sum of the weighted PU interpolation image and OBMC interpolation images. At this stage, normalization by right shifting is not performed for the calculated weighted sum. That is, the OBMC correction unit 3093 calculates only a weighted correction member. Then, after calculating only the weighted correction member by using a motion parameter of a neighboring sub-block in all the directions, the OBMC correction unit 3093 performs normalization on the sum of the weighted prediction image and weighted correction member.

Example of High Precision Weighted Average Processing 1

The flow of the weighted average processing performed by the OBMC correction unit according to the present embodiment 3093 will be described in detail.

In a case that the motion parameter of an upper neighboring sub-block of a target sub-block is available and the motion parameter of the upper neighboring sub-block of the target sub-block is different from the motion parameter of the target sub-block, the OBMC correction unit 3093 performs processing indicated by the following equations, corrects a PU interpolation image Pred_C [x][y] and an OBMC interpolation image Pred_N [x][y] and corrects cnt [x][y] that indicates the number of times of the processing. Note that the initial values of Pred_C [x][y], Pred_N [x][y], and cnt [x][y] are 0. In the following equations, Pred_C [x][y] and Pred_N [x][y] on the left side indicates the corrected PU interpolation image Pred_C [x][y] and Pred_N [x][y], while Pred_C [x][y] and Pred_N [x][y] on the right side indicates the PU interpolation image Pred_C [x][y] before correct. Further, Pred_curr [x][y] indicates a PU interpolation image Pred_C [x][y] that has been received from the PU correction image generation unit 30911, and Pred_curr [x][y] is not corrected by the OBMC correction unit 3093.

$$Pred\_C \; [x][y] = Pred\_C \; [x][y] + w1a * Pred\_curr \; [x][y]$$

$$Pred\_N \; [x][y] = Pred\_N \; [x][y] + w2a * Pred\_above \; [x][y]$$

$$cnt \; [x][y] = cnt \; [x][y] + 1$$

Next, in a case that the motion parameter of a left neighboring sub-block of the target sub-block is available and the motion parameter of the left neighboring sub-block of the target sub-block is different from the motion parameter of the target sub-block, the OBMC correction unit 3093 performs processing indicated by the following equations, corrects the PU interpolation image Pred_C [x][y] and the OBMC interpolation image Pred_N [x][y], and corrects cnt [x][y] that indicates the number of times of the processing.

$$Pred\_C \; [x][y] = Pred\_C \; [x][y] + w1\,1 * Pred\_curr \; [x][y]$$

$$Pred\_N \; [x][y] = Pred\_N \; [x][y] + w2\,1 * Pred\_left[x][y]$$

$$cnt \; [x][y] = cnt \; [x][y] + 1$$

Next, in a case that the motion parameter of a lower neighboring sub-block of the target sub-block is available and the motion parameter of the lower neighboring sub-block of the target sub-block is different from the motion parameter of the target sub-block, the OBMC correction unit 3093 performs processing indicated by the following equations, corrects the PU interpolation image Pred_C [x][y] and the OBMC interpolation image Pred_N [x][y], and corrects cnt [x][y] that indicates the number of times of the processing.

$$Pred\_C \; [x][y] = Pred\_C \; [x][y] + w1b * Pred\_curr \; [x][y]$$

$$Pred\_N \; [x][y] = Pred\_N \; [x][y] + w2b * Pred\_bottom \; [x][y]$$

$$cnt[x][y] = cnt \; [x][y] + 1$$

Next, in a case that the motion parameter of a right neighboring sub-block of the target sub-block is available and the motion parameter of the right neighboring sub-block of the target sub-block is different from the motion parameter of the target sub-block, the OBMC correction unit 3093 performs processing indicated by the following equations, corrects the PU interpolation image Pred_C [x][y] and the OBMC interpolation image Pred_N [x][y], and corrects cnt [x][y] that indicates the number of times of the processing.

$$Pred\_C\ [x][y] = Pred\_C\ [x][y] + w1r * Pred\_curr\ [x][y]$$

$$Pred\_N\ [x][y] = Pred\_N\ [x][y] + w2r * Pred\_right\ [x][y]$$

$$cnt[x][y] = cnt\ [x][y] + 1$$

Finally, the OBMC correction unit 3093 calculates a prediction image Pred [x][y] by performing processing indicated by the following equation.

if

$$cnt\ [x][y]\ != 4$$

Pred [x][y] = (Pred_C [x][y] + Pred_N [x][y] + o)/cnt [x][y], o = (cnt [x][y] + 1) >> 1

Alternatively, if cnt [x][y] != 3, the following shift operation can also be established.

Pred [x][y] = (Pred_C [x][y] + Pred_N [x][y] + o) >> shift, o = 1 << (shift - 1), shift = log2 (cnt [x][y]) + shiftW

if

$$cnt\ [x][y] == 4$$

$$Pred\ [x][y] = Pred\_curr\ [x][y]$$

Note that shiftW is a value used for normalization in weighted averaging. In a case that the precision of the weight coefficients of weighted average is 1/N, shiftW = log2(N) can be established. That is, in a case that the weight coefficients are 8/32, 4/32, 2/32, and 1/32, N is 32 and, thus, shiftW is 5.

Example of High Precision Weighted Average Processing 2

The flow of another weighted average processing performed by the OBMC correction unit according to the present embodiment 3093 will be described in detail.

Pred_sum [x][y] and cnt [x][y] are configured as follows (initial configuration).

$$Pred\_sum\ [x][y] = 0,\ cnt\ [x][y] = 0$$

In a case that the motion parameter of an upper neighboring sub-block of a target sub-block is available and the motion parameter of the upper neighboring sub-block is different from the motion parameter of the target sub-block, the OBMC correction unit 3093 performs processing indicated by the following equations, and corrects Pred_sum [x][y]. The OBMC correction unit 3093 corrects cnt [x][y].

Pred_sum [x][y] = Pred_sum [x][y] + w1a * Pred_curr [x][y] + w2a * Pred_above [x][y]

$$cnt\ [x][y] = cnt\ [x][y] + 1$$

Next, in a case that the motion parameter of a left neighboring sub-block of a target sub-block is available and the motion parameter of the left neighboring sub-block is different from the motion parameter of the target sub-block, the OBMC correction unit 3093 performs processing indicated by the following equations, corrects Pred_sum [x][y]. The OBMC correction unit 3093 corrects cnt [x][y].

Pred_sum [x][y] = Pred_sum [x][y] + w1 l * Pred_curr [x][y] + w2 l * Pred_left [x][y]

$$cnt\ [x][y] = cnt\ [x][y] + 1$$

Next, in a case that the motion parameter of a lower neighboring sub-block of a target sub-block is available and the motion parameter of the lower neighboring sub-block is different from the motion parameter of the target sub-block, the OBMC correction unit 3093 performs processing indicated by the following equations, corrects Pred_sum [x][y].

Pred_sum [x][y] = Pred_sum [x][y] + w1b * Pred_curr [x][y] + w2b * Pred_bottom [x][y]

$$cnt\ [x][y] = cnt\ [x][y] + 1$$

Next, in a case that the motion parameter of a right neighboring sub-block of a target sub-block is available and the motion parameter of the right neighboring sub-block is different from the motion parameter of the target sub-block, the OBMC correction unit 3093 performs processing indicated by the following equations, corrects Pred_sum [x][y].

Pred_sum [x][y] = Pred_sum [x][y] + w1r * Pred_curr [x][y] + w2r * Pred_right [x][y]

$$cnt\ [x][y] = cnt\ [x][y] + 1$$

Finally, the OBMC correction unit 3093 calculates a prediction image Pred [x][y] by performing processing indicated by the following equation.

```
if cnt [x][y] = 0
Pred [x][y] = Pred_curr [x][y]
if cnt [x][y] != 0
```

$$Pred\ [x][y] = ((Pred\_c\ [x][y] + Pred\_n\ [x][y])/cnt\ [x][y]) >> shiftW$$

The OBMC correction unit 3093 may derive the prediction image Pred [x][y] by the following equations.

Pred [x][y] = (Pred_c [x][y] + Pred_n [x][y] + o) >> shift, o = 1 << (shift - 1), shift = log2 (cnt [x][y]) + shiftW

The specific example of the value of shift is as follows. In a case that the number of times of the OBMC correction processing is one, cnt = 1 and shift = shiftW can be established. In a case that the number of times of the OBMC correction processing is two, cnt = 2 and shift = shiftW + 2 can be established. Here, shiftW is a value used for normalization in weighted averaging. In a case that the precision of the weight coefficients of weighted average is 1/N, shiftW = log2(N) can be established. That is, in a case that the weight coefficients are 8/32, 4/32, 2/32, and 1/32, N is 32 and, thus, shiftW = 5.

Example of High Precision Weighted Average Processing 3

The flow of still another weighted average processing performed by the OBMC correction unit according to the present embodiment 3093 will be described in detail.
In this weighted average processing, for "Pred_C [x][y] = Pred_C[x][y] + w1X * Pred_curr [x][y]" (w1X is any of wla, w1l, w1b and wlr) in "Example of High Precision Weighted Average Processing 1" described above, w1X is added, a product of w1X finally added and pred_curr is calculated to right-bit shift the product. Specific description is as follows.
Initial Configuration

$$weight\_c\ [x][y] = 0$$

$$Pred\_N\ [x][y] = 0,\ cnt\ [x][y] = 0$$

In a case that the motion parameter of an upper neighboring sub-block of a target sub-block is available and the motion parameter of the upper neighboring sub-block is different from the motion parameter of the target sub-block, the OBMC correction unit 3093 performs processing indicated by the following equations, and corrects weight_c [x][y] that is a value after adding w1X, Pred_N [x][y], and cnt [x][y].

$$\text{weight\_c } [x][y] = \text{weight\_c } [x][y] + w1a$$

$$\text{Pred\_N } [x][y] = \text{Pred\_N } [x][y] + w2a * \text{Pred\_above } [x][y]$$

$$\text{cnt } [x][y] = \text{cnt } [x][y] + 1$$

In a case that the motion parameter of a left neighboring sub-block of a target sub-block is available and the motion parameter of the left neighboring sub-block is different from the motion parameter of the target sub-block, the OBMC correction unit 3093 performs processing indicated by the following equations, and corrects weight_c [x][y] that is a value after adding w1X, Pred_N [x][y], and cnt [x][y].

$$\text{weight\_c } [x][y] = \text{weight\_c } [x][y] + w1l$$

$$\text{Pred\_N } [x][y] = \text{Pred\_N } [x][y] + w2l * \text{Pred\_left } [x][y]$$

$$\text{cnt } [x][y] = \text{cnt } [x][y] + 1$$

In a case that the motion parameter of a lower neighboring sub-block of a target sub-block is available and the motion parameter of the lower neighboring sub-block is different from the motion parameter of the target sub-block, the OBMC correction unit 3093 performs processing indicated by the following equations, and corrects weight_c [x][y] that is a value after adding w1X, Pred_N [x][y], and cnt [x][y].

$$\text{weight\_c } [x][y] = \text{weight\_c } [x][y] + w1b$$

$$\text{Pred\_N } [x][y] = \text{Pred\_N } [x][y] + w2b * \text{Pred\_bottom } [x][y]$$

$$\text{cnt}[x][y] = \text{cnt } [x][y] + 1$$

In a case that the motion parameter of a right neighboring sub-block of a target sub-block is available and the motion parameter of the right neighboring sub-block is different from the motion parameter of the target sub-block, the OBMC correction unit 3093 performs processing indicated by the following equations, and corrects weight_c [x][y] that is a value after adding w1X, Pred_N [x][y], and cnt [x][y].

$$\text{weight\_c } [x][y] = \text{weight\_c } [x][y] + w1r$$

$$\text{Pred\_N } [x][y] = \text{Pred\_N } [x][y] + w2r * \text{Pred\_right } [x][y]$$

$$\text{cnt}[x][y] = \text{cnt } [x][y] + 1$$

Finally, the OBMC correction unit 3093 calculates a prediction image Pred [x][y] by performing processing indicated by the following equation.

```
if cnt [x][y] = 0
Pred [x][y] = Pred_curr [x][y]
if cnt [x][y] != 0 Pred [x][y] = ((weight_c [x][y] * Pred_curr [x][y] + Pred_N
[x][y])/cnt [x][y])
```

The OBMC correction unit 3093 may derive Pred [x][y] by the following equations.

Pred [x][y] = (weight_c [x][y] * Pred_curr [x][y] + Pred_N [x][y] + o) >> shift, o = 1 << (shift - 1), shift = log2 (cnt [x][y]) + shiftW

Note that shiftW is a value used for normalization in weighted averaging. In a case that the precision of the weight coefficients of weighted average is 1/N, shift W = log2(N) is established. That is, in a case that the weight coefficients are 8/32, 4/32, 2/32, and 1/32, N is 32 and, thus, shiftW = 5.

Summary of High Precision Weighted Average Processing

The following will summarize the high precision weighted average processing described above.
Processing described in "Example of High Precision Weighted Average Processing 1" described above, which corrects the PU interpolation image Pred_C [x][y] and the OBMC interpolation image Pred_N [x][y], and right-bit shifts the corrected image to generate the prediction image.
Processing described in "Example of High Precision Weighted Average Processing 2" described above, which corrects the sum total value Pred_sum [x][y] of Pred_C [x][y] and Pred_N [x][y], and right-bit shifts the corrected image for correct to generate the prediction image.
Processing described in "Example of High Precision Weighted Average Processing 3" described above, for "Pred_C [x][y] = Pred_C[x][y] + w1X * Pred_curr [x][y]" (w1X is any of wla, w1l, w1b and w1r) in "Example of High Precision Weighted Average Processing 1" described above, w1X is added, a product of w1X finally added and pred_curr is calculated to right-bit shift the product.
Processing which right-bit shifts the corrected image for correct to generate the prediction image.
These processes may be performed in a case that conditions described below are satisfied. The conditions are as follows. OBMC being ON. OBMC being ON, and sub-block prediction mode. OBMC being ON, and Bipred being ON. OBMC being ON, and motion vector being noninteger. OBMC being ON, and sub-block prediction unit mode, and Bipred being ON. OBMC being ON, and Bipred being ON, and motion vector being noninteger. OBMC being ON, and motion vector being noninteger, and sub-block prediction mode.
In a case that the prediction mode is not the sub-block prediction mode, the OBMC processing may be performed without performing the high precision weighted average processing described above.

Configuration of Image Coding Device

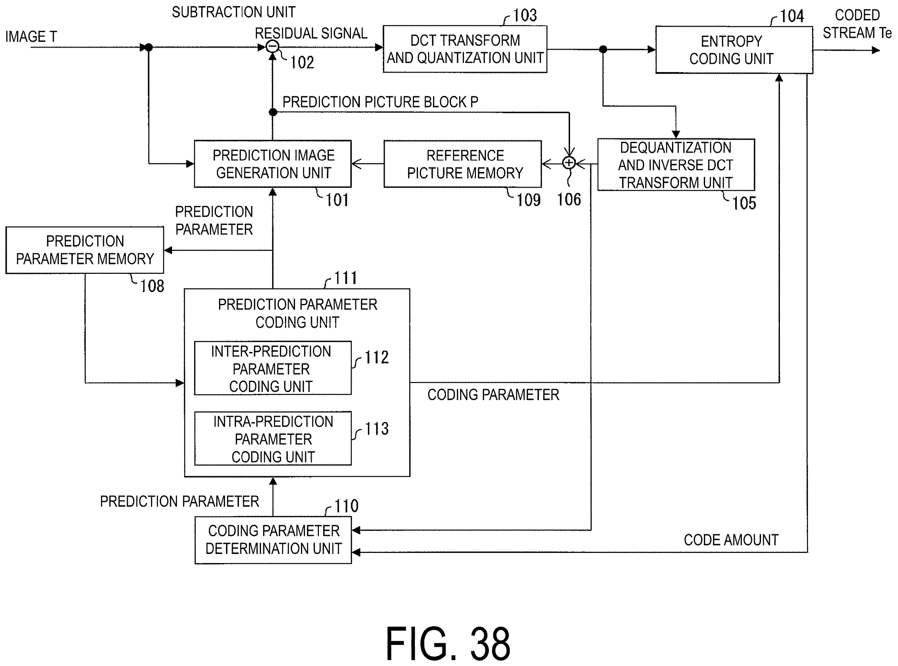

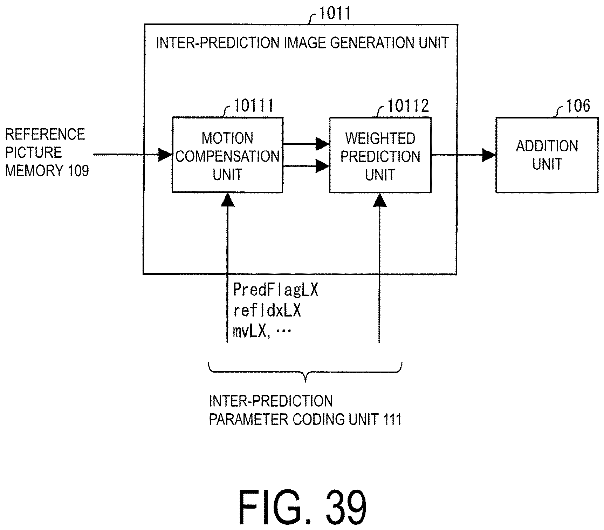

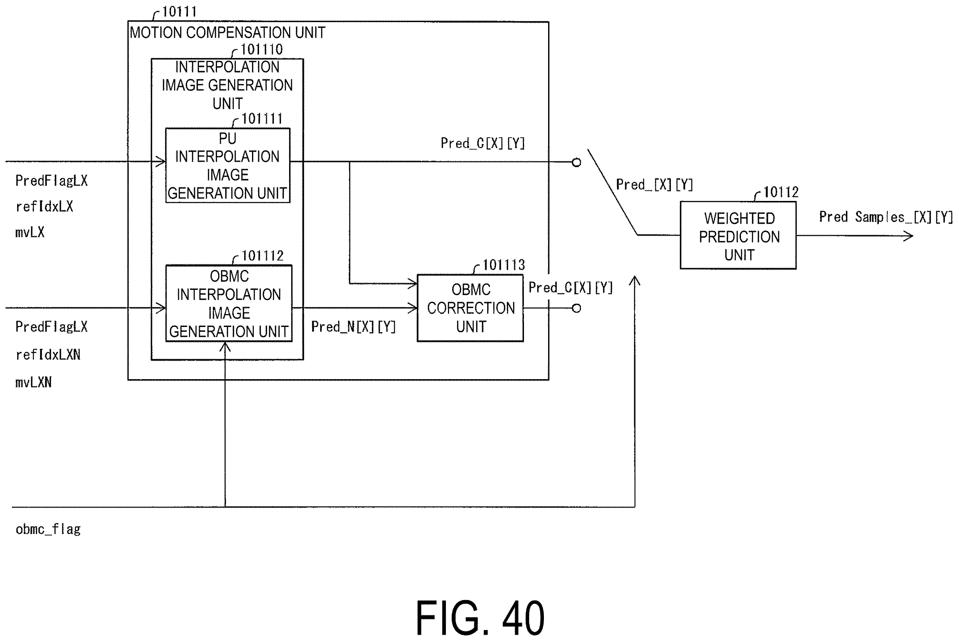

Next, a configuration of the image coding device 11 according to the present embodiment will be described. FIG. 38 is a block diagram illustrating a configuration of the image coding device 11 according to the present embodiment. The image coding device 11 is configured to include a prediction image generation unit 101, a subtraction unit 102, a DCT and quantization unit 103, an entropy coding unit 104, a dequantization and inverse DCT unit 105, an addition unit 106, a prediction parameter memory (prediction parameter storage unit, frame memory) 108, a reference picture memory (reference image storage unit, frame memory) 109, a coding parameter determination unit 110, and a prediction parameter coding unit 111. The prediction parameter coding unit 111 is configured to include an inter-prediction parameter coding unit 112 and an intra-prediction parameter coding unit 113.
The prediction image generation unit 101 generates a prediction image P of the prediction unit PU for each coding unit CU for each picture of an image T, the CU being an area obtained by partitioning the picture. Here, the prediction image generation unit 101 reads out a reference picture block from the reference picture memory 109, based on a prediction parameter input from the prediction parameter coding unit 111. The prediction parameter input from the prediction parameter coding unit 111 is a motion vector, for example. The prediction image generation unit 101 reads out a block at a location indicated by a motion vector with a starting point being a coding target CU. The prediction image generation unit 101 generates the prediction image P of the PU for the read-out reference picture block by use of one prediction scheme of multiple prediction schemes. The prediction image generation unit 101 outputs the generated prediction image P of the PU to the subtraction unit 102.
Note that the prediction image generation unit 101 operates in the same way as the prediction image generation unit 308 described already. For example, FIG. 39 is a schematic diagram illustrating a configuration of the inter-prediction image generation unit 1011 according to the present embodiment. The inter-prediction image generation unit 1011 is configured to include a motion compensation unit 10111 and a weighted prediction unit 10112. The motion compensation unit 10111 and the weighted prediction unit 10112 have the same configuration as the configuration of the motion compensation unit 3091 and the weighted prediction unit 3094 described above, respectively, and the description of these units are omitted here. The inter-prediction image generation unit 1011 may be configured to perform the OBMC processing. FIG. 40 is a block diagram illustrating main components of the motion compensation unit 10111 in a case of performing the OBMC processing. As illustrated in FIG. 40, the motion compensation unit 10111 includes an interpolation image generation unit 101110 (a PU interpolation image generation unit 101111 and an OBMC interpolation image generation unit 101112) and an OBMC correction unit 101113. The PU interpolation image generation unit 101111, the OBMC interpolation image generation unit 101112, and the OBMC correction unit 101113 have the same configuration as the configuration of the PU interpolation image generation unit 30911, the OBMC interpolation image generation unit 30912, and the OBMC correction unit 3093 described above, respectively, and the description of these units are omitted here.

The prediction image generation unit 101, in selecting the prediction scheme, selects a prediction scheme which minimizes an error value based on a difference between a pixel value of the PU included in the image and a signal value for each corresponding pixel of the prediction image P of the PU, for example. The method of selecting the prediction scheme is not limited to the above.

Multiple prediction schemes include the intra-prediction, the motion prediction (including the sub-block prediction described above), and the merge prediction. The motion prediction is the prediction in a time direction among the inter-predictions described above. The merge prediction is prediction using the prediction parameter the same as for a PU which is in a predefined range from the coding target CU, the reference picture block being already coded.

The prediction image generation unit 101, in a case of selecting the intra prediction, outputs a prediction mode IntraPredMode indicating the intra-prediction mode which has been used in generating the prediction image P of the PU to the prediction parameter coding unit 111.

The prediction image generation unit 101, in a case of selecting the motion prediction, stores the motion vector mvLX which has been used in generating the prediction image P of the PU in the prediction parameter memory 108, and outputs the motion vector to the inter-prediction parameter coding unit 112. The motion vector mvLX indicates a vector from a location of the coding target CU to a location of the reference picture block in generating the prediction image P of the PU. Information indicating the motion vector mvLX includes information indicating the reference picture (e.g., reference picture index refIdxLX, picture order count POC), and may indicate the prediction parameter. The prediction image generation unit 101 outputs the prediction mode predMode indicating the inter-prediction mode to the prediction parameter coding unit 111.

The prediction image generation unit 101, in a case of selecting the merge prediction, outputs the merge index merge_idx indicating the selected PU to the inter-prediction parameter coding unit 112. The prediction image generation unit 101 outputs the prediction mode predMode indicating the merge prediction mode to the prediction parameter coding unit 111.

The subtraction unit 102 subtracts a signal value of the prediction image P of the PU input from the prediction image generation unit 101 from a pixel value of the corresponding PU of the image T to generate the residual signal. The subtraction unit 102 outputs the generated residual signal to the DCT and quantization unit 103 and the coding parameter determination unit 110.

The DCT and quantization unit 103 performs DCT on the residual signal input from the subtraction unit 102 to compute DCT coefficients. The DCT and quantization unit 103 quantizes the computed DCT coefficients to find quantized coefficients. The DCT and quantization unit 103 outputs the found quantized coefficients to the entropy coding unit 104 and the dequantization and inverse DCT unit 105.

To the entropy coding unit 104, input are the quantized coefficients from the DCT and quantization unit 103 and coding parameters from the coding parameter determination unit 110. Examples of the input coding parameters include the codes such as the reference picture index refIdxLX, the prediction vector index mvp_LX_idx, the difference vector mvdLX, the prediction mode predMode, and the merge index merge_idx.

The entropy coding unit 104 performs entropy coding on the input quantized coefficients and coding parameters to generate a coded stream Te, and outputs, to outside, the generated coded stream Te.

The dequantization and inverse DCT unit 105 dequantizes the quantized coefficients input from the DCT and quantization unit 103 to find DCT coefficients. The dequantization and inverse DCT unit 105 performs inverse DCT on the found DCT coefficients to compute a decoded residual signal. The dequantization and inverse DCT unit 105 outputs the computed decoded residual signal to the addition unit 106.

The addition unit 106 adds a signal value of the prediction image P of the PU input from the prediction image generation unit 101 and a signal value of the decoded residual signal input from the dequantization and inverse DCT unit 105 for each pixel to generate a decoded image. The addition unit 106 stores the generated decoded image in the reference picture memory 109.

The prediction parameter memory 108 stores the prediction parameter generated by the prediction parameter coding unit 111 in a predefined location for each coding target picture and CU.

The reference picture memory 109 stores the decoded image generated by the addition unit 106 in a predefined location for each coding target picture and CU.

The coding parameter determination unit 110 selects one set from among multiple sets of coding parameters.

The coding parameters are the prediction parameters described above or parameters to be coded that are generated in association with the prediction parameters. The prediction image generation unit 101 uses each of these sets of coding parameters to generate the prediction image P of the PU.

The coding parameter determination unit 110 computes a cost value indicating the size of an amount of information and a coding error for each of multiple sets. The cost value is a sum of a code amount and a value obtained by multiplying a square error by a coefficient $\lambda$, for example. The code amount is an amount of information of the coded stream Te obtained by performing entropy coding on the quantization error and the coding parameters. The square error is a sum of squares of residual error values of the residual signals computed by the subtraction unit 102 for respective pixels. The coefficient $\lambda$ is a preconfigured real number greater than zero. The coding parameter determination unit 110 selects a set of coding parameters for which the computed cost value is minimum. This allows the entropy coding unit 104 to output, to outside, the selected set of coding parameters as the coded stream Te and not to output the non-selected set of coding parameters.

The prediction parameter coding unit 111 derives a prediction parameter used for generating the prediction image, based on the parameter input from the prediction image generation unit 101 and codes the derived prediction parameter to generate a set of coding parameters. The prediction parameter coding unit 111 outputs the generated set of coding parameters to the entropy coding unit 104.

The prediction parameter coding unit 111 stores the prediction parameter corresponding to the set of coding parameters selected by the coding parameter determination unit 110 among the generated set of coding parameters in the prediction parameter memory 108.

In a case that the prediction mode predMode input from the prediction image generation unit 101 specifies the inter-prediction mode, the prediction parameter coding unit 111 causes the inter-prediction parameter coding unit 112 to operate. In a case that the prediction mode predMode specifies the intra-prediction mode, the prediction parameter coding unit 111 causes the intra-prediction parameter coding unit 113 to operate.

The inter-prediction parameter coding unit 112 derives an inter-prediction parameter, based on the prediction parameter input from the coding parameter determination unit 110. The inter-prediction parameter coding unit 112 includes, as a configuration for deriving the inter-prediction parameter, a configuration the same as the configuration in which the inter-prediction parameter decoding unit 303 (see FIG. 5, or the like) derives the inter-prediction parameter. The configuration of the inter-prediction parameter coding unit 112 is described below.

The intra-prediction parameter coding unit 113 defines, as a set of inter-prediction parameters, the intra-prediction mode IntraPredMode which is specified by the prediction mode predMode input from the coding parameter determination unit 110.

Configuration of Inter-Prediction Parameter Coding Unit

Next, a description is given of the configuration of the inter-prediction parameter coding unit 112. The inter-prediction parameter coding unit 112 is means corresponding to the inter-prediction parameter decoding unit 303.

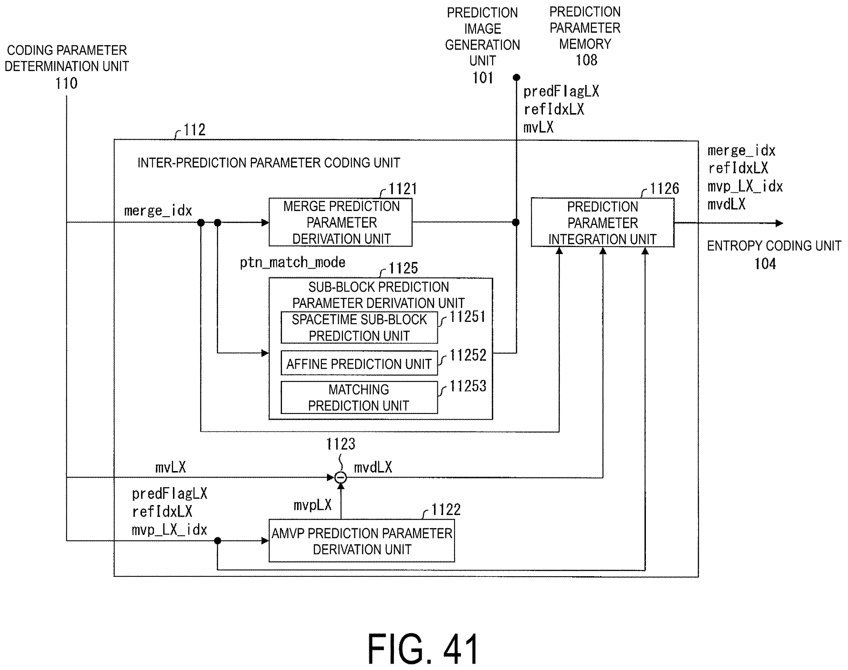

FIG. 41 is a schematic diagram illustrating the configuration of the inter-prediction parameter coding unit 112 according to the present embodiment.

The inter-prediction parameter coding unit 112 is configured to include a merge prediction parameter derivation unit 1121, an AMVP prediction parameter derivation unit 1122, a subtraction unit 1123, a sub-block prediction parameter derivation unit 1125, and a prediction parameter integration unit 1126.

The merge prediction parameter derivation unit 1121 has a configuration similar to the merge prediction parameter derivation unit 3036 described above (see FIG. 6) and the AMVP prediction parameter derivation unit 1122 has a configuration similar to the AMVP prediction parameter derivation unit 3032 described above (see FIG. 6).

In a case that the prediction mode predMode input from the prediction image generation unit 101 specifies the merge prediction mode, the merge index merge_idx is input from the coding parameter determination unit 110 to the merge prediction parameter derivation unit 1121. The merge index merge_idx is output to the prediction parameter integration unit 1126. The merge prediction parameter derivation unit 1121 reads out a reference picture index refIdxLX and motion vector mvLX of a merge candidate indicated by the merge index merge_idx among the merge candidates from the prediction parameter memory 108. The merge candidate is a reference PU in a predefined range from the coding target CU to be coded (e.g., a reference PU in contact with a lower left end, upper left end, or upper right end of the coding target block), and is a PU on which the coding processing is completed

In a case that the prediction mode predMode input from the prediction image generation unit 101 specifies a matching prediction mode, a syntax ptn_match_mode indicating the type of the matching mode is input from the coding parameter determination unit 110 to the sub-block prediction parameter derivation unit 1125. The matching prediction parameter derivation unit 1125 reads out the reference picture index refIdxLX of the reference PU indicated by ptn_match_mode among the matching candidates from the memory 108. The matching candidate is a reference PU in a predefined range from the coding target CU to be coded (e.g., a reference PU in contact with a lower left end, upper left end, or upper right end of the coding target CU), and is a PU on which the coding processing is completed

The AMVP prediction parameter derivation unit 1122 includes a configuration similar to the AMVP prediction parameter derivation unit 3032 described above (see FIG. 6).

To be more specific, in a case that the prediction mode predMode input from the prediction image generation unit 101 specifies the inter-prediction mode, the motion vector mvLX is input from the coding parameter determination unit 110 to the AMVP prediction parameter derivation unit 1122. The AMVP prediction parameter derivation unit 1122 derives a prediction vector mvpLX, based on the input motion vector mvLX. The AMVP prediction parameter derivation unit 1122 outputs the derived prediction vector mvpLX to the subtraction unit 1123. The reference picture index refIdx and the prediction vector index mvp_LX_idx are output to the prediction parameter integration unit 1126.

The subtraction unit 1123 subtracts the prediction vector mvpLX input from the AMVP prediction parameter derivation unit 1122 from the motion vector mvLX input from the coding parameter determination unit 110 to generate a difference vector mvdLX. The difference vector mvdLX is output to the prediction parameter integration unit 1126.

In a case that prediction mode predMode input from the prediction image generation unit 101 specifies the merge prediction mode, the prediction parameter integration unit 1126 outputs the merge index merge_idx input from the coding parameter determination unit 110 to the entropy coding unit 104.

In a case that the prediction mode predMode input from the prediction image generation unit 101 specifies the inter-prediction mode, the prediction parameter integration unit 1126 performs the processing below.

The prediction parameter integration unit 1126 integrates the reference picture index refIdxLX and prediction vector index mvp_LX_idx input from the coding parameter determination unit 110, and the difference vector mvdLX input from the subtraction unit 1123. The prediction parameter integration unit 1126 outputs the integrated code to the entropy coding unit 104.

Note that the inter-prediction parameter coding unit 112 may include an inter-prediction parameter coding controller (not illustrated) which instructs the entropy coding unit 104 to decode the code (syntax element) associated with the inter-prediction to code the code (syntax element) included in the coding data, for example, the partition mode part_mode, the merge flag merge_flag, the merge index merge _idx, the inter-prediction identifier inter_pred_idc, the reference picture index refIdxLX, the prediction vector index mvp_LX_idx, the difference vector mvdLX, the OBMC flag obmc_flag, and the sub-block prediction mode flag subPbMotionFlag.

A part of the image coding device 11 and the image decoding device 31 in the embodiment described above, for example, the entropy decoding unit 301, the prediction parameter decoding unit 302, the prediction image generation unit 101, the DCT and quantization unit 103, the entropy coding unit 104, the dequantization and inverse DCT unit 105, the coding parameter determination unit 110, the prediction parameter coding unit 111, the entropy decoding unit 301, the prediction parameter decoding unit 302, the prediction image generation unit 308, and the dequantization and inverse DCT unit 311 may be implemented by a computer. In this case, this configuration may be realized by recording a program for realizing such control functions on a computer-readable recording medium and causing a computer system to read the program recorded on the recording medium for execution. Note that it is assumed that the "computer system" herein refers to a computer system built into any of the image coding devices 11 to 11h, the image decoding devices 31 to 31h, and the computer system includes an OS and hardware components such as a peripheral device. Furthermore, the "computer-readable recording medium" refers to a portable medium such as a flexible disk, a magneto-optical disk, a ROM, a CD-ROM, and the like, and a storage apparatus such as a hard disk built into the computer system. Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the program may be configured to realize some of the functions described above, and also may be configured to be capable of realizing the functions described above in combination with a program already recorded in the computer system.

The image coding device 11 and image decoding device 31 in the present embodiment described above may be partially or completely realized as an integrated circuit such as a Large Scale Integration (LSI) circuit. The functional blocks of the image coding device 11 and the image decoding device 31 may be individually realized as processors, or may be partially or completely integrated into a processor. The circuit integration technique is not limited to LSI, and the integrated circuits for the functional blocks may be realized as dedicated circuits or a multi-purpose processor. Furthermore, in a case where with advances in semiconductor technology, a circuit integration technology with which an LSI is replaced appears, an integrated circuit based on the technology may be used.

The embodiment of the present invention has been described in detail above referring to the drawings, but the specific configuration is not limited to the above embodiments and various amendments can be made to a design that fall within the scope of the claims.

Application Example

The image coding device 11 and the image decoding device 31 described above can be used in a state of being equipped on various devices for transmitting, receiving, recording, and reproducing video. The video may be a natural video imaged by a camera or the like, or an artificial video (including CG and GUI) generated by using a computer or the like.

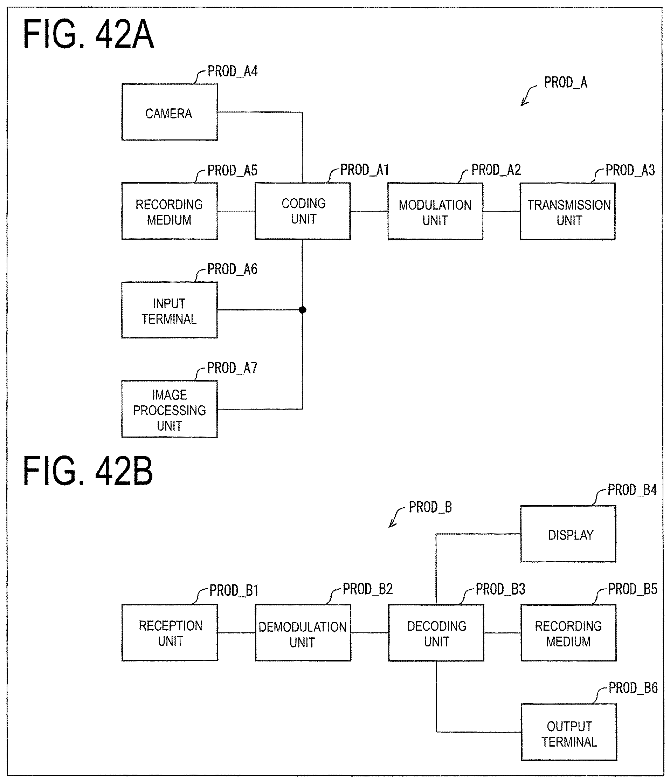

First, a description is given of that the image coding device 11 and the image decoding device 31 described above can be used to transmit and receive the video with reference to FIGS. 42A and 42B.

FIG. 42A is a block diagram illustrating a configuration of a transmission device PROD_A equipped with the image coding device 11. As illustrated in FIG. 42A, the transmission device PROD_A includes a coding unit PROD_A1 that codes video to acquire coded data, a modulation unit PROD_A2 that modulates a carrier wave by using the coded data acquired by the coding unit PROD_A1 to acquire a modulated signal, and a transmitter PROD_A3 that transmits the modulated signal acquired by the modulation unit PROD_A2. The image coding device 11 described above is used as the coding unit PROD_A1.

The transmission device PROD_A may further include, as resources for supplying video to input to the coding unit PROD_A1, a camera PROD_A4 that images the video, a recording medium PROD_A5 that records video therein, an input terminal PROD_A6 that inputs video from outside, and an image processing unit A7 that generates or processes images. FIG. 42A illustrates the configuration in which the transmission device PROD_A includes all of the above components, but some of these may be omitted.

The recording medium PROD_A5 may recode the video not coded, or the video coded using a coding scheme for recording different from the coding scheme for transmission. In the latter case, a decoding unit (not illustrated) which decodes the coded data read out from the recording medium PROD_A5 in accordance with the coding scheme for recording may be provided between the recording medium PROD_A5 and the coding unit PROD_A1.

FIG. 42B is a block diagram illustrating a configuration of a reception device PROD_B equipped with the image decoding device 31. As illustrated in FIG. 42B, the reception device PROD_B includes a receiver PROD_B1 that receives a modulated signal, a demodulation unit PROD_B2 that demodulate the modulated signal received by the receiver PROD_B1 to acquire coded data, and a decoding unit PROD_B3 that decodes the coded data acquired by the demodulation unit PROD_B2 to acquire the video. The image decoding device 31 described above is used as the decoding unit PROD_B3.

The reception device PROD_B may further include, as supply destinations of the video output by the decoding unit PROD_B3, a display PROD_B4 that displays the video, a recording medium PROD_B5 that records the video, and an output terminal PROD_B6 that outputs the video to outside. FIG. 42B illustrates the configuration in which the reception device PROD_B includes all of the above components, but some of these may be omitted.

The recording medium PROD_B5 may be configured to recode the video not coded, or the video coded using a coding scheme for recording different from the coding scheme for transmission. In the latter case, a coding unit (not illustrated) which codes the video acquired from the decoding unit PROD_B3 in accordance with the coding scheme for recording may be provided between the decoding unit PROD_B3 and the recording medium PROD_B5.

A transmission medium for transmitting the modulated signal may be wireless or wired. A transmission aspect of transmitting the modulated signal may be a broadcast (here, referred to a transmission aspect for which the transmission destination is not specified in advance), or a communication (here, referred to a transmission aspect for which the transmission destination is specified in advance). To be more specific, transmission of the modulated signal may be achieved by any of a radio broadcast, a cable broadcast, a radio communication, and a cable communication.

For example, a broadcast station (such as broadcast facilities)/receiving station (such as a TV set) of digital terrestrial broadcasting is an example of the transmission device PROD_A/reception device PROD_B transmitting and/or receiving the modulated signal on the radio broadcast. A broadcast station (such as broadcast facilities)/receiving station (such as a TV set) of a cable television broadcasting is an example of the transmission device PROD_A/reception device PROD_B transmitting and/or receiving the modulated signal on the cable broadcast.

A server (such as a workstation)/client (such as a TV set, a personal computer, a smartphone) including a Video On Demand (VOD) service or video-sharing service using the Internet is an example of the transmission device PROD_A/reception device PROD_B transmitting and/or receiving the modulated signal on the communication (in general, a wireless or wired transmission medium is used in LAN, and a wired transmission medium is used in WAN). Here, the personal computer includes a desktop PC, laptop PC, and a tablet PC. The smartphone also includes a multifunctional mobile phone terminal.

The video-sharing service client has a function to decode coded data downloaded from the server to display on a display, and a function to code video imaged by a camera to upload to the sever. To be more specific, the video-sharing service client functions as both the transmission device PROD_A and the reception device PROD_B.

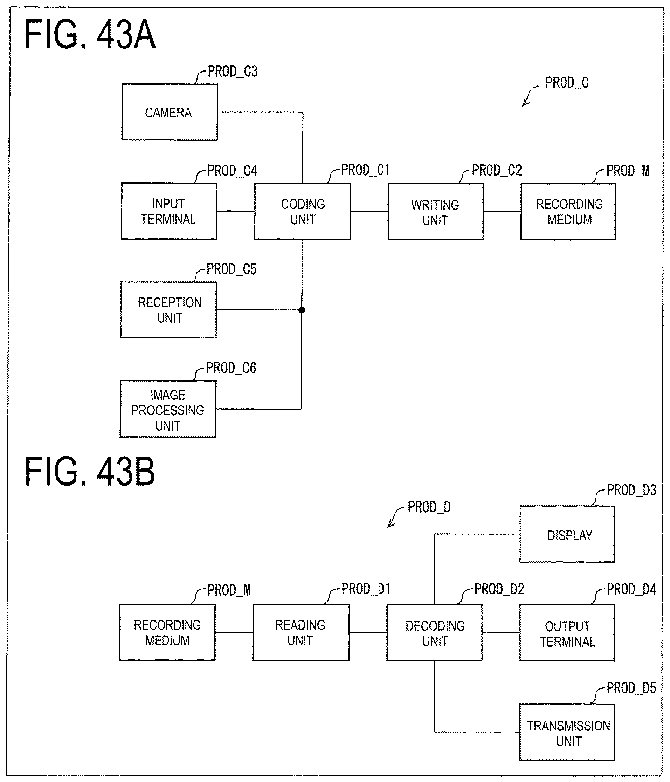

Next, a description is given of that the image coding device 11 and the image decoding device 31 described above can be used to record and reproduce the video with reference to FIGS. 43A and 43B.

FIG. 43A is a block diagram illustrating a configuration of a recording device PROD_C equipped with the image coding device 11 described above. As illustrated in FIG. 43A, the recording device PROD_C includes a coding unit PROD_C1 that codes video to acquire coded data, and a writing unit PROD_C2 that writes the coded data acquired by the coding unit PROD_C1 into a recording medium PROD_M. The image coding device 11 described above is used as the coding unit PROD_C1.

The recording medium PROD_M may be (1) of a type that is built in the recording device PROD_C such as a Hard Disk Drive (HDD) and a Solid State Drive (SSD), (2) of a type that is connected with the recording device PROD_C such as an SD memory card and a Universal Serial Bus (USB) flash memory, or (3) of a type that is loaded into a drive device (not illustrated) built in the recording device PROD_C such as a Digital Versatile Disc (DVD) and a Blu-ray Disc (registered trademark) (BD).

The recording device PROD_C may further include, as resources for supplying video to input to the coding unit PROD_C1, a camera PROD_C3 that images video, an input terminal PROD_C4 that inputs video from outside, a receiver PROD_C5 that receives video, and an image processing unit C6 that generates or processes images FIG. 43A illustrates the configuration in which the recording device PROD_C includes all of the above components, but some of these may be omitted.

The receiver PROD_C5 may receive the video not coded, or the coded data coded using a coding scheme for transmission different from the coding scheme for recording. In the latter case, a decoding unit for transmission (not illustrated) which decodes the coded data coded by using the coding scheme for transmission may be provided between the receiver PROD_C5 and the coding unit PROD_C1.

Examples of the recording device PROD_C like this include a DVD recorder, a BD recorder, and a Hard Disk Drive (HDD) recorder (in this case, the input terminal PROD_C4 or the receiver PROD_C5 is mainly the resource for supplying the video). A camcorder (in this case, the camera PROD_C3 is mainly the resource for supplying the video), a personal computer (in this case, the receiver PROD_C5 or the image processing unit C6 is mainly the resource for supplying the video), and a smartphone (in this case, the camera PROD_C3 or the receiver PROD_C5 is mainly the resource for supplying the video) are also included in the examples of the recording device PROD_C like this.

FIG. 43B is a block diagram illustrating a configuration of a reproducing device PROD_D equipped with the image decoding device 31. As illustrated in FIG. 43B, the reproducing device PROD_D includes a reading unit PROD_D1 that reads out coded data written into the recording medium PROD_M, and a decoding unit PROD_D2 that decodes the coded data read out by the reading unit PROD_D1 to acquire video. The image decoding device 31 described above is used as the decoding unit PROD_D2.

The recording medium PROD_M may be (1) of a type that is built in the reproducing device PROD_D such as an HDD and an SSD, (2) of a type that is connected with the reproducing device PROD_D such as an SD memory card and a USB flash memory, or (3) of a type that is loaded into a drive device (not illustrated) built in the reproducing device PROD_D such as a DVD and a BD.

The reproducing device PROD_D may further include, as supply destinations of the video output by the decoding unit PROD_D2, a display PROD_D3 that displays the video, an output terminal PROD_D4 that outputs the video to outside, and a transmitter PROD_D5 that transmits the video. FIG. 43B illustrates the configuration in which the reproducing device PROD_D includes all of the above components, but some of these may be omitted.

The transmitter PROD_D5 may transmit the video not coded, or the coded data coded using a coding scheme for transmission different from the coding scheme for recording. In the latter case, a coding unit (not illustrated) which codes the video by using the coding scheme for transmission may be provided between the decoding unit PROD_D2 and the transmitter PROD_D5.

Examples of the reproducing device PROD_D like this include a DVD player, a BD player, and an HDD player (in this case, the output terminal PROD_D4 connected with a TV set or the like is mainly the supply destination of the video). A TV set (in this case, the display PROD_D3 is mainly the supply destination of the video), a digital signage (also referred to as an electronic signage or an electronic bulletin board, and the display PROD_D3 or the transmitter PROD_D5 is mainly the supply destination of the video), a desktop PC (in this case, the output terminal PROD_D4 or the transmitter PROD_D5 is mainly the supply destination of the video), a laptop or tablet PC (in this case, the display PROD_D3 or the transmitter PROD_D5 is mainly the supply destination of the video), and a smartphone (in this case, the display PROD_D3 or the transmitter PROD_D5 is mainly the supply destination of the video) are also included in the examples of the reproducing device PROD_D like this.

Hardware Implementation and Software Implementation

The blocks in the image decoding device 31 and the image coding device 11 described above may be implemented by hardware using a logic circuit formed on an integrated circuit (IC chip), or by software using a Central Processing Unit (CPU).

In the latter case, the above-described devices include a CPU to execute commands of a program for achieving the functions, a Read Only Memory (ROM) to store the program, a Random Access Memory (RAM) to load the program, and a storage device (storage medium) such as a memory to store the program and various types of data. The object of the present invention can be attained by that software realizing the functions described above that is a program code of a control program for the above respective devices (executable program, intermediate code program, source program) is recoded in a recording medium in a computer-readable manner, the recording medium is supplied to the above respective devices, and the computer (or the CPU or MPU) reads out the program code recorded in the recording medium for execution.

Examples of the above-described recording medium to use include tapes such as a magnetic tape and a cassette tape, disks or discs including a magnetic disk such as a floppy (registered trademark) disk/hard disk or an optical disc such as a Compact Disc Read-Only Memory (CD-ROM)/Magneto-Optical (MO) disc/Mini Disc (MD)/Digital Versatile Disc (DVD)/CD Recordable (CD-R)/Blu-ray Disc (registered trademark), cards such as an IC card (including a memory card)/optical card, semiconductor memories such as a mask ROM/Erasable Programmable Read-Only Memory (EPROM)/Electrically Erasable and Programmable Read-Only Memory (EEPROM: registered trademark)/flash ROM, or logic circuits such as a Programmable logic device (PLD) and a Field Programmable Gate Array (FPGA).

The above-described devices may be configured to be connectable with a communication network to be supplied with the above-described program code through the communication network. This communication network is not specifically limited so long as the program code can be transmitted. For example, the Internet, an intranet, an extranet, a Local Area Network (LAN), an Integrated Services Digital Network (ISDN), a Value-Added Network (VAN), a Community Antenna television/Cable Television (CATV) communication network, a Virtual Private Network, a telephone network, a mobile communication network, a satellite communication network and the like are available. Transmission media constituting this communication network are not limited to a specific configuration or type so long as the program code can be transmitted. For example, a wired medium such as Institute of Electrical and Electronic Engineers (IEEE) 1394, a USB, a power-line carrier, a cable TV line, a telephone line, and an Asymmetric Digital Subscriber Line (ADSL), or a wireless medium such as an infrared-ray including Infrared Data Association (IrDA) and a remote control unit, Bluetooth (registered trademark), IEEE 802.11 wireless communication, High Data Rate (HDR), Near Field Communication (NFC), Digital Living Network Alliance (registered trademark) (DLNA), a mobile telephone network, a satellite circuit, and a digital terrestrial network are also available. The present invention may also be implemented in a form of a computer data signal embedded in a carrier wave in which the above-described program code is embodied by electronic transmission.

The present invention is not limited to the above described embodiments, and can be variously modified within a scope of the claims. To be more specific, embodiments made by combining technical means which are adequately modified within the scope of the claims are also included in the scope of the present invention.

Industrial Applicability

The present invention can be suitably applied to an image decoding device that decodes coded data in which an image data is coded and an image coding device that generates coded data in which an image data is coded.

Reference Signs List

    11 Image coding device (video coding device)
    31 Image decoding device (video decoding device)
    302 Prediction parameter decoding unit (prediction image generation device)
    308 Prediction image generation unit (prediction image generation device)
    309 Inter-prediction image generation unit (prediction image generation unit, prediction image generation device)
    3091 Motion compensation unit (prediction image generation device)
    30911 PU interpolation image generation unit (interpolation image generation unit)
    30912 OBMC interpolation image generation unit (additional interpolation image generation unit, availability check unit)
    3092 Interpolation image generation unit (image generation unit)
    3093 OBMC correction unit (prediction unit, image correction unit)

**Claims**

1.    A video decoding device comprising a prediction image generation device for generating a prediction image with reference images, the prediction image generation device comprising:

a motion compensation unit (3091) configured to generate the prediction image in a target sub-block of a target prediction unit, wherein the motion compensation unit includes:

a first interpolation image generation unit (30911) configured to generate a first interpolation image by applying motion information of the target prediction unit to a reference picture of the target prediction unit, and an overlapped block motion compensation, OBMC, interpolation image generation unit (30912) configured to generate an interpolation image for OBMC by applying motion information of a neighboring block of the target sub-block to a reference picture of the neighboring block; and

a prediction unit (3093) configured to generate the prediction image for a first mode by using the first interpolation image and the interpolation image for OBMC, wherein for an OBMC applying area of the target sub-block, the prediction image is a weighted average of the first interpolation image and the interpolation image for OBMC, wherein:

the video decoding device reconstructs a decoding image by adding a residual image to the prediction image, **characterised in that**

in a case that the first mode is selected, the OBMC applying area is smaller in a case that the prediction image is generated using two reference picture lists than in a case that the prediction image is generated using one reference picture list.

2. The video decoding device according to claim 1, wherein a bi-prediction flag is true includes that the prediction image is generated using the two reference picture lists.

3. The video decoding device according to claim 1, wherein the OBMC interpolation image generation unit is configured to performs the following:

(i) to reduce a height of the OBMC applying area, in a case that a motion parameter of a neighboring above or below block of the target sub-block is referred, and
(ii) to reduce a width of the OBMC applying area, in a case that a motion parameter of a neighboring left or right block of the target sub-block is referred.

4. The video decoding device according to any of claims 1 to 3, wherein:

the first interpolation image generation unit and the OBMC interpolation image generation unit use a filter of different tap length, and
a number of taps for the OBMC interpolation image generation unit is smaller than a number of taps for the first interpolation image generation unit.

5. The video decoding device according to claim 1, wherein:

the prediction unit includes an image correction unit, which is configured to correct the first interpolation image by a linear sum of the first interpolation image and interpolation images for OBMC for each directions, and
the image correction unit generates the prediction image by right-bit shifting after adding the interpolation image for OBMC to the first interpolation image for each neighboring directions.

6. The video decoding device according to claim 1, wherein the OBMC applying area is a boundary area of target prediction unit.

7. A video coding device comprising a prediction image generation device for generating a prediction image with reference images, the prediction image generation device comprising:

a motion compensation unit (3091) configured to generate the prediction image in a target sub-block of a target prediction unit, wherein the motion compensation unit includes:

a first interpolation image generation unit (30911) configured to generate a first interpolation image by applying motion information of the target prediction unit to a reference picture of the target prediction unit, and an overlapped block motion compensation, OBMC, interpolation image generation unit (30912) configured to generate an interpolation image for OBMC by applying motion information of a neighboring block of the target sub-block to a reference picture of the neighboring block; and

a prediction unit (3093) configured to generate the prediction image for a first mode by using the first interpolation image and the interpolation image for OBMC, wherein for an OBMC applying area of the target sub-block, the prediction image is a weighted average of the first interpolation image and the interpolation image for OBMC, wherein:

the video coding device codes a residual of the prediction image and an original image, **characterised in that** in a case that the first mode is selected, the OBMC applying area is smaller in a case that the prediction image is generated using two reference picture lists than in a case that the prediction image is generated using one reference picture list.

8. The video coding device according to claim 7, wherein a bi-prediction flag is true includes that the prediction image is generated using the two reference picture lists.

9. The video coding device according to claim 7, wherein the OBMC interpolation image generation unit is configured to performs the following:

(i) to reduce a height of the OBMC applying area, in a case that a motion parameter of a neighboring above or below block of the target sub-block is referred, and
(ii) to reduce a width of the OBMC applying area, in a case that a motion parameter of a neighboring left or right block of the target sub-block is referred.

10. The video coding device according to any of claims 7 to 9, wherein:

the first interpolation image generation unit and the OBMC interpolation image generation unit use a filter of different tap length, and
a number of taps for the OBMC interpolation image generation unit is smaller than a number of taps for the first interpolation image generation unit.

11. The video coding device according to claim 7, wherein:

the prediction unit includes an image correction unit, which is configured to correct the first interpolation image by a linear sum of the first interpolation image and interpolation images for OBMC for each directions, and
the image correction unit generates the prediction image by right-bit shifting after adding the interpolation image for OBMC to the first interpolation image for each neighboring directions.

12. The video coding device according to claim 7, wherein the OBMC applying area is a boundary area of target prediction unit.

**Patentansprüche**

1. Video-Decodiervorrichtung mit einer Vorhersagebild-Erzeugungsvorrichtung zum Erzeugen eines Vorhersagebildes mit Referenzbildern, wobei die Vorhersagebild-Erzeugungsvorrichtung aufweist:
eine Bewegungskompensationseinheit (3091), die so konfiguriert ist, dass sie das Vorhersagebild in einem Ziel-Teilblock einer Ziel-Vorhersageeinheit erzeugt, wobei die Bewegungskompensationseinheit umfasst:

eine Einheit (30911) zur Erzeugung erster Interpolationsbilder, die so konfiguriert ist, dass sie ein erstes Interpolationsbild erzeugt, indem Bewegungsinformationen der Ziel-Vorhersageeinheit auf ein Referenzbild der Ziel-Vorhersageeinheit angewendet werden, und
eine Einheit (30912) zur Erzeugung von Interpolationsbildern für eine überlappte Blockbewegungskompensation, OBMC, die so konfiguriert ist, dass sie ein Interpolationsbild für OBMC erzeugt, indem Bewegungsinformationen eines benachbarten Blocks des Ziel-Teilblocks auf ein Referenzbild des benachbarten Blocks angewendet werden; und
eine Vorhersageeinheit (3093), die so konfiguriert ist, dass sie das Vorhersagebild für einen ersten Modus erzeugt, indem das erste Interpolationsbild und das Interpolationsbild für OBMC verwendet werden, wobei für einen OBMC-Anwendungsbereich des Ziel-Teilblocks das Vorhersagebild ein gewichteter Durchschnitt des ersten Interpolationsbildes und des Interpolationsbildes für OBMC ist, wobei:

die Video-Decodiervorrichtung ein Decodierungsbild rekonstruiert, indem ein Restbild zum Vorhersagebild addiert wird,

**dadurch gekennzeichnet, dass**

in einem Fall, in dem der erste Modus ausgewählt wird, der OBMC-Anwendungsbereich in einem Fall, in dem das Vorhersagebild unter Verwendung von zwei Referenzbildlisten erzeugt wird, kleiner ist als in einem Fall, in dem das Vorhersagebild unter Verwendung einer Referenzbildliste erzeugt wird.

2. Video-Decodiervorrichtung nach Anspruch 1, wobei ein Bi-Vorhersage-Flag ist wahr beinhaltet, dass das Vorhersagebild unter Verwendung der zwei Referenzbildlisten erzeugt wird.

3. Video-Decodiervorrichtung nach Anspruch 1, wobei die Einheit zur Erzeugung von OBMC-Interpolationsbildern so konfiguriert ist, dass sie Folgendes durchführt:

(i) eine Höhe des OBMC-Anwendungsbereichs zu reduzieren, falls auf einen Bewegungsparameter eines benachbarten oberen oder unteren Blocks des Ziel-Teilblocks Bezug genommen wird, und
(ii) eine Breite des OBMC-Anwendungsbereichs zu reduzieren, falls auf einen Bewegungsparameter eines benachbarten linken oder rechten Blocks des Ziel-Teilblocks Bezug genommen wird.

4. Video-Decodiervorrichtung nach einem der Ansprüche 1 bis 3, wobei:

die Einheit zur Erzeugung erster Interpolationsbilder und die Einheit zur Erzeugung von OBMC-Interpolationsbildern einen Filter mit unterschiedlicher Tap-Länge verwenden und
eine Anzahl von Taps für die Einheit zur Erzeugung von OBMC-Interpolationsbildern kleiner ist als eine Anzahl von Taps für die Einheit zur Erzeugung erster Interpolationsbilder.

5. Video-Decodiervorrichtung nach Anspruch 1, wobei:

die Vorhersageeinheit eine Bildkorrektureinheit enthält, die so konfiguriert ist, dass sie das erste Interpolationsbild mittels einer linearen Summe des ersten Interpolationsbildes und der Interpolationsbilder für OBMC für jede Richtung korrigiert, und
die Bildkorrektureinheit das Vorhersagebild mittels einer Rechts-Bit-Verschiebung nach einem Addieren des Interpolationsbildes für OBMC zum ersten Interpolationsbild für jede benachbarte Richtung erzeugt.

6. Video-Decodiervorrichtung nach Anspruch 1, wobei der OBMC-Anwendungsbereich ein Grenzbereich der Ziel-Vorhersageeinheit ist.

7. Video-Codiervorrichtung mit einer Vorhersagebild-Erzeugungsvorrichtung zum Erzeugen eines Vorhersagebildes mit Referenzbildern, wobei die Vorhersagebild-Erzeugungsvorrichtung aufweist:
eine Bewegungskompensationseinheit (3091), die so konfiguriert ist, dass sie das Vorhersagebild in einem Ziel-Teilblock einer Ziel-Vorhersageeinheit erzeugt, wobei die Bewegungskompensationseinheit umfasst:

eine Einheit (30911) zur Erzeugung erster Interpolationsbilder, die so konfiguriert ist, dass sie ein erstes Interpolationsbild erzeugt, indem Bewegungsinformationen der Ziel-Vorhersageeinheit auf ein Referenzbild der Ziel-Vorhersageeinheit angewendet werden, und
eine Einheit (30912) zur Erzeugung von Interpolationsbildern für eine überlappte Blockbewegungskompensation, OBMC, die so konfiguriert ist, dass sie ein Interpolationsbild für OBMC erzeugt, indem Bewegungsinformationen eines benachbarten Blocks des Ziel-Teilblocks auf ein Referenzbild des benachbarten Blocks angewendet werden; und
eine Vorhersageeinheit (3093), die so konfiguriert ist, dass sie das Vorhersagebild für einen ersten Modus erzeugt, indem das erste Interpolationsbild und das Interpolationsbild für OBMC verwendet werden, wobei für einen OBMC-Anwendungsbereich des Ziel-Teilblocks das Vorhersagebild ein gewichteter Durchschnitt des ersten Interpolationsbildes und des Interpolationsbildes für OBMC ist, wobei:

die Video-Codiervorrichtung einen Rest des Vorhersagebildes und ein Originalbild codiert,
**dadurch gekennzeichnet, dass**
in einem Fall, in dem der erste Modus ausgewählt wird, der OBMC-Anwendungsbereich in einem Fall, in dem das Vorhersagebild unter Verwendung von zwei Referenzbildlisten erzeugt wird, kleiner ist als in einem Fall, in dem das Vorhersagebild unter Verwendung einer Referenzbildliste erzeugt wird.

8. Video-Codiervorrichtung nach Anspruch 7, wobei ein Bi-Vorhersage-Flag ist wahr beinhaltet, dass das Vorhersagebild unter Verwendung der zwei Referenzbildlisten erzeugt wird.

9. Video-Codiervorrichtung nach Anspruch 7, wobei die Einheit zur Erzeugung von OBMC-Interpolationsbildern so konfiguriert ist, dass sie Folgendes durchführt:

(i) eine Höhe des OBMC-Anwendungsbereichs zu reduzieren, falls auf einen Bewegungsparameter eines benachbarten oberen oder unteren Blocks des Ziel-Teilblocks Bezug genommen wird, und
(ii) eine Breite des OBMC-Anwendungsbereichs zu reduzieren, falls auf einen Bewegungsparameter eines benachbarten linken oder rechten Blocks des Ziel-Teilblocks Bezug genommen wird.

10. Video-Codiervorrichtung nach einem der Ansprüche 7 bis 9, wobei:

die Einheit zur Erzeugung erster Interpolationsbilder und die Einheit zur Erzeugung von OBMC-Interpolationsbildern einen Filter mit unterschiedlicher Tap-Länge verwenden und
eine Anzahl von Taps für die Einheit zur Erzeugung von OBMC-Interpolationsbildern kleiner ist als eine Anzahl von Taps für die Einheit zur Erzeugung erster Interpolationsbilder.

11. Video-Codiervorrichtung nach Anspruch 7, wobei:

die Vorhersageeinheit eine Bildkorrektureinheit enthält, die so konfiguriert ist, dass sie das erste Interpolationsbild mittels einer linearen Summe des ersten Interpolationsbildes und der Interpolationsbilder für OBMC für jede Richtung korrigiert, und
die Bildkorrektureinheit das Vorhersagebild mittels einer Rechts-Bit-Verschiebung nach einem Addieren des Interpolationsbildes für OBMC zum ersten Interpolationsbild für jede benachbarte Richtung erzeugt.

12. Video-Codiervorrichtung nach Anspruch 7, wobei der OBMC-Anwendungsbereich ein Grenzbereich der Ziel-Vorhersageeinheit ist.

## Revendications

1. Dispositif de décodage vidéo comprenant un dispositif de génération d'image de prédiction pour générer une image de prédiction avec des images de référence, le dispositif de génération d'image de prédiction comprenant :
une unité de compensation de mouvement (3091) configurée pour générer l'image de prédiction dans un sous-bloc cible d'une unité de prédiction cible, dans lequel l'unité de compensation de mouvement inclut :

une première unité de génération d'image d'interpolation (30911) configurée pour générer une première image d'interpolation en appliquant des informations de mouvement de l'unité de prédiction cible à une image de référence de l'unité de prédiction cible, et
une unité de génération d'image d'interpolation (30912) de compensation de mouvement de bloc superposée, OBMC, configurée pour générer une image d'interpolation pour OBMC en appliquant des informations de mouvement d'un bloc voisin du sous-bloc cible à une image de référence du bloc voisin ; et
une unité de prédiction (3093) configurée pour générer l'image de prédiction pour un premier mode en utilisant la première image d'interpolation et l'image d'interpolation pour OBMC, dans lequel, pour une zone d'application OBMC du sous-bloc cible, l'image de prédiction est une moyenne pondérée de la première image d'interpolation et de l'image d'interpolation pour OBMC, dans lequel :
le dispositif de décodage vidéo reconstruit une image de décodage en ajoutant une image résiduelle à l'image de prédiction, **caractérisé en ce que** dans un cas où le premier mode est sélectionné, la zone d'application OBMC est plus petite dans un cas où l'image de prédiction est générée en utilisant deux listes d'images de référence que dans un cas où l'image de prédiction est générée en utilisant une liste d'images de référence.

2. Dispositif de décodage vidéo selon la revendication 1, dans lequel un drapeau de bi-prédiction qui est vrai inclut que l'image de prédiction est générée en utilisant les deux listes d'images de référence.

3. Dispositif de décodage vidéo selon la revendication 1, dans lequel l'unité de génération d'images d'interpolation OBMC est configurée pour effectuer ce qui suit :

(i) réduire une hauteur de la zone d'application OBMC, dans un cas où un paramètre de mouvement d'un bloc voisin au-dessus ou en dessous du sous-bloc cible est référencé, et
(ii) réduire une largeur de la zone d'application OBMC, dans un cas où un paramètre de mouvement d'un bloc gauche ou droit voisin du sous-bloc cible est référencé.

4. Dispositif de décodage vidéo selon l'une quelconque des revendications 1 à 3, dans lequel :

la première unité de génération d'image d'interpolation et l'unité de génération d'image d'interpolation OBMC utilisent un filtre de longueur de prise différente, et
un nombre de prises pour l'unité de génération d'image d'interpolation OBMC est inférieur à un nombre de prises pour la première unité de génération d'image d'interpolation.

5. Dispositif de décodage vidéo selon la revendication 1, dans lequel :

l'unité de prédiction comporte une unité de correction d'image, qui est configurée pour corriger la première image d'interpolation par une somme linéaire de la première image d'interpolation et des images d'interpolation pour OBMC pour chaque direction, et
l'unité de correction d'image génère l'image de prédiction par décalage de bit à droite après avoir ajouté l'image d'interpolation pour OBMC à la première image d'interpolation pour chaque direction voisine.

6. Dispositif de décodage vidéo selon la revendication 1, dans lequel la zone d'application OBMC est une zone de limite d'unité de prédiction cible.

7. Dispositif de codage vidéo comprenant un dispositif de génération d'image de prédiction pour générer une image de prédiction avec des images de référence, le dispositif de génération d'image de prédiction comprenant :
une unité de compensation de mouvement (3091) configurée pour générer l'image de prédiction dans un sous-bloc cible d'une unité de prédiction cible, dans lequel l'unité de compensation de mouvement inclut :

une première unité de génération d'image d'interpolation (30911) configurée pour générer une première image d'interpolation en appliquant des informations de mouvement de l'unité de prédiction cible à une image de référence de l'unité de prédiction cible, et
une unité de génération d'image d'interpolation (30912) de compensation de mouvement de bloc superposée, OBMC, configurée pour générer une image d'interpolation pour OBMC en appliquant des informations de mouvement d'un bloc voisin du sous-bloc cible à une image de référence du bloc voisin ; et
une unité de prédiction (3093) configurée pour générer l'image de prédiction pour un premier mode en utilisant la première image d'interpolation et l'image d'interpolation pour OBMC, dans lequel, pour une zone d'application OBMC du sous-bloc cible, l'image de prédiction est une moyenne pondérée de la première image d'interpolation et de l'image d'interpolation pour OBMC, dans lequel :
le dispositif de codage vidéo code un résidu de l'image de prédiction et une image originale, **caractérisé en ce que** dans un cas où le premier mode est sélectionné, la zone d'application OBMC est plus petite dans un cas où l'image de prédiction est générée en utilisant deux listes d'images de référence que dans un cas où l'image de prédiction est générée en utilisant une liste d'images de référence.

8. Dispositif de codage vidéo selon la revendication 7, dans lequel un drapeau de bi-prédiction qui est vrai inclut que l'image de prédiction est générée en utilisant les deux listes d'images de référence.

9. Dispositif de codage vidéo selon la revendication 7, dans lequel l'unité de génération d'image d'interpolation OBMC est configurée pour effectuer ce qui suit :

(i) réduire une hauteur de la zone d'application OBMC, dans un cas où un paramètre de mouvement d'un bloc voisin au-dessus ou en dessous du sous-bloc cible est référencé, et
(ii) réduire une largeur de la zone d'application OBMC, dans un cas où un paramètre de mouvement d'un bloc gauche ou droit voisin du sous-bloc cible est référencé.

10. Dispositif de codage vidéo selon l'une quelconque des revendications 7 à 9, dans lequel :
la première unité de génération d'image d'interpolation et l'unité de génération d'image d'interpolation OBMC utilisent un filtre de longueur de prise différente, et
un nombre de prises pour l'unité de génération d'image d'interpolation OBMC est inférieur à un nombre de prises pour la première unité de génération d'image d'interpolation.

11. Dispositif de codage vidéo selon la revendication 7, dans lequel :

l'unité de prédiction comporte une unité de correction d'image, qui est configurée pour corriger la première image d'interpolation par une somme linéaire de la première image d'interpolation et des images d'interpolation pour OBMC pour chaque direction, et
l'unité de correction d'image génère l'image de prédiction par décalage de bit à droite après avoir ajouté l'image d'interpolation pour OBMC à la première image d'interpolation pour chaque direction voisine.

12. Dispositif de codage vidéo selon la revendication 7, dans lequel la zone d'application OBMC est une zone de limite d'unité de prédiction cible.

# FIG. 1A SEQUENCE LAYER

| VPS | SPS#0 | SPS#1 | PPS#0 | PPS#1 | SEI | PICT #0 | PICT #1 |
|-----|-------|-------|-------|-------|-----|---------|---------|

# FIG. 1B PICTURE LAYER

| SLICE 0 | SLICE 1 | ------------- | SLICE NS-1 |
|---------|---------|---------------|------------|

# FIG. 1C SLICE LAYER

| SLICE HEADER | SLICE DATA |
|--------------|------------|

# FIG. 1D SLICE DATA LAYER

| CODED TREE UNIT (CTU ) | CTU | CTU | CTU | CTU | CTU | CTU | CTU | CTU |
|---|---|---|---|---|---|---|---|---|

# FIG. 1E CODED TREE LAYER

# FIG. 1F CODED UNIT LAYER

| CUH | PU#0 | PU#1 | PU#2 | PU#3 | TU#0 | TU#1 | TU#2 | TU#3 |
|-----|------|------|------|------|------|------|------|------|

FIG. 2A  FIG. 2B  FIG. 2C  FIG. 2D

FIG. 2E  FIG. 2F  FIG. 2G  FIG. 2H

refIdxLX

↓

| P1 | P2 | P3 | P4 | P5 |
|----|----|----|----|----|

601

# FIG. 3

FIG. 4

**VIDEO DECODING DEVICE** ⌐31

CODED STREAM Te → **ENTROPY DECODING UNIT** ⌐301 → **DEQUANTIZATION AND INVERSE DCT UNIT** ⌐311

ADDITION UNIT ⌐312 → DECODED IMAGE Td

DECODE INSTRUCTION SIGNAL

SYNTAX ELEMENT VALUE

PREDICTION PICTURE BLOCK P

**PREDICTION PARAMETER DECODING UNIT** ⌐302

PREDICTION PARAMETER
PredMode
refIdxLX
mvLX
IntraPredMode, ...

**INTER-PREDICTION PARAMETER DECODING UNIT** ⌐303

**INTRA-PREDICTION PARAMETER DECODING UNIT** ⌐304

**PREDICTION IMAGE GENERATION UNIT** ⌐308

**INTER-PREDICTION IMAGE GENERATION UNIT** ⌐309

**INTRA-PREDICTION IMAGE GENERATION UNIT** ⌐310

PREDICTION PARAMETER

PredMode
refIdxLX
mvLX
IntraPredMode, ...

**PREDICTION PARAMETER MEMORY** ⌐307

**REFERENCE PICTURE MEMORY** ⌐306

# FIG. 5

FIG. 6

FIG. 7

FIG. 8

EP 3 457 696 B1

mvp_LX_idx

↓

mvpLX

602

# FIG. 9

FIG. 10

INTER-PREDICTION IMAGE GENERATION UNIT

3091

MOTION
COMPENSATION
UNIT

3094

WEIGHTED
PREDICTION
UNIT

312

ADDITION UNIT

REFERENCE PICTURE
MEMORY 306

predFlagLX
refIdxLX
mvLX, ...

INTER-PREDICTION PARAMETER DECODING UNIT 303

FIG. 11

# FIG. 12A

(xPos, yPos)   (xCur, yCur)   (xPos, yPos)

Block_B

Motion trajectory

MV1

MV0

Cur block

Block_A

Ref0   Cur Pic   Ref1

TD0   TD1

# FIG. 12B

Temp_L0

Temp_Cur

Cur block

Ref0   Cur Pic

FIG. 13

FIG. 14

FIG. 15

PredFlagLX
refIdxLX
mvLX

PredFlagLX
refIdxLXN
mvLXN

obmc_flag

MOTION COMPENSATION UNIT — 3091

INTERPOLATION IMAGE GENERATION UNIT — 3092

PU INTERPOLATION IMAGE GENERATION UNIT — 30911

OBMC INTERPOLATION IMAGE GENERATION UNIT — 30912

Pred_C[X][Y]

Pred_N[X][Y]

OBMC CORRECTION UNIT — 3093

Pred_C[X][Y]

Pred_[X][Y]

WEIGHTED PREDICTION UNIT — 3094

Pred Samples_[X][Y]

EP 3 457 696 B1

FIG. 16

70

```
PU INTERPOLATION IMAGE DERIVATION

if ( obmc_flag==1//OBMC on ) ?
//  DIRECTION LOOP
for ( dir = 0; dir < 4; dir++ ) {
    //  SUB-BLOCK LOOP
    for ( ySb = 0; ySb < nPbH; ySb+=nSbH ) {
        for ( xSb = 0; xSb < nPbW; xSb+= nSbW ) {
            if (VALID IN MOTION PARAMETER AVAILABLITY CHECK)   {

                if (VALID IN MOTION PARAMETER IDENTITY CHECK)  {

                    DERIVE OBMC INTERPOLATION IMAGE

                    OBMC WEIGHTED AVERAGE

                }
            }
        }
    }
}
```

# FIG. 17

FIG. 18

FIG. 19A

USE NORMAL TAP FILTER
(PU IMAGE INTERPOLATION, N = 8)

CU

PU

OBMC off

FIG. 19B

USE SMALL TAP FILTER
(PU IMAGE INTERPOLATION, N = 6)

CU

PU

OBMC on

USE SMALL TAP FILTER
(OBMC IMAGE INTERPOLATION, M= 6)

FIG. 20

```
if  (OBMC IS IN ON STATE)
   DERIVE PU INTERPOLATION IMAGE (NUMBER OF TAPS = 6)
else
   DERIVE PU INTERPOLATION IMAGE (NUMBER OF TAPS = 8)

//   DIRECTION LOOP
for  ( dir = 0; dir < 4; dir++ ) {
      //   SUB-BLOCK LOOP
      for  ( ySb = 0; ySb < nPbH; ySb+=nSbH ) {
            for  ( xSb = 0; xSb < nPbW; xSb+= nSbW ) {
                  if  (VALID IN MOTION PARAMETER AVAILABLITY CHECK)    {      ⎤ OBMC VALIDITY CHECK

                        if  (VALID IN MOTION PARAMETER IDENTITY CHECK)  {     ⎦


                              DERIVE OBMC INTERPOLATION IMAGE (NUMBER OF TAPS = M)   ⎤

                              OBMC WEIGHTED AVERAGE                                   ⎥ OBMC UPDATE PROCESSING

                        }                                                             ⎦
                  }
            }
      }
}
```

EP 3 457 696 B1

# FIG. 21

FIG. 22A

USE NORMAL TAP FILTER
(PU IMAGE INTERPOLATION, N = 8)

CU

PU

OBMC off

FIG. 22B

USE NORMAL TAP FILTER
(PU IMAGE INTERPOLATION, N = 8)

CU

PU

OBMC on    USE SMALL TAP FILTER
(OBMC IMAGE INTERPOLATION, M= 6)

FIG. 23

```
DERIVE PU INTERPOLATION IMAGE (NUMBER OF TAPS = N)

if (obmc_flag==1//OBMC on) ?
//    DIRECTION LOOP
for ( dir = 0; dir < 4; dir++ ) {
    //    SUB-BLOCK LOOP
    for ( ySb = 0; ySb < nPbH; ySb+=nSbH ) {
        for ( xSb = 0; xSb < nPbW; xSb+= nSbW ) {
            if (VALID IN MOTION PARAMETER AVAILABLITY CHECK)  {

                if (VALID IN MOTION PARAMETER IDENTITY CHECK)  {

                    DERIVE OBMC INTERPOLATION IMAGE (NUMBER OF TAPS = M)

                    OBMC WEIGHTED AVERAGE

                }
            }
        }
    }
}
```

OBMC VALIDITY CHECK

OBMC UPDATE PROCESSING

## FIG. 24

EP 3 457 696 B1

# FIG. 25A

OBMC IS IN OFF STATE
(nObmcW=0)

PU

CU

OBMC off

# FIG. 25B

PU

CU

OBMC on
(BiPred=0)    NUMBER OF PIXELS
IN NORMAL
PROCESSING AMOUNT

# FIG. 25C

PU

CU

OBMC on
(BiPred=1)    NUMBER OF PIXELS IN SMALL PROCESSING AMOUNT
(nObmcW=2)

FIG. 26

```
DERIVE PU INTERPOLATION IMAGE (NUMBER OF TAPS = N)

if (obmc_flag==1//OBMC on) ?
//   DIRECTION LOOP
for ( dir = 0; dir < 4; dir++ ) {
    //   SUB-BLOCK LOOP
    for ( ySb = 0; ySb < nPbH; ySb+=nSbH ) {
        for ( xSb = 0; xSb < nPbW; xSb+= nSbW ) {
            if (VALID IN MOTION PARAMETER AVAILABLITY CHECK)   {

                if (VALID IN MOTION PARAMETER IDENTITY CHECK)   {

                if (BiPred IS IN OFF STATE)
                    nObmcW = 4
                else
                    nObmcW = 2
                DERIVE OBMC INTERPOLATION IMAGE
                (PROCESSING SIZE = nObmcW)
                OBMC WEIGHTED AVERAGE
            }   (PROCESSING SIZE = nObmcW)
        }
    }
}
```

OBMC VALIDITY CHECK

OBMC UPDATE PROCESSING

# FIG. 27

START

DERIVE PU INTERPOLATION IMAGE ⌐S1

NO ⟵ obmc_flag = 1? ⌐S11

YES

IS BiPred IN OFF STATE? ⌐S41 ——— YES

NO

CONFIGURE DIRECTION OF SUB-BLOCK TO BE REFERRED TO IN OBMC PROCESSING, TO TWO DIRECTIONS ⌐S42

CONFIGURE DIRECTION OF SUB-BLOCK TO BE REFERRED TO IN OBMC PROCESSING, TO FOUR DIRECTIONS ⌐S43

DIRECTION LOOP dir {ABOVE, LEFT/BOTTOM, RIGHT} ⌐S44

DIRECTION LOOP dir {ABOVE, LEFT, BOTTOM, RIGHT} ⌐S2

SUB-BLOCK LOOP ⌐S9

IS NEIGHBORING SUB-BLOCK VALID? ⌐S3 ——— NO

YES

SAME mvLX OF NEIGHBORING SUB-BLOCK? ⌐S4 ——— YES

NO

DERIVE OBMC INTERPOLATION IMAGE OF TARGET SUB-BLOCK ⌐S5

OBMC WEIGHTED AVERAGE OF TARGET SUB-BLOCK ⌐S6

YES ⟵ SUB-BLOCK LOOP? ⌐S7

NO

DIRECTION LOOP? ⌐S8

YES (TWO DIRECTIONS)                    YES (FOUR DIRECTIONS)

NO

END

# FIG. 28

```
DERIVE PU INTERPOLATION IMAGE (NUMBER OF TAPS = N)
if (obmc_flag==1//OBMC on) ?
if (biPred)
    dirSet = {0, 2}  (ABOVE, BOTTOM)
else
    dirSet = {0, 1, 2, 3}  (ABOVE, LEFT, BOTTOM, RIGHT)
//   DIRECTION LOOP
for dir in dirSet {
    //   SUB-BLOCK LOOP
    for ( ySb = 0; ySb < nPbH; ySb+=nSbH ) {
        for ( xSb = 0; xSb < nPbW; xSb+= nSbW ) {
            if (VALID IN MOTION PARAMETER AVAILABLITY CHECK)   {

                if (VALID IN MOTION PARAMETER IDENTITY CHECK)  {

                    DERIVE OBMC INTERPOLATION IMAGE

                    OBMC WEIGHTED AVERAGE
                }
            }
        }
    }
}
```

OBMC VALIDITY CHECK

OBMC UPDATE PROCESSING

# FIG. 29

# FIG. 30A

# FIG. 30B

NUMBER OF PU
INTERPOLATION TAPS
(N=8)

NUMBER OF CU BOUNDARY
OBMC INTERPOLATION TAPS
(M=2, 4, 6)

PU

PU

OBMC off    CU

CU    OBMC on

NUMBER OF PU BOUNDARY
OBMC INTERPOLATION TAPS
(M=8)

FIG. 31

# FIG. 32A

NUMBER OF PU
INTERPOLATION TAPS
(N=8)

CU

PU

OBMC off

# FIG. 32B

NUMBER OF PU
INTERPOLATION TAPS
(N=8)

NUMBER OF CU BOUNDARY
OBMC INTERPOLATION TAPS
(M=8)

CU

PU

OBMC on
(BiPred==0)

NUMBER OF PU BOUNDARY
OBMC INTERPOLATION TAPS
(M=8)

# FIG. 32C

NUMBER OF PU
INTERPOLATION TAPS
(N=8)

NUMBER OF CU BOUNDARY
OBMC INTERPOLATION TAPS
(M=2, 4, 6)

PU

OBMC on
(BiPred==1)

CU

NUMBER OF PU BOUNDARY
OBMC INTERPOLATION TAPS
(M=8)

# FIG. 33A

OBMC IS IN OFF STATE
(nObmcW=0)

CU

PU

OBMC off

# FIG. 33B

CU BOUNDARY OBMC
IS IN OFF STATE
(nObmcW=0)

CU

PU

OBMC on

PU BOUNDARY OBMC
(nObmcW=4)

START

DERIVE PU INTERPOLATION IMAGE
(NUMBER OF TAPS = 8) — S1

obmc_flag = 1? — S11 — NO

YES

DIRECTION LOOP dir
{ABOVE, LEFT, BOTTOM, RIGHT} — S2

SUB-BLOCK LOOP — S9

IS
NEIGHBORING SUB-BLOCK
VALID? — S3 — NO

YES

SAME mvLX OF NEIGHBORING
SUB-BLOCK? — S4 — YES

NO

BOUNDARY IS CU BOUNDARY? — S62 — YES

NO

DERIVE OBMC INTERPOLATION
IMAGE OF TARGET SUB-BLOCK — S5

OBMC WEIGHTED AVERAGE
OF TARGET SUB-BLOCK — S6

YES — SUB-BLOCK LOOP? — S7

NO

YES — DIRECTION LOOP? — S8

NO

END

FIG. 34

FIG. 35A

OBMC IS IN OFF STATE
(nObmcW=0)

CU

PU

OBMC off

FIG. 35B

CU BOUNDARY
SMALL-SIZE OBMC
(nObmcW=2)

CU

PU

OBMC on

PU BOUNDARY OBMC
(nObmcW=4)

FIG. 36

FIG. 37A

OBMC IS IN OFF STATE
(nObmcW=0)

CU

PU

OBMC off

FIG. 37B

CU BOUNDARY OBMC
(nObmcW=4)

CU

PU

OBMC on
(BiPred==0)

PU BOUNDARY OBMC
(nObmcW=4)

FIG. 37C

CU BOUNDARY SMALL-SIZE OBMC
(nObmcW=2)

CU

PU

OBMC on
(BiPred==1)

PU BOUNDARY OBMC
(nObmcW=4)

EP 3 457 696 B1

FIG. 38

FIG. 39

FIG. 40

EP 3 457 696 B1

FIG. 41

FIG. 42A

CAMERA ⌐PROD_A4

RECORDING MEDIUM ⌐PROD_A5

CODING UNIT ⌐PROD_A1

MODULATION UNIT ⌐PROD_A2

TRANSMISSION UNIT ⌐PROD_A3

PROD_A

INPUT TERMINAL ⌐PROD_A6

IMAGE PROCESSING UNIT ⌐PROD_A7

FIG. 42B

DISPLAY ⌐PROD_B4

PROD_B

RECEPTION UNIT ⌐PROD_B1

DEMODULATION UNIT ⌐PROD_B2

DECODING UNIT ⌐PROD_B3

RECORDING MEDIUM ⌐PROD_B5

OUTPUT TERMINAL ⌐PROD_B6

FIG. 43A

PROD_C3

CAMERA

PROD_C4    PROD_C1    PROD_C2    PROD_M

INPUT
TERMINAL

CODING
UNIT

WRITING
UNIT

RECORDING
MEDIUM

PROD_C

PROD_C5

RECEPTION
UNIT

PROD_C6

IMAGE
PROCESSING
UNIT

FIG. 43B

PROD_D3

DISPLAY

PROD_D

PROD_M    PROD_D1    PROD_D2    PROD_D4

RECORDING
MEDIUM

READING
UNIT

DECODING
UNIT

OUTPUT
TERMINAL

PROD_D5

TRANSMISSION
UNIT

1

T → | IMAGE CODING DEVICE | → Te ⬭ Te → | IMAGE DECODING DEVICE | → Td → | IMAGE DISPLAY DEVICE |

11    21    31    41

# FIG. 44

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VIDEO/JVET**. Algorithm Description of Joint Exploration TestModel 1 (JEM 1). *INTERNATIONAL ORGANIZATION FOR STANDARDIZATION ORGANISATION INTERNATIONALE DE NORMALISATION ISO/IEC JTC1/SC29/WG11 CODING OF MOVING PICTURES AND AUDIO, ISO/IEC JTC1/SC29/WG11/N15790*, October 2015

- **ZHENG X. et al.** CE2 Summary report of core experiment on Motion Partitioning and OBMC. *7. JCT-VC MEETING; 98 MPEG MEETING*, 21 November 2011 (JCTVC-G032), HTTP://WFTP3.ITU.INT/AV_ARCH/JCTVC_SITE/